# EUROPEAN PATENT SPECIFICATION

(11) **EP 3 482 985 B1**
(45) Date of publication and mention of the grant of the patent: **06.04.2022**
(21) Application number: 18211765.5
(22) Date of filing: 24.02.2012
(51) Int. Cl.: B60K 6/365, B60K 6/48, F16H 3/72

(54) **DUAL-DRIVE ELECTRIC MACHINE HAVING CONTROLLABLE PLANETARY GEAR SET**
ELEKTRISCHE MASCHINE MIT DOPPELANTRIEB MIT STEUERBAREM PLANETENGETRIEBESATZ
MACHINE ÉLECTRIQUE DOUBLE COMMANDE DOTÉE D'UN ENSEMBLE À ENGRENAGES PLANÉTAIRE COMMANDABLE

(30) Priority: 24.02.2011 US 201113033772; 24.02.2011 US 201113033849; 24.02.2011 US 201113033855
(43) Date of publication of application: 15.05.2019
(62) Divisional of application: 12156929.7
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- CN-A- 101 451 597
- CN-A- 101 480 913
- CN-Y- 201 423 916
- DE-A1-102005 008 148
- GB-A- 2 314 128
- GB-A- 2 466 967
- JP-A- 9 175 199

## Description

### BACKGROUND OF THE INVENTION

### (a) Field of the Invention

The present invention relates to a clutch device structured by a dual-drive electric machine being combined with an planetary gear set (DG101) and a controllable brake device, and through controlling the controllable brake device to perform brake locking or releasing, the operations of transmission function of connecting transmission or releasing between a rotation shaft (S101) at an output/input end, a rotation shaft (S102) at an output/input end and a sleeve type rotation shaft (AS101) at an output/input end of the planetary gear set (DG101) are enabled to be controlled, thereby to control the interactive operations between the dual-drive electric machine (EM100) and the output/input ends.

### (b) Description of the Prior Art

Conventionally, a friction type electromagnetic clutch device is often installed between the output/input end of a rotation electric machine and a load; and through electrically charging or breaking the friction type electromagnetic clutch device to perform operations of combining or releasing, the load is enabled to engaged or released with the rotary electric machine. One primary disadvantage of the conventional arts is that residual rotary torque is often remained during the releasing, which may cause the kinetic energy loss and the ineffective operation. CN 201 423 916 Y and CN 101 480 913 disclose a counter-rotating double-rotor motor and a planetary mechanism. CN 101 451 597 A discloses a hybrid power output device including a planetary gear unit.

### SUMMARY OF THE INVENTION

The scope of the present invention is defined by the appended claims. The present invention relates to a clutch device structured by a dual-drive electric machine being combined with an planetary gear set (DG101) and a controllable brake device, and through controlling the controllable brake device to perform brake locking or releasing, the operations of transmission function of connecting transmission or releasing between a rotation shaft (S101) at an output/input end, a rotation shaft (S102) at an output/input end and a sleeve type rotation shaft (AS101) at an output/input end of the planetary gear set (DG101) are enabled to be controlled, thereby to control the interactive operations between the dual-drive electric machine (EM100) and the output/input ends.

In this way, a conventional friction clutch can be replaced by the clutch device of the present invention.

More than one brake device may be included in the clutch device. The brake device or devices may be located in a number of positions within the clutch device. The controllable brake device performs brake locking and releasing operations.

### BRIEF DESCRIPTION OF THE DRAWINGS

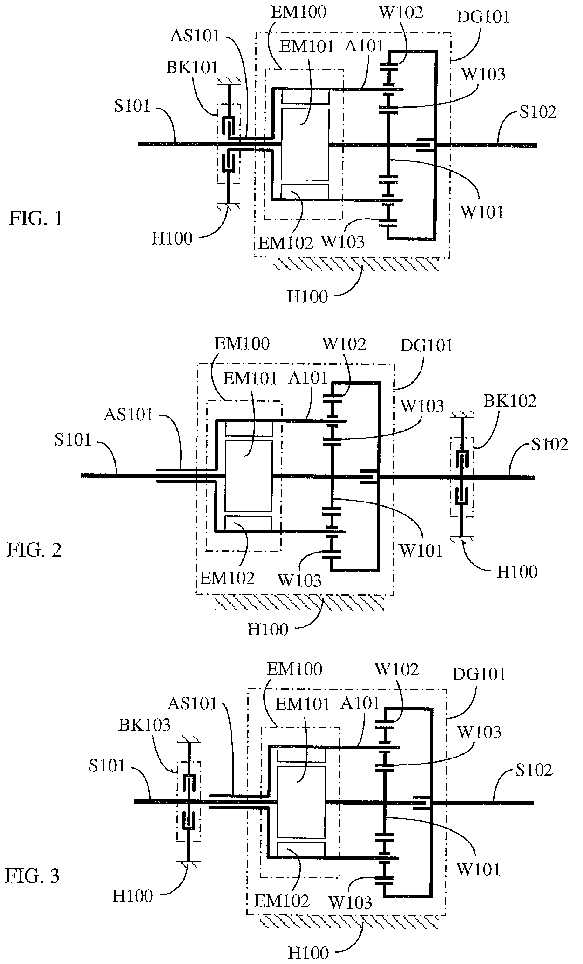

FIG. 1 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end, the rocker arm (A101) linked by the planetary wheel (W103) being combined with the outer rotation part of electric machine (EM102) and combined with the sleeve type rotation shaft (AS101), the sleeve type rotation shaft (AS101) rotated and sleeved on the rotation shaft (S101) being served as an output/input end and provided for connecting to an action side of the controllable brake device (BK101) while the other action side of the controllable brake device (BK101) being fixed in the housing (HI00), the planetary gear set (DG101) also being fixed in the housing (H100), and the outer annular wheel (W102) of the planetary gear set (DG101) being provided for driving the rotation shaft (SI02) to be served as an output/input end, according to one embodiment of the present invention.
FIG. 2 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end, the rocker arm (A101) linked by the planetary wheel (W103) being combined with the outer rotation part of electric machine (EM102) and combined with the sleeve type rotation shaft (AS101), the sleeve type rotation shaft (AS101) sleeved on the rotation shaft (S101) being served as an output/input end, the outer annular wheel (W102) of the planetary gear set (DG101) being provided for driving the rotation shaft (SI02) to be served as an output/input end, and the rotation shaft (S102) being connected to an action side of the controllable brake device (BK102) while the other action side of the controllable brake device (BK102) being fixed in the housing (H100), according to one embodiment of the present invention.
FIG. 3 is a schematic structural view showing the rotation shaft (SI01) shared by the sun wheel (W101) of the planetary gear set (DG101) and the inner rotation part of electric machine (EM101) of the dual-drive electric machine (EM100) being served as an output/input end and provided for connecting with an action side of the controllable brake device (BK103) while the other action side of the controllable brake device (BK103) being fixed in the housing (H100), the planetary gear set (DG101) also being fixed in the housing (H100), the planetary wheel (W103) of the planetary gear set (DG101) being provided for linking the rocker arm (A101) and combined with the outer rotation part of electric machine (EM102) and the sleeve type rotation shaft (AS101), the sleeve type rotation shaft (AS101) being served as an output/input end, and the outer annular wheel (W102) of the planetary gear set (DG101) being provided for driving the rotation shaft (S102) to be served as an output/input end, according to one embodiment of the present invention.

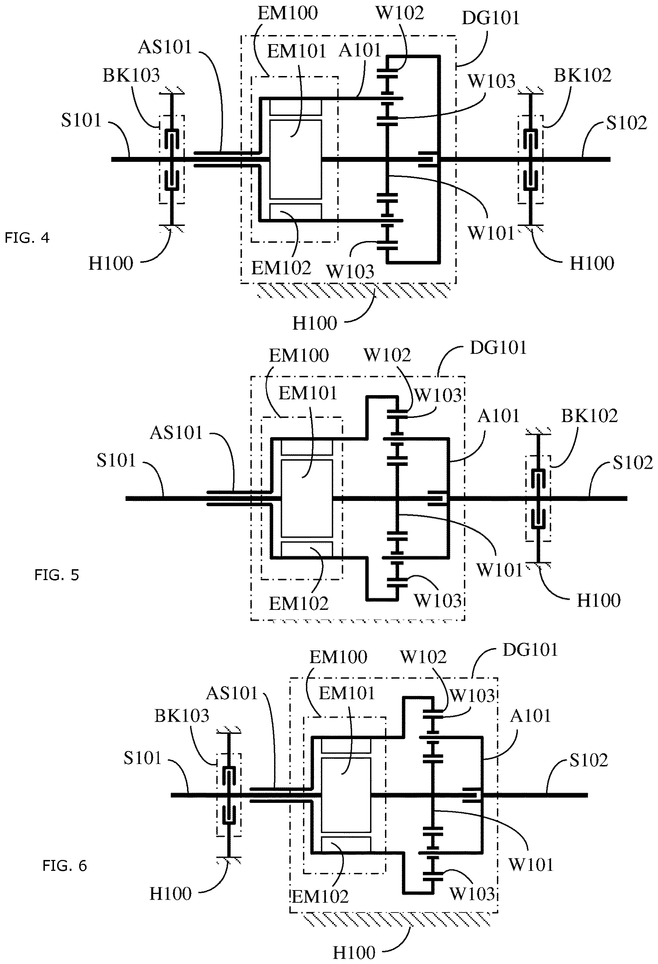

FIG. 4 is a schematic structural view showing the controllable brake device (BK103) being further installed between the rotation shaft (S101) and the housing (H100) as shown in FIG. 2.
FIG. 5 is a schematic structural view showing the rotation shaft (SI01) shared by the sun wheel (W101) of the planetary gear set (DG101) and the inner rotation part of electric machine (EM101) of the dual-drive electric machine (EM100) being served as an output/input end, the outer annular wheel (W102) being combined with the outer rotation part of electric machine (EM102) and combined with the sleeve type rotation shaft (AS101), the sleeve type rotation shaft (AS101) sleeved on the rotation shaft (S101) being served as an output/input end, the rocker arm (A101) linked by the planetary wheel (W103) of the planetary gear set (DG101) being provided for driving the rotation shaft (SI02) to be served as an output/input end, and the rotation shaft (S102) or the rocker arm (A101) being connected to an action side of the controllable brake device (BK102) while the other action side of the controllable brake device (BK102) being fixed in the housing (H100), according to one embodiment of the present invention.
FIG. 6 is a schematic structural view showing the rotation shaft (SI01) shared by the sun wheel (W101) of the planetary gear set (DG101) and the inner rotation part of electric machine (EM101) of the dual-drive electric machine (EM100) being served as an output/input end and provided for connecting to an action side of the controllable brake device (BK103) while the other action side of the controllable brake device (BK103) being fixed in the housing (H100), the planetary gear set (DG101) also being fixed in the housing (H100), the outer annular wheel (W102) of the planetary gear set (DG101) being combined with the outer rotation part of electric machine (EM102) and the sleeve type rotation shaft (AS101), the sleeve type rotation shaft (AS101) being served as an output/input end, and the planetary wheel (W103) of the planetary gear set (DG101) being provided for linking the rocker arm (A101) and driving the rotation shaft (S102) to be served as an output/input end.

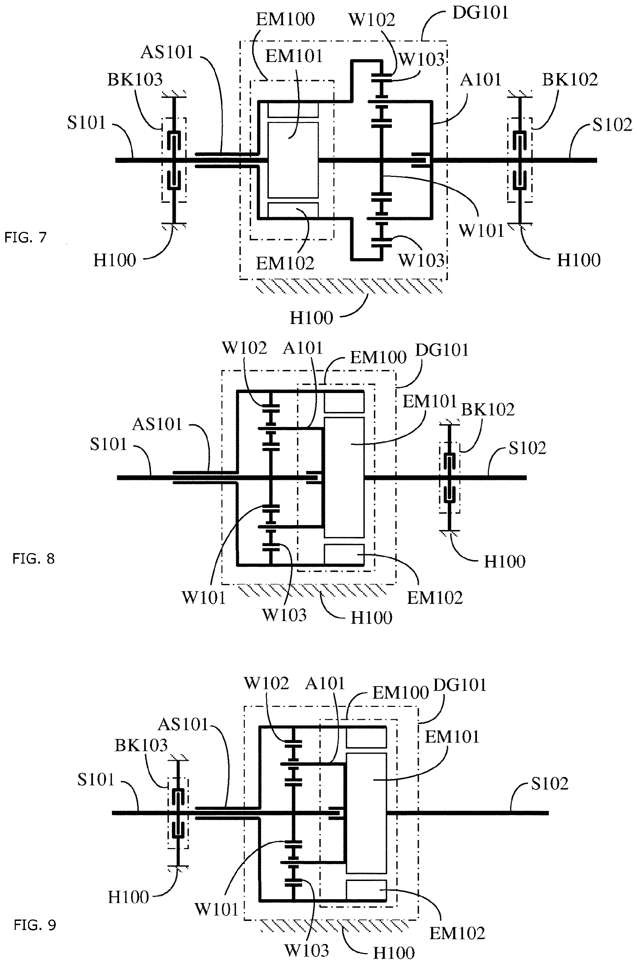

FIG. 7 is a schematic structural view showing the controllable brake device (BK103) being further installed between the rotation shaft (S101) and the housing (H100) as shown in FIG. 5.
FIG. 8 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (S102) for being served as an output/input end, the sun wheel (W101) being combined on the rotation shaft (S101) for being served as an output/input end, the outer annular wheel (W102) being combined with the outer rotation part of electric machine (EM102) and combined with the sleeve type rotation shaft (AS101), the sleeve type rotation shaft (AS101) sleeved on the rotation shaft (S101) being served as an output/input shaft, and the rotation shaft (S102) being connected to an action side of the controllable brake device (BK102) while the other action side of the controllable brake device (BK102) being fixed in the housing (H100), according to one embodiment of the present invention.
FIG. 9 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (SI02) for being served as an output/input end, the sun wheel (W101) being combined on the rotation shaft (S101) for being served as an output/input end, the rotation shaft (S101) being connected to an action side of the controllable brake device (BK103) while the other action side of the controllable brake device (BK103) being fixed in the housing (HI00), the planetary gear set (DG101) also being fixed in the housing (HI00), the outer annular wheel (W102) of the planetary gear set (DG101) being combined with the outer rotation part of electric machine (EM102) and combined with the sleeve type rotation shaft (AS101), and the sleeve type rotation shaft (AS101) being served as an output/input end, according to one embodiment of the present invention.

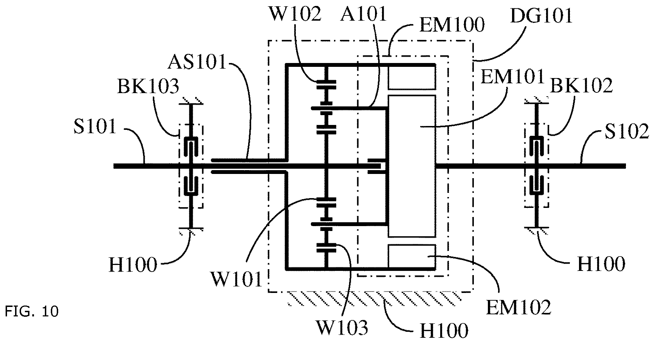

FIG. 10 is a schematic structural view showing the controllable brake device (BK103) being further installed between the rotation shaft (S101) and the housing (H100) as shown in FIG. 8.

### DESCRIPTION OF MAIN COMPONENT SYMBOLS

A101 : Rocker arm
AS101 : Sleeve type rotation shaft
BK101, BK102, BK103 : Controllable brake device
DG101 : Planetary gear set
EMI00 : Dual-drive electric machine
EM101 : Inner rotation part of electric machine
EM102 : Outer rotation part of electric machine
H100 : Housing
S101 S102 : Rotation shaft
W101 : Sun wheel
W102 : Outer annular wheel
W103 : Planetary wheel

### DETAILED DESCRIPTION OF THE PREFERRED EMBODIMENTS

Conventionally, a friction type electromagnetic clutch device is often installed between the output/input end of a rotation electric machine and a load; and through electrically charging or breaking the friction type electromagnetic clutch device to perform operations of combining or releasing, the load is enabled to engaged or released with the rotary electric machine. One primary disadvantage of the conventional arts is that residual rotary torque is often remained during the releasing, which may cause the kinetic energy loss and the ineffective operation.

The present invention provides a dual-drive electric machine having a controllable planetary gear set, in which an inner rotation part of the electric machine (EM101) of the dual-drive electric machine (EM100) being combined with a sun wheel (W101) of an planetary gear set (DG101) and combined with a rotation shaft (SI01) shared by the above two is served as an output/input end, a rotation shaft (S102) combined with an outer annular wheel (W102) is served as an output/input end, and a rocker arm (A101) linked by an planetary wheel (W103) of the planetary gear set (DG101) combined with an outer rotation part of electric machine (EM102) and combined with a sleeve type rotation shaft (AS101) is served as an output/input end, so that a part or all of the three output/input ends are respectively connected to an action side of a corresponding controllable brake device, and the other action side of the controllable brake device is connected to a housing (HI00); through controlling the controllable brake device to perform brake locking or releasing, the operations of transmission function of connecting transmission or releasing between the rotation shaft (S101) at the output/input end, the rotation shaft (SI02) at the output/input end and the sleeve type rotation shaft (AS101) at the output/input end of the planetary gear set (DG101) are enabled to be controlled, and the interactive operations between the dual-drive electric machine (EM100) and the output/input ends are also enabled to be controlled.

The structures and embodiments of the dual-drive electric machine having controllable planetary gear set of the present invention are disclosed as followings:
FIG. 1 is a schematic structural view showing the rotation shaft (SI01) shared by the sun wheel (W101) of the planetary gear set (DG101) and the inner rotation part of electric machine (EM101) of the dual-drive electric machine (EM100) being served as an output/input end, the rocker arm (A101) linked by the planetary wheel (W103) being combined with the outer rotation part of electric machine (EM102) and combined with the sleeve type rotation shaft (AS101), the sleeve type rotation shaft (AS101) rotated and sleeved on the rotation shaft (S101) being served as an output/input end and provided for connecting to an action side of the controllable brake device (BK101) while the other action side of the controllable brake device (BK101) being fixed in the housing (H100), the planetary gear set (DG101) also being fixed in the housing (H100), and the outer annular wheel (W102) of the planetary gear set (DG101) being provided for driving the rotation shaft (SI02) to be served as an output/input end, according to one embodiment of the present invention.

As show in FIG 1, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK101): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the sleeve type rotation shaft (AS101) or the rocker arm (A101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the sun wheel (W101) of the planetary gear set (DG101) and the inner rotation part of electric machine (EM101) of the dual-drive electric machine (EM100) is served as an output/input end, the rocker arm (A101) linked by the planetary wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end, and the sleeve type rotation shaft (AS101) is connected to an action side of the controllable brake device (BK101) while the other action side of the controllable brake device (BK101) is fixed in the housing (H100), and the outer annular wheel (W102) of the planetary gear set (DG101) is provided for driving the rotation shaft (S102) to be served as an output/input end, and the rotation shaft (S101) connected with the sun wheel (W101) is also served as an output/input end;

According to the embodiment shown in FIG. 1, the operations include one or more than one of following functions:
--When the controllable brake device (BK101) is controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK101) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK101) is controlled to be in the brake locking state, and the dual-drive electric machine (EM100) is not operated as the electric machinery function, the transmission relation between the rotation shaft (S101) and the rotation shaft (S102) is in a connecting relation allowing for transmission;
--When the controllable brake device (BK101) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the rotation shaft (S102);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 2 is a schematic structural view showing the rotation shaft (S101) shared by the sun wheel (W101) of the planetary gear set (DG101) and the inner rotation part of electric machine (EM101) of the dual-drive electric machine (EM100) being served as an output/input end, the rocker arm (A101) linked by the planetary wheel (W103) being combined with the outer rotation part of electric machine (EM102) and combined with the sleeve type rotation shaft (AS101), the sleeve type rotation shaft (AS101) sleeved on the rotation shaft (S101) being served as an output/input end, the outer annular wheel (W102) of the planetary gear set (DG101) being provided for driving the rotation shaft (SI02) to be served as an output/input end, and the rotation shaft (S102) being connected to an action side of the controllable brake device (BK102) while the other action side of the controllable brake device (BK102) being fixed in the housing (H100), according to one embodiment of the present invention.

As show in FIG 2, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the sun wheel (W101) of the planetary gear set (DG101) and the inner rotation part of electric machine (EM101) of the dual-drive electric machine (EM100) is served as an output/input end, the rocker arm (A101) linked by the planetary wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end;
--The outer annular wheel (W102) of the planetary gear set (DG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100);

According to the embodiment shown in FIG. 2, the operations include one or more than one of following functions:
--When the controllable brake device (BK102) is controlled to be in the releasing state, and the dual-drive electric machine (EM100) is not operated as the electric machinery function, the transmission relations between the rotation shaft (S101) and the sleeve type rotation shaft (AS101) and the rotation shaft (SI02) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the sleeve type rotation shaft (AS101);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 3 is a schematic structural view showing the rotation shaft (SI01) shared by the sun wheel (W101) of the planetary gear set (DG101) and the inner rotation part of electric machine (EM101) of the dual-drive electric machine (EM100) being served as an output/input end and provided for connecting with an action side of the controllable brake device (BK103) while the other action side of the controllable brake device (BK103) being fixed in the housing (H100), the planetary gear set (DG101) also being fixed in the housing (H100), the planetary wheel (W103) of the planetary gear set (DG101) being provided for linking the rocker arm (A101) and combined with the outer rotation part of electric machine (EM102) and the sleeve type rotation shaft (AS101), the sleeve type rotation shaft (AS101) being served as an output/input end, and the outer annular wheel (W102) of the planetary gear set (DG101) being provided for driving the rotation shaft (S102) to be served as an output/input end, according to one embodiment of the present invention.

As show in FIG 3, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the outer rotation part of electric machine (EM102) and combined with the sleeve type rotation shaft (AS101), and the sleeve type rotation shaft (AS101) is sleeved on one or both of the rotation shaft (S101) and the rotation shaft (S102) and capable of rotating thereon;
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
--The rotation shaft (S101) shared by the sun wheel (W101) of the planetary gear set (DG101) and the inner rotation part of electric machine (EM101) of the dual-drive electric machine (EM100) is served as an output/input end for connecting to an action side of the controllable brake device (BK103) while the other action side of the controllable brake device (BK103) is fixed in the housing (H100);
--The planetary wheel (W103) of the planetary gear set (DG101) is provided for linking the rocker arm (A101) and combined with the outer rotation part of electric machine (EM102) and combined with the sleeve type rotation shaft (AS101), the sleeve type rotation shaft (AS101) rotated and sleeved on the rotation shaft (S101) is served as an output/input end, the outer annular wheel (W102) of the planetary gear set (DG101) is provided for driving the rotation shaft (SI02) to be served as an output/input end, and the rotation shaft (SI01) connected to the sun wheel (W101) is also served as an output/input end;

According to the embodiment shown in FIG. 3, the operations include one or more than one of following functions:
--When the controllable brake device (BK103) is controlled to be in the releasing state, and the dual-drive electric machine (EM100) is not operated as the electric machinery function, the transmission relation between the rotation shaft (S101) and the sleeve type rotation shaft (AS101) and the rotation shaft (SI02) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the rotation shaft (S102);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 4 is a schematic structural view showing the controllable brake device (BK103) being further installed between the rotation shaft (S101) and the housing (H100) as shown in FIG. 2.

As shown in FIG. 4, the rotation shaft (SI01) shared by the sun wheel (W101) of the planetary gear set (DG101) and the inner rotation part of electric machine (EM101) of the dual-drive electric machine (EM100) is served as an output/input end and provided for connecting to an action side of the controllable brake device (BK103) while the other action side of the controllable brake device (BK103) is fixed in the housing (H100), the planetary gear set (DG101) is also fixed in the housing (H100), the planetary wheel (W103) of the planetary gear set (DG101) is provided for linking the rocker arm (A101) and combined with the outer rotation part of electric machine (EM102) and combined with the sleeve type rotation shaft (AS101), and the sleeve type rotation shaft (AS101) rotated and sleeved on the rotation shaft (S101) is served as an output/input end, the outer annular wheel (W102) of the planetary gear set (DG101) is provided for driving the rotation shaft (S102) to be served as an output/input end, and the rotation shaft (S102) is connected to an action side of the controllable brake device (BK102) while the other action side of the controllable brake device (BK102) is fixed in the housing (H100), which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the sleeve type rotation shaft (AS101), and the sleeve type rotation shaft (AS101) is sleeved on one or both of the rotation shaft (SI01) and the rotation shaft (SI02) and capable of rotating thereon;
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected the rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the rocker arm (A101);
-- The rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100);the outer annular wheel (W102) of the planetary gear set (DG101) is combined with the rotation shaft (S102) for being served as an output/input end, and is provided for connecting to an action side of the controllable brake device (BK102) while the other action side of the controllable brake device (BK102) is fixed in the housing (H100), the rocker arm (A101) linked by the planetary wheel (W103) is combined with the outer rotation part of electric machine (EM102) and combined with the sleeve type rotation shaft (AS101), and the sleeve type rotation shaft (AS101) rotated and sleeved on the rotation shaft (S101) is served as an output/input end;

According to the embodiment shown in FIG. 4, the operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the rotation shaft (SI01) and the rotation shaft (SI02) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EMI00) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the rotation shaft (S102);
--When the controllable brake device (BK103) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (SI01), the rotation shaft (SI02) and the sleeve type rotation shaft (AS101) are all in the brake locking state;

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 5 is a schematic structural view showing the rotation shaft (SI01) shared by the sun wheel (W101) of the planetary gear set (DG101) and the inner rotation part of electric machine (EM101) of the dual-drive electric machine (EM100) being served as an output/input end, the outer annular wheel (W102) being combined with the outer rotation part of electric machine (EM102) and combined with the sleeve type rotation shaft (AS101), the sleeve type rotation shaft (AS101) sleeved on the rotation shaft (S101) being served as an output/input end, the rocker arm (A101) linked by the planetary wheel (W103) of the planetary gear set (DG101) being provided for driving the rotation shaft (S102) to be served as an output/input end, and the rotation shaft (S102) or the rocker arm (A101) being connected to an action side of the controllable brake device (BK102) while the other action side of the controllable brake device (BK102) being fixed in the housing (H100), according to one embodiment of the present invention.

As show in FIG 5, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the rotation shaft (S102);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (SI02) or rocker arm (A101), and the other action side is fixed in the housing (HI00);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102);
--The rotation shaft (S101) shared by the sun wheel (W101) of the planetary gear set (DG101) and the inner rotation part of electric machine (EM101) of the dual-drive electric machine (EM100) is served as an output/input end, the outer annular wheel (W102) is combined with the outer rotation part of electric machine (EM102) and combined with the sleeve type rotation shaft (AS101), and the sleeve type rotation shaft (AS101) rotated and sleeved on the rotation shaft (S101) is served as an output/input end;
--The rocker arm (A101) linked by the planetary wheel (W103) of the planetary gear set (DG101) is provided for driving the rotation shaft (SI02) to be served as an output/input end, and the rotation shaft (S102) or the rocker arm (A101) is connected to an action side of the controllable brake device (BK102) while the other action side of the controllable brake device (BK102) is fixed in the housing (HI00).

According to the embodiment shown in FIG. 5, the operations include one or more than one of following functions:
--When the controllable brake device (BK102) is controlled to be in the releasing state, and the dual-drive electric machine (EM100) is not operated as the electric machinery function, the transmission relations between the rotation shaft (S101) and the sleeve type rotation shaft (AS101) and the rotation shaft (S102) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the sleeve type rotation shaft (AS101);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 6 is a schematic structural view showing the rotation shaft (SI01) shared by the sun wheel (W101) of the planetary gear set (DG101) and the inner rotation part of electric machine (EM101) of the dual-drive electric machine (EM100) being served as an output/input end and provided for connecting to an action side of the controllable brake device (BK103) while the other action side of the controllable brake device (BK103) being fixed in the housing (H100), the planetary gear set (DG101) also being fixed in the housing (H100), the outer annular wheel (W102) of the planetary gear set (DG101) being combined with the outer rotation part of electric machine (EM102) and the sleeve type rotation shaft (AS101), the sleeve type rotation shaft (AS101) being served as an output/input end, and the planetary wheel (W103) of the planetary gear set (DG101) being provided for linking the rocker arm (A101) and driving the rotation shaft (S102) to be served as an output/input end, according to one embodiment of the present invention.

As show in FIG 6, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
-- Rocker arm (A101): having one end provided for allowing the planetary wheel (W103) to rotate and link, and the other end being connected to the rotation shaft (S102);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102);
--The rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100);
--The outer annular wheel (W102) of the planetary gear set (DG101) combined with the outer rotation part of electric machine (EM102) and combined with the sleeve type rotation shaft (AS101), the sleeve type rotation shaft (AS101) rotated and sleeved on the rotation shaft (S101) is served as an output/input end, the planetary wheel (W103) of the planetary gear set (DG101) is provided for linking the rocker arm (A101) and driving the rotation shaft (S102) to be served as an output/input end, and the rotation shaft (S101) combined with the sun wheel (W101) is also served as an output/input end.

According to the embodiment shown in FIG. 6, the operations include one or more than one of following functions:
--When the controllable brake device (BK103) is controlled to be in the releasing state, and the dual-drive electric machine (EM100) is not operated as the electric machinery function, the transmission relation between the rotation shaft (S101) and the sleeve type rotation shaft (AS101) and the rotation shaft (S102) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the rotation shaft (S102);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 7 is a schematic structural view showing the controllable brake device (BK103) being further installed between the rotation shaft (S101) and the housing (H100) as shown in FIG. 5.

As shown in FIG. 7, the rotation shaft (SI01) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100), the planetary gear set (DG101) is also fixed in the housing (H100), the outer annular wheel (W102) of the planetary gear set (DG101) combined with the outer rotation part of electric machine (EM102) and combined with the sleeve type rotation shaft (AS101), the sleeve type rotation shaft (AS101) rotated and sleeved on the rotation shaft (S101) is served as an output/input end, the planetary wheel (W103) of the planetary gear set (DG101) is provided for linking the rocker arm (A101) and driving the rotation shaft (S102) to be served as an output/input end, and the rotation shaft (S102) or the rocker arm (A101) is connected to an action side of the controllable brake device (BK102) while the other action side of the controllable brake device (BK102) is fixed in the housing (H100), wherein:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the rotation shaft (S102);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102) or the rocker arm (A101), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102); -- The rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100); the rocker arm (A101) linked by the planetary wheel (W103) of the planetary gear set (DG101) is combined with the rotation shaft (S102) for being served as an output/input end, the rotation shaft (S102) or the rocker arm (A101) is connected to an action side of the controllable brake device (BK102) while the other action side of the controllable brake device (BK102) is fixed in the housing (H100), the outer annular wheel (W102) is combined with the outer rotation part of electric machine (EM102) and combined with the sleeve type rotation shaft (AS101), and the sleeve type rotation shaft (AS101) rotated and sleeved on the rotation shaft (S101) is served as an output/input end.

According to the embodiment shown in FIG. 7, the operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the rotation shaft (S101) and the rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EMI00) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the rotation shaft (S102);
--When the controllable brake device (BK103) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (SI02) and the sleeve type rotation shaft (AS101) are all in the brake locking state;

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 8 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (S102) for being served as an output/input end, the sun wheel (W101) being combined on the rotation shaft (S101) for being served as an output/input end, the outer annular wheel (W102) being combined with the outer rotation part of electric machine (EM102) and combined with the sleeve type rotation shaft (AS101), the sleeve type rotation shaft (AS101) sleeved on the rotation shaft (S101) being served as an output/input shaft, and the rotation shaft (S102) being connected to an action side of the controllable brake device (BK102) while the other action side of the controllable brake device (BK102) being fixed in the housing (H100), according to an embodiment of the present invention.

As show in FIG 8, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the inner rotation part of electric machine (EM101) and the rotation shaft (S102);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102));
-- The inner rotation part of electric machine (EM101) of the dual-drive electric machine (EM100) and the planetary wheel (W103) of the planetary gear set (DG101) and the rocker arm (A101) are jointly combined on the rotation shaft (S102) for being served as an output/input end, the sun wheel (W101) combined on the rotation shaft (S101) is served as an output/input end, the outer annular wheel (W102) is combined with the outer rotation part of electric machine (EM102) and combined with the sleeve type rotation shaft (AS101), and the sleeve type rotation shaft (AS101) rotated and sleeved on the rotation shaft (S101) is served as an output/input end;
-- The planetary wheel (W103) of the planetary gear set (DG101), the rocker arm (A101) and the inner rotation part of electric machine (EM101) are jointly combined on the rotation shaft (S102) to be served as an output/input end, and the rotation shaft (S102) is connected to an action side of the controllable brake device (BK102) while the other action side of the controllable brake device (BK102) is fixed in the housing (H100);

According to the embodiment shown in FIG. 8, the operations include one or more than one of following functions:
--When the controllable brake device (BK102) is controlled to be in the releasing state, and the dual-drive electric machine (EM100) is not operated as the electric machinery function, the transmission relations between the rotation shaft (S101) and the sleeve type rotation shaft (AS101) and the rotation shaft (S102) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the rotation shaft (S101) and the sleeve type rotation shaft (AS101);

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;

The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 9 is a schematic structural view showing the inner rotation part of electric machine (EM101) of the dual-drive electric machine (EM100) and the planetary wheel (W103) of the planetary gear set (DG101) and the rocker arm (A101) being jointly combined on the rotation shaft (S102) for being served as an output/input end, the sun wheel (W101) being combined on the rotation shaft (S101) for being served as an output/input end, the rotation shaft (S101) being connected to an action side of the controllable brake device (BK103) while the other action side of the controllable brake device (BK103) being fixed in the housing (H100), the planetary gear set (DG101) also being fixed in the housing (H100), the outer annular wheel (W102) of the planetary gear set (DG101) being combined with the outer rotation part of electric machine (EM102) and combined with the sleeve type rotation shaft (AS101), and the sleeve type rotation shaft (AS101) being served as an output/input end, according to one embodiment of the present invention.

As show in FIG 9, it mainly consists of:
-- Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (S101), the rotation shaft (S102), the rocker arm (A101), the sleeve type rotation shaft (AS101) and a bearing, as well as installed with a shell for being combined in the housing (H100);
-- Rocker arm (A101): having one end provided for allowing the planetary wheel (W103) to rotate and link, and the other end being connected to the inner rotation part of electric machine (EM101) and the rotation shaft (S102);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S101), and the outer rotation part of electric machine (EM102) is combined with the outer annular wheel (W102);
--The sun wheel (W101) of the planetary gear set (DG101) is combined on the rotation shaft (S101), and the rotation shaft (S101) is connected to an action side of the controllable brake device (BK103) while the other action side of the controllable brake device (BK103) is fixed in the housing (H100);
--The outer annular wheel (W102) of the planetary gear set (DG101) is combined with the outer rotation part of electric machine (EM102) and combined with the sleeve type rotation shaft (AS101), the sleeve type rotation shaft (AS101) rotated and sleeved on the rotation shaft (S101) is served as an output/input end, and the rotation shaft (S101) combined with the sun wheel (W101) is also served as an output/input end;

According to the embodiment shown in FIG. 9, the operations include one or more than one of following functions:
--When the controllable brake device (BK103) is controlled to be in the releasing state, and the dual-drive electric machine (EM100) is not operated as the electric machinery function, the transmission relation between the rotation shaft (S101) and the sleeve type rotation shaft (AS101) and the rotation shaft (S102) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the rotation shaft (S102);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

FIG. 10 is a schematic structural view showing the controllable brake device (BK103) being further installed between the rotation shaft (S101) and the housing (H100) as shown in FIG. 8.

As shown in FIG. 10, the inner rotation part of electric machine (EM101) of the dual-drive electric machine (EM100) and the planetary wheel (W103) of the planetary gear set (DG101) and the rocker arm (A101) are jointly combined on the rotation shaft (S102) for being served as an output/input end, the sun wheel (W101) is combined on the rotation shaft (S101) for being served as an output/input end, the rotation shaft (S101) is connected to an action side of the controllable brake device (BK103) while the other action side of the controllable brake device (BK103) is fixed in the housing (H100), the planetary gear set (DG101) is also fixed in the housing (H100), the outer annular wheel (W102) of the planetary gear set (DG101) is combined with the outer rotation part of electric machine (EM102) and combined with the sleeve type rotation shaft (AS101), the sleeve type rotation shaft (AS101) rotated and sleeved on the rotation shaft (S101) is served as an output/input end, and the rotation shaft (S102) is connected to an action side of the controllable brake device (BK102) while the other action side of the controllable brake device (BK102) is fixed in the housing (H100), which mainly consists of:
--Planetary gear set (DG101): which is constituted by an sun wheel (W101) and an outer annular wheel (W102) and at least an planetary wheel (W103), and including through gears engaging with each other, or through friction wheels mutually performing friction transmissions to form an planetary gear set function, and structured by the rotation shaft (SI01), the rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the inner rotation part of electric machine (EM101) and the rotation shaft (S102);
--Controllable brake device (BK102): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S102), and the other action side is fixed in the housing (H100);
--Controllable brake device (BK103): which is constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the rotation shaft (S101), and the other action side is fixed in the housing (H100);
--Dual-drive electric machine (EM100): which is constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the rotation shaft (S102), and the outer rotation part of electric machine (EM102) is combined with the outer annular wheel (W102); -- The inner rotation part of electric machine (EM101) of the dual-drive electric machine (EM100) and the planetary wheel (W103) of the planetary gear set (DG101) and the rocker arm (A101) are jointly combined on the rotation shaft (S102) for being served as an output/input end, the sun wheel (W101) is combined on the rotation shaft (S101) for being served as an output/input end, the rotation shaft (S101) is connected to an action side of the controllable brake device (BK103) while the other action side of the controllable brake device (BK103) is fixed in the housing (H100);the rocker arm (A101) linked by the planetary wheel (W103) of the planetary gear set (DG101) is combined with the rotation shaft (S102) for being served as an output/input end, the rotation shaft (S102) is connected to an action side of the controllable brake device (BK102) while the other action side of the controllable brake device (BK102) is fixed in the housing (HI00), the outer annular wheel (W102) is combined with the outer rotation part of electric machine (EM102) and combined with the sleeve type rotation shaft (AS101), and the sleeve type rotation shaft (AS101) rotated and sleeved on the rotation shaft (SI01) is served as an output/input end;

According to the embodiment shown in FIG. 10, the operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the rotation shaft (SI01) and the rotation shaft (SI02) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EMI00) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the rotation shaft (S101), the rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the rotation shaft (S102);
--When the controllable brake device (BK103) is controlled to be in the releasing state and the controllable brake device (BK102) is controlled to be in the brake locking state, and the dual-drive electric machine (EM100) is not operated as the electric machinery function, the transmission relation between the rotation shaft (S101) and the sleeve type rotation shaft (AS101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the rotation shaft (S101) and the sleeve type rotation shaft (AS101);
--When the controllable brake device (BK101) and the controllable brake device (BK102) are both controlled to be in the brake locking state, the relations between the rotation shaft (S101), the rotation shaft (S102) and the sleeve type rotation shaft (AS101) are all in the brake locking state;

The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

The dual-drive electric machine having controllable planetary gear set of the present invention can be applied to various load devices which require mechanical output for driving, such as a ground vehicle, rail vehicle, agriculture machineries or agriculture vehicles, excavator, dozer, construction vehicle, transportation vehicle, garbage truck, hoisting machinery, lifting machinery, forklift machinery, water or underwater boat, aircraft, industrial machineries, tool machine, power device, hand-operated tool, robot or mechanical arm, gardening power tool, domestic electric equipment;

According to the dual-drive electric machine having controllable planetary gear set of the present invention, the sources of externally inputted rotary kinetic energy include an inner combustion engine, an outer combustion engine, a Sterling engine, a steam engine, electric engine, hydraulic engine, pneumatic engine, wind-driven blade device, flow-driven blade device, vapor-driven blade device, human or animal forces.

## Claims

1. A dual-drive electric machine having controllable planetary gear set, in which an inner rotation part of an electric machine (EM101) and an outer rotation part of an electric machine (EM102) of the dual-drive electric machine (EM100) are respectively combined with two of the three output/input ends of a planetary gear set (DG101) comprising a sun wheel (W101), an outer annular wheel (W102) and a planetary wheel (W103), a sleeve type rotation shaft (AS101) sleeved on an input/output rotation shaft (S101) being served as an output/input end is provided, an output/input rotation shaft (S102) is also provided, wherein one of the input/output rotation shaft (S101) or the output/input shaft (S102) is connected to an action side of a corresponding controllable brake device, and the other action side of the controllable brake device is connected to a housing (H100); through controlling the controllable brake device to perform brake locking or releasing, the operations of transmission function of connecting transmission or releasing between the input/output rotation shaft (S101), the output/input rotation shaft (S102) and the sleeve type rotation shaft (AS101) are enabled to be controlled, and interactive operations between the dual-drive electric machine (EM100) and the output/input ends are also enabled to be controlled,
wherein the input/output rotation shaft (S101) shared by the sun wheel (W101) of the planetary gear set (DG101) and the inner rotation part of electric machine (EM101) of the dual-drive electric machine (EM100) is served as an output/input end, a rocker arm (A101) linked by the planetary wheel (W103) is combined with the outer rotation part of electric machine (EM102) and combined with the sleeve type rotation shaft (AS101), the sleeve type rotation shaft (AS101) sleeved on the rotation shaft (S101) is served as an output/input end, the outer annular wheel (W102) of the planetary gear set (DG101) is provided for driving the output/input rotation shaft (S102), and the output/input rotation shaft (S102) is connected to an action side of the controllable brake device (BK102) while the other action side of the controllable brake device (BK102) is fixed in the housing (H100),wherein:
-- Planetary gear set (DG101): constituted by a sun wheel (W101) and an outer annular wheel (W102) and at least a planetary wheel (W103), and including through gears engaging with each other, or through friction wheels mutually performing friction transmissions to form a planetary gear set function, and structured by the rotation shaft (S101), the rotation shaft (S102), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the rotation shaft (S101) for being combined with the outer rotation part of electric machine (EM102) and combined with the sleeve type rotation shaft (AS101);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the output/input rotation shaft (S102), and the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the input/output rotation shaft (S101), and the outer rotation part of electric machine (EM102) is combined with the rocker arm (A101);
--The input/output rotation shaft (S101) shared by the sun wheel (W101) of the planetary gear set (DG101) and the inner rotation part of electric machine (EM101) of the dual-drive electric machine (EM100) is served as an output/input end, the rocker arm (A101) linked by the planetary wheel (W103) is combined with the outer rotation part of electric machine (EM102) and combined with the sleeve type rotation shaft (AS101), and the sleeve type rotation shaft (AS101) rotated and sleeved on the input/output rotation shaft (S101) is served as an output/input end;
--The outer annular wheel (W102) of the planetary gear set (DG101) is provided for driving the output/input rotation shaft (S102), and the output/input rotation shaft (S102) is connected to an action side of the controllable brake device (BK102) while the other action side of the controllable brake device (BK102) is fixed in the housing (H100);
The operations include one or more than one of following functions:
--When the controllable brake device (BK102) is controlled to be in the releasing state, and the dual-drive electric machine (EM100) is not operated as the electric machinery function, the transmission relations between the input/output rotation shaft (S101) the sleeve type rotation shaft (AS101) and the output/input rotation shaft (SI02) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the input/output rotation shaft (S101), the output/input rotation shaft (S102) and the sleeve type rotation shaft (AS101);
--When the controllable brake device (BK102) is controlled to be in the brake locking state, and the dual-drive electric machine (EM100) is not operated as the electric machinery function, the transmission relation between the input/output rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the input/output rotation shaft (S101) and the sleeve type rotation shaft (AS101);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

2. A dual-drive electric machine having controllable planetary gear set, in which an inner rotation part of an electric machine (EM101) and an outer rotation part of an electric machine (EM102) of the dual-drive electric machine (EM100) are respectively combined with two of the three output/input ends of planetary gear set (DG101) comprising a sun wheel (W101), an outer annular wheel (W102) and a planetary wheel (W103), a sleeve type rotation shaft (AS101) sleeved on an input/output rotation shaft (S101) being served as an output/input end is provided, an output/input rotation shaft (S102) is also provided, wherein one of the input/output rotation shaft (S101) or the output/input shaft (S102) is connected to an action side of a corresponding controllable brake device, and the other action side of the controllable brake device is connected to a housing (H100); through controlling the controllable brake device to perform brake locking or releasing, the operations of transmission function of connecting transmission or releasing between the input/output rotation shaft (S101), the output/input rotation shaft (S102) and the sleeve type rotation shaft (AS101) are enabled to be controlled, and interactive operations between the dual-drive electric machine (EM100) and the output/input ends are also enabled to be controlled,
wherein the input/output rotation shaft (S101) shared by the sun wheel (W101) of the planetary gear set (DG101) and the inner rotation part of electric machine (EM101) of the dual-drive electric machine (EM100) is served as an output/input end and provided for connecting with an action side of the controllable brake device (BK103) while the other action side of the controllable brake device (BK103) is fixed in the housing (H100), the planetary gear set (DG101) also is fixed in the housing (H100), the planetary wheel (W103) of the planetary gear set (DG101) is provided for linking a rocker arm (A101) and combined with the outer rotation part of electric machine (EM102) and the sleeve type rotation shaft (AS101), the sleeve type rotation shaft (AS101) is served as an output/input end, and the outer annular wheel (W102) of the planetary gear set (DG101) is provided for driving the output/input rotation shaft (S102), wherein:
-- Planetary gear set (DG101): constituted by a sun wheel (W101) and an outer annular wheel (W102) and at least a planetary wheel (W103), and including through gears engaging with each other, or through friction wheels mutually performing friction transmissions to form a planetary gear set function, and structured by the input/output rotation shaft (S101), the output/input rotation shaft (S102), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the input/output rotation shaft (S101) for being combined with the outer rotation part of electric machine (EM102) and combined with the sleeve type rotation shaft (AS101);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the input/output rotation shaft (S 101), and the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the input/output rotation shaft (S101), and the outer rotation part of electric machine (EM102) is combined with the rocker arm (A101);
--The input/output rotation shaft (S101) shared by the sun wheel (W101) of the planetary gear set (DG101) and the inner rotation part of electric machine (EM101) of the dual-drive electric machine (EM100) is served as an output/input end for connecting to an action side of the controllable brake device (BK103) while the other action side of the controllable brake device (BK103) is fixed in the housing (H100);
--The planetary wheel (W103) of the planetary gear set (DG101) is provided for linking a rocker arm (A101) and combined with the outer rotation part of electric machine (EM102) and combined with the sleeve type rotation shaft (AS 101), the sleeve type rotation shaft (AS101) rotated and sleeved on the input/output rotation shaft (S101) is served as an output/input end, the outer annular wheel (W102) of the planetary gear set (DG101) is provided for driving the output/input rotation shaft (S102), and the input/output rotation shaft (S101) connected to the sun wheel (W101) is also served as an output/input end;
The operations include one or more than one of following functions:
--When the controllable brake device (BK103) is controlled to be in the releasing state, and the dual-drive electric machine (EM100) is not operated as the electric machinery function, the transmission relation between the input/output rotation shaft (S101) and the sleeve type rotation shaft (AS101) and the output/input rotation shaft (S102) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the input/output rotation shaft (S101), the output/input rotation shaft (S102) and the sleeve type rotation shaft (AS101);
--When the controllable brake device (BK103) is controlled to be in the brake locking state, and the dual-drive electric machine (EM100) is not operated as the electric machinery function, the transmission relation between the sleeve type rotation shaft (AS101) and the output/input rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the output/input rotation shaft (S102);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

3. A dual-drive electric machine having controllable planetary gear set, in which an inner rotation part of an electric machine (EM101) and an outer rotation part of an electric machine (EM102) of the dual-drive electric machine (EM100) are respectively combined with two of the three output/input ends of a planetary gear set (DG101) comprising a sun wheel (W101), an outer annular wheel (W102) and a planetary wheel (W103), a sleeve type rotation shaft (AS101) sleeved on an input/output rotation shaft (S101) being served as an output/input end is provided, an output/input rotation shaft (S102) is also provided, wherein one of the input/output rotation shaft (S101) or the output/input shaft (S102) are connected to an action side of a corresponding controllable brake device, and the other action side of the controllable brake device is connected to a housing (H100); through controlling the controllable brake device to perform brake locking or releasing, the operations of transmission function of connecting transmission or releasing between the input/output rotation shaft (S101), the output/input rotation shaft (S102) and the sleeve type rotation shaft (AS101) are enabled to be controlled, and interactive operations between the dual-drive electric machine (EM100) and the output/input ends are also enabled to be controlled,
wherein the input/output rotation shaft (S101) shared by the sun wheel (W101) of the planetary gear set (DG101) and the inner rotation part of electric machine (EM101) of the dual-drive electric machine (EM100) is served as an output/input end and provided for connecting to an action side of the controllable brake device (BK103) while the other action side of the controllable brake device (BK103) is fixed in the housing (H100), the planetary gear set (DG101) is also fixed in the housing (H100), the planetary wheel (W103) of the planetary gear set (DG101) is provided for linking a rocker arm (A101) and combined with the outer rotation part of electric machine (EM102) and combined with the sleeve type rotation shaft (AS101), the sleeve type rotation shaft (AS101) rotated and sleeved on the input/output rotation shaft (S101) is served as an output/input end, the outer annular wheel (W102) of the planetary gear set (DG101) is provided for driving the output/input rotation shaft (S102), and the output/input rotation shaft (S102) is connected to an action side of the controllable brake device (BK102) while the other action side of the controllable brake device (BK102) is fixed in the housing (H100), wherein:
--Planetary gear set (DG101): constituted by a sun wheel (W101) and an outer annular wheel (W102) and at least a planetary wheel (W103), and including through gears engaging with each other, or through friction wheels mutually performing friction transmissions to form a planetary gear set function, and structured by the input/output rotation shaft (S101), the output/input rotation shaft (S102), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end axially extending toward the input/output rotation shaft (S101) for being combined with the sleeve type rotation shaft (AS101),;
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected the output/input rotation shaft (S102), and the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the input/output rotation shaft (S 101), and the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the input/output rotation shaft (S101), and the outer rotation part of electric machine (EM102) is combined with the rocker arm (A101);
-- The input/output rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100); the outer annular wheel (W102) of the planetary gear set (DG101) is combined with the output/input rotation shaft (S102) for being served as an output/input end, and is provided for connecting to an action side of the controllable brake device (BK102) while the other action side of the controllable brake device (BK102) is fixed in the housing (H100), the rocker arm (A101) linked by the planetary wheel (W103) is combined with the outer rotation part of electric machine (EM102)and combined with the sleeve type rotation shaft (AS101), and the sleeve type rotation shaft (AS101) rotated and sleeved on the input/output rotation shaft (S101) is served as an output/input end;
The operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the input/output rotation shaft (S101), the output/input rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the input/output rotation shaft (S101), the output/input rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the output/input rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101)and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the output/input rotation shaft (S102);
--When the controllable brake device (BK103) is controlled to be in the releasing state and the controllable brake device (BK102) is controlled to be in the brake locking state, and the dual-drive electric machine (EM100) is not operated as the electric machinery function, the transmission relation between the input/output rotation shaft (S101) and the sleeve type rotation shaft (AS101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the input/output rotation shaft (S101) and the sleeve type rotation shaft (AS101);
--When the controllable brake device (BK101) and the controllable brake device (BK102) are both controlled to be in the brake locking state, the relations between the input/output rotation shaft (S101), the output/input rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

4. A dual-drive electric machine having controllable planetary gear set, in which an inner rotation part of an electric machine (EM101) and an outer rotation part of an electric machine (EM102) of the dual-drive electric machine (EM100) are respectively combined with two of the three output/input ends of a planetary gear set (DG101) comprising a sun wheel (W101), an outer annular wheel (W102) and a planetary wheel (W103), a sleeve type rotation shaft (AS101) sleeved on an input/output rotation shaft (S101) being served as an output/input end is provided, an output/input rotation shaft (S102) is also provided, wherein one of the input/output rotation shaft (S101) or the output/input shaft (S102) is connected to an action side of a corresponding controllable brake device, and the other action side of the controllable brake device is connected to a housing (H100); through controlling the controllable brake device to perform brake locking or releasing, the operations of transmission function of connecting transmission or releasing between the input/output rotation shaft (S101), the output/input rotation shaft (S102) and the sleeve type rotation shaft (AS101) are enabled to be controlled, and interactive operations between the dual-drive electric machine (EM100) and the output/input ends are also enabled to be controlled,
wherein the input/output rotation shaft (S101) shared by the sun wheel (W101) of the planetary gear set (DG101) and the inner rotation part of electric machine (EM101) of the dual-drive electric machine (EM100) is served as an output/input end, the outer annular wheel (W102) is combined with the outer rotation part of electric machine (EM102) and combined with the sleeve type rotation shaft (AS101), the sleeve type rotation shaft (AS101) sleeved on the input/output rotation shaft (S101) is served as an output/input end, the rocker arm (A101) linked by the planetary wheel (W103) of the planetary gear set (DG101) is provided for driving the output/input rotation shaft (S102), and the output/input rotation shaft (S102) or the rocker arm (A101) is connected to an action side of the controllable brake device (BK102) while the other action side of the controllable brake device (BK102) is fixed in the housing (H100), wherein:
-- Planetary gear set (DG101): constituted by a sun wheel (W101) and an outer annular wheel (W102) and at least a planetary wheel (W103), and including through gears engaging with each other, or through friction wheels mutually performing friction transmissions to form a planetary gear set function, and structured by the input/output rotation shaft (S101), the output/input rotation shaft (S102), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the output/input rotation shaft (S102);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the output/input rotation shaft (S102) or rocker arm (A101), and the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101)and the outer rotation part of electric machine (EM102) are coaxially rotated, wherein the inner rotation part of electric machine (EM101) is combined with the input/output rotation shaft (S101), and the outer rotation part of electric machine (EM102) is combined with the outer annular wheel (W102);
--The input/output rotation shaft (S101) shared by the sun wheel (W101) of the planetary gear set (DG101) and the inner rotation part of electric machine (EM101) of the dual-drive electric machine (EM100) is served as an output/input end, the outer annular wheel (W102) is combined with the outer rotation part of electric machine (EM102) and combined with the sleeve type rotation shaft (AS 101), and the sleeve type rotation shaft (AS101) rotated and sleeved on the input/output rotation shaft (S101) is served as an output/input end;
--The rocker arm (A101) linked by the planetary wheel (W103) of the planetary gear set (DG101) is provided for driving the output/input rotation shaft (S102), and the output/input rotation shaft (S102) or the rocker arm (A101) is connected to an action side of the controllable brake device (BK102) while the other action side of the controllable brake device (BK102) is fixed in the housing (H100);
The operations include one or more than one of following functions:
--When the controllable brake device (BK102) is controlled to be in the releasing state, and the dual-drive electric machine (EM100) is not operated as the electric machinery function, the transmission relations between the input/output rotation shaft (S101) , the sleeve type rotation shaft (AS101) and the output/input rotation shaft (S102) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the input/output rotation shaft (S101), the output/input rotation shaft (S102) and the sleeve type rotation shaft (AS101);
--When the controllable brake device (BK102) is controlled to be in the brake locking state, and the dual-drive electric machine (EM100) is not operated as the electric machinery function, the transmission relation between the input/output rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the input/output rotation shaft (S101) and the sleeve type rotation shaft (AS101);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

5. A dual-drive electric machine having controllable planetary gear set, in which an inner rotation part of an electric machine (EM101) and an outer rotation part of an electric machine (EM102) of the dual-drive electric machine (EM100) are respectively combined with two of the three output/input ends of a planetary gear set (DG101) comprising a sun wheel (W101), an outer annular wheel (W102) and a planetary wheel (W103), a sleeve type rotation shaft (AS101) sleeved on an input/output rotation shaft (S101) being served as an output/input end is provided, an output/input rotation shaft (S102) is also provided, wherein one of the input/output rotation shaft (S101) or the output/input shaft (S102) is connected to an action side of a corresponding controllable brake device, and the other action side of the controllable brake device is connected to a housing (H100); through controlling the controllable brake device to perform brake locking or releasing, the operations of transmission function of connecting transmission or releasing between the input/output rotation shaft (S101), the output/input rotation shaft (S102) and the sleeve type rotation shaft (AS101) are enabled to be controlled, and interactive operations between the dual-drive electric machine (EM100) and the output/input ends are also enabled to be controlled,
wherein the input/output rotation shaft (S101) shared by the sun wheel (W101) of the planetary gear set (DG101) and the inner rotation part of electric machine (EM101) of the dual-drive electric machine (EM100) is served as an output/input end and provided for connecting to an action side of the controllable brake device (BK103) while the other action side of the controllable brake device (BK103) being fixed in the housing (H100), the planetary gear set (DG101) also is fixed in the housing (H100), the outer annular wheel (W102) of the planetary gear set (DG101) is combined with the outer rotation part of electric machine (EM102) and the sleeve type rotation shaft (AS101), the sleeve type rotation shaft (AS101) is served as an output/input end, and the planetary wheel (W103) of the planetary gear set (DG101) is provided for linking the rocker arm (A101) and driving the output/input rotation shaft (S102), wherein:
-- Planetary gear set (DG101): constituted by a sun wheel (W101) and an outer annular wheel (W102) and at least a planetary wheel (W103), and including through gears engaging with each other, or through friction wheels mutually performing friction transmissions to form a planetary gear set function, and structured by the input/output rotation shaft (S101), the output/input rotation shaft (S102), the rocker arm (A101), the sleeve type rotation shaft (AS101) and a bearing, as well as installed with a shell for being combined in the housing (H100);
-- Rocker arm (A101): having one end provided for allowing the planetary wheel (W103) to rotate and link, and the other end being connected to the output/input rotation shaft (S102);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the input/output rotation shaft (S101), and the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the input/output rotation shaft (S101), and the outer rotation part of electric machine (EM102) is combined with the outer annular wheel (W102);
--The input/output rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100);
--The outer annular wheel (W102) of the planetary gear set (DG101) combined with the outer rotation part of electric machine (EM102) and combined with the sleeve type rotation shaft (AS 101), the sleeve type rotation shaft (AS101) rotated and sleeved on the input/output rotation shaft (S101) is served as an output/input end, the planetary wheel (W103) of the planetary gear set (DG101) is provided for linking the rocker arm (A101) and driving the output/input rotation shaft (S102), and the input/output rotation shaft (S101) combined with the sun wheel (W101) is also served as an output/input end;
The operations include one or more than one of following functions:
--When the controllable brake device (BK103) is controlled to be in the releasing state, and the dual-drive electric machine (EM100) is not operated as the electric machinery function, the transmission relation between the input/output rotation shaft (S101), the sleeve type rotation shaft (AS101) and the output/input rotation shaft (S102) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the input/output rotation shaft (S101), the output/input rotation shaft (S102) and the sleeve type rotation shaft (AS101);
--When the controllable brake device (BK103) is controlled to be in the brake locking state, and the dual-drive electric machine (EM100) is not operated as the electric machinery function, the transmission relation between the sleeve type rotation shaft (AS101) and the output/input rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the output/input rotation shaft (S102);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

6. A dual-drive electric machine having controllable planetary gear set, in which an inner rotation part of an electric machine (EM101) and an outer rotation part of an electric machine (EM102) of the dual-drive electric machine (EM100) are respectively combined with two of the three output/input ends of a planetary gear set (DG101) comprising a sun wheel (W101), an outer annular wheel (W102) and a planetary wheel (W103), a sleeve type rotation shaft (AS101) sleeved on an input/output rotation shaft (S101) being served as an output/input end is provided, an output/input rotation shaft (S102) is also provided, wherein one of the input/output rotation shaft (S101) or the output/input shaft (S102) is connected to an action side of a corresponding controllable brake device, and the other action side of the controllable brake device is connected to a housing (H100); through controlling the controllable brake device to perform brake locking or releasing, the operations of transmission function of connecting transmission or releasing between the input/output rotation shaft (S101), the output/input rotation shaft (S102) and the sleeve type rotation shaft (AS101) are enabled to be controlled, and interactive operations between the dual-drive electric machine (EM100) and the output/input ends are also enabled to be controlled,
wherein the input/output rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100), the planetary gear set (DG101) is also fixed in the housing (H100), the outer annular wheel (W102) of the planetary gear set (DG101) combined with the outer rotation part of electric machine (EM102) and combined with the sleeve type rotation shaft (AS101), the sleeve type rotation shaft (AS101) rotated and sleeved on the input/output rotation shaft (S101) is served as an output/input end, the planetary wheel (W103) of the planetary gear set (DG101) is provided for linking the rocker arm (A101) and driving the output/input rotation shaft (S102), and the output/input rotation shaft (S102) or the rocker arm (A101) is connected to an action side of the controllable brake device (BK102) while the other action side of the controllable brake device (BK102) is fixed in the housing (H100), wherein:
--Planetary gear set (DG101): constituted by a sun wheel (W101) and an outer annular wheel (W102) and at least a planetary wheel (W103), and including through gears engaging with each other, or through friction wheels mutually performing friction transmissions to form a planetary gear set function, and structured by the input/output rotation shaft (S101), the output/input rotation shaft (S102), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the output/input rotation shaft (S102);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the output/input rotation shaft (S102) or the rocker arm (A101), and the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the input/output rotation shaft (S 101), and the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the input/output rotation shaft (S101), and the outer rotation part of electric machine (EM102) is combined with the outer annular wheel (W102);
-- The input/output rotation shaft (S101) shared by the sun wheel (W101) of the planetary gear set (DG101) and the inner rotation part of electric machine (EM101) of the dual-drive electric machine (EM100) is served as an output/input end, and is provided for connecting to an action side of the controllable brake device (BK103) while the other action side of the controllable brake device (BK103) is fixed in the housing (H100); the rocker arm (A101) linked by the planetary wheel (W103) of the planetary gear set (DG101) is combined with the output/input rotation shaft (S102) for being served as an output/input end, the output/input rotation shaft (S102) or the rocker arm (A101) is connected to an action side of the controllable brake device (BK102) while the other action side of the controllable brake device (BK102) is fixed in the housing (H100), the outer annular wheel (W102) is combined with the outer rotation part of electric machine (EM102) and combined with the sleeve type rotation shaft (AS101), and the sleeve type rotation shaft (AS101) rotated and sleeved on the input/output rotation shaft (S101) is served as an output/input end;
The operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the input/output rotation shaft (S101), the output/input rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the input/output rotation shaft (S101), the output/input rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the output/input rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the output/input rotation shaft (S102);
--When the controllable brake device (BK103) is controlled to be in the releasing state and the controllable brake device (BK102) is controlled to be in the brake locking state, and the dual-drive electric machine (EM100) is not operated as the electric machinery function, the transmission relation between the input/output rotation shaft (S101) and the sleeve type rotation shaft (AS101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the input/output rotation shaft (S101) and the sleeve type rotation shaft (AS101);
--When the controllable brake device (BK101) and the controllable brake device (BK102) are both controlled to be in the brake locking state, the relations between the input/output rotation shaft (S101), the output/input rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

7. A dual-drive electric machine having a controllable planetary gear set in which an inner rotation part of an electric machine (EM101) and an outer rotation part of an electric machine (EM102) of the dual-drive electric machine (EM100) are respectively combined with two of the three output/input ends of a planetary gear set (DG101) comprising a sun wheel (W101), an outer annular wheel (W102) and a planetary wheel (W103), a sleeve type rotation shaft (AS101) sleeved on an input/output rotation shaft (S101) being served as an output/input end is provided, an output/input rotation shaft (SI02) is also provided, wherein one of the input/output rotation shaft (S101) or the output/input shaft (S102) is connected to an action side of a corresponding controllable brake device, and the other action side of the controllable brake device is connected to a housing (H100); through controlling the controllable brake device to perform brake locking or releasing, the operations of transmission function of connecting transmission or releasing between the input/output rotation shaft (S101), the output/input rotation shaft (S102) and the sleeve type rotation shaft (AS101) are enabled to be controlled, and interactive operations between the dual-drive electric machine (EM100) and the output/input ends are also enabled to be controlled,
wherein the inner rotation part of electric machine (EM101) of the dual-drive electric machine (EM100) and the planetary wheel (W103) of the planetary gear set (DG101) and the rocker arm (A101) are jointly combined on the output/input rotation shaft (SI02) for being served as an output/input end, the sun wheel (W101) is combined on the input/output rotation shaft (S101) for being served as an output/input end, the outer annular wheel (W102) is combined with the outer rotation part of electric machine (EM102) and combined with the sleeve type rotation shaft (AS101), the sleeve type rotation shaft (AS101) sleeved on the input/output rotation shaft (S101) is served as an output/input shaft, and the output/input rotation shaft (S102) is connected to an action side of the controllable brake device (BK102) while the other action side of the controllable brake device (BK102) is fixed in the housing (H100), wherein:
-- Planetary gear set (DG101): constituted by a sun wheel (W101) and an outer annular wheel (W102) and at least a planetary wheel (W103), and including through gears engaging with each other, or through friction wheels mutually performing friction transmissions to form a planetary gear set function, and structured by the input/output rotation shaft (S101), the output/input rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the inner rotation part of electric machine (EM101) and the output/input rotation shaft (S102);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the output/input rotation shaft (S102), and the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the input/output rotation shaft (S101), and the outer rotation part of electric machine (EM102) is combined with the outer annular wheel (W102));
--The inner rotation part of electric machine (EM101) of the dual-drive electric machine (EM100) and the planetary wheel (W103) of the planetary gear set (DG101) and the rocker arm (A101) are jointly combined on the output/input rotation shaft (SI02) for being served as an output/input end, the sun wheel (W101) combined on the input/output rotation shaft (S101) is served as an output/input end, the outer annular wheel (W102) is combined with the outer rotation part of electric machine (EM102) and combined with the sleeve type rotation shaft (AS101), and the sleeve type rotation shaft (AS101) rotated and sleeved on the input/output rotation shaft (S101) is served as an output/input end;
--The planetary wheel (W103) of the planetary gear set (DG101), the rocker arm (A101) and the inner rotation part of electric machine (EM101) are jointly combined on the output/input rotation shaft (S 102), and the output/input rotation shaft (S102) is connected to an action side of the controllable brake device (BK102) while the other action side of the controllable brake device (BK102) is fixed in the housing (H100);
The operations include one or more than one of following functions:
--When the controllable brake device (BK102) is controlled to be in the releasing state, and the dual-drive electric machine (EM100) is not operated as the electric machinery function, the transmission relations between the input/output rotation shaft (S101), the sleeve type rotation shaft (AS101) and the output/input rotation shaft (SI02) are in the releasing state allowing idle rotation;
-- When the controllable brake device (BK102) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the input/output rotation shaft (S101), the output/input rotation shaft (S102) and the sleeve type rotation shaft (AS101);
--When the controllable brake device (BK102) is controlled to be in the brake locking state, and the dual-drive electric machine (EM100) is not operated as the electric machinery function, the transmission relation between the input/output rotation shaft (S101) and the sleeve type rotation shaft (AS101) is in a connecting relation allowing for transmission;
--When the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function for performing interactive operations according to the damping of the external load or the externally inputted rotary kinetic energy sustained by the input/output rotation shaft (S101) and the sleeve type rotation shaft (AS101);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

8. A dual-drive electric machine having a controllable planetary gear set, in which an inner rotation part of an electric machine (EM101) and an outer rotation part of an electric machine (EM102) of the dual-drive electric machine (EM100) are respectively combined with two of the three output/input ends of a planetary gear set (DG101) comprising a sun wheel (W101), an outer annular wheel (W102) and a planetary wheel (W103), a sleeve type rotation shaft (AS101) sleeved on an input/output rotation shaft (S101) being served as an output/input end is provided, an output/input rotation shaft (SI02) is also provided, wherein one of the input/output rotation shaft (S101) or the output/input shaft (S102) is connected to an action side of a corresponding controllable brake device, and the other action side of the controllable brake device is connected to a housing (H100); through controlling the controllable brake device to perform brake locking or releasing, the operations of transmission function of connecting transmission or releasing between the input/output rotation shaft (S101), the output/input rotation shaft (S102) and the sleeve type rotation shaft (AS101) are enabled to be controlled, and interactive operations between the dual-drive electric machine (EM100) and the output/input ends are also enabled to be controlled,
wherein the inner rotation part of electric machine (EM101) of the dual-drive electric machine (EM100) and the planetary wheel (W103) of the planetary gear set (DG101) and the rocker arm (A101) are jointly combined on the output/input rotation shaft (SI02) for being served as an output/input end, the sun wheel (W101) is combined on the input/output rotation shaft (S101) for being served as an output/input end, the input/output rotation shaft (S101) is connected to an action side of the controllable brake device (BK103) while the other action side of the controllable brake device (BK103) is fixed in the housing (H100), the planetary gear set (DG101) also is fixed in the housing (H100), the outer annular wheel (W102) of the planetary gear set (DG101) is combined with the outer rotation part of electric machine (EM102) and combined with the sleeve type rotation shaft (AS101), and the sleeve type rotation shaft (AS101) is served as an output/input end, wherein:
-- Planetary gear set (DG101): constituted by a sun wheel (W101) and an outer annular wheel (W102) and at least a planetary wheel (W103), and including through gears engaging with each other, or through friction wheels mutually performing friction transmissions to form a planetary gear set function, and structured by the input/output rotation shaft (S101), the output/input rotation shaft (SI02), the rocker arm (A101), the sleeve type rotation shaft (AS101) and a bearing, as well as installed with a shell for being combined in the housing (H100);
-- Rocker arm (A101): having one end provided for allowing the planetary wheel (W103) to rotate and link, and the other end being connected to the inner rotation part of electric machine (EM101) and the output/input rotation shaft (S102);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the input/output rotation shaft (S101), and the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the input/output rotation shaft (S101), and the outer rotation part of electric machine (EM102) is combined with the outer annular wheel (W102);
--The sun wheel (W101) of the planetary gear set (DG101) is combined on the input/output rotation shaft (S101), and the input/output rotation shaft (S101) is connected to an action side of the controllable brake device (BK103) while the other action side of the controllable brake device (BK103) is fixed in the housing (H100);
--The outer annular wheel (W102) of the planetary gear set (DG101) is combined with the outer rotation part of electric machine (EM102) and combined with the sleeve type rotation shaft (AS101), the sleeve type rotation shaft (AS101) rotated and sleeved on the input/output rotation shaft (S101) is served as an output/input end, and the input/output rotation shaft (S101) combined with the sun wheel (W101) is also served as an output/input end;
The operations include one or more than one of following functions:
--When the controllable brake device (BK103) is controlled to be in the releasing state, and the dual-drive electric machine (EM100) is not operated as the electric machinery function, the transmission relation between the input/output rotation shaft (S101), the sleeve type rotation shaft (AS101) and the output/input rotation shaft (SI02) are in the releasing state allowing idle rotation;
-- When the controllable brake device (BK103) is controlled to be in the releasing state, and the dual-drive electric machine (EM100) is operated as the electric machinery function, the corresponding interactive operations of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the input/output rotation shaft (S101), the output/input rotation shaft (S102) and the sleeve type rotation shaft (AS101);
--When the controllable brake device (BK103) is controlled to be in the brake locking state, and the dual-drive electric machine (EM100) is not operated as the electric machinery function, the transmission relation between the sleeve type rotation shaft (AS 101) and the output/input rotation shaft (S102) is in a connecting relation allowing for transmission;
--When the controllable brake device (BK103) is controlled to be in the brake locking state, and the dual-drive electric machine (EM100) is operated as the electric machinery function, between the inner rotation part of electric machine (EM101) and the outer rotation part of electric machine (EM102) is operated as the power generator function or the motor function for performing interactive operations according to the damping of the external load or the externally inputted rotary kinetic energy sustained by the sleeve type rotation shaft (AS101) and the output/input rotation shaft (S102);
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

9. A dual-drive electric machine having a controllable planetary gear set, in which an inner rotation part of an electric machine (EM101) and an outer rotation part of an electric machine (EM102) of the dual-drive electric machine (EM100) are respectively combined with two of the three output/input ends of a planetary gear set (DG101) comprising a sun wheel (W101), an outer annular wheel (W102) and a planetary wheel (W103), a sleeve type rotation shaft (AS101) sleeved on an input/output rotation shaft (S101) being served as an output/input end is provided, an output/input rotation shaft (SI02) is also provided, wherein one of the input/output rotation shaft (S101) or the output/input shaft (S102) is connected to an action side of a corresponding controllable brake device, and the other action side of the controllable brake device is connected to a housing (H100); through controlling the controllable brake device to perform brake locking or releasing, the operations of transmission function of connecting transmission or releasing between the input/output rotation shaft (S101), the output/input rotation shaft (S102) and the sleeve type rotation shaft (AS101) are enabled to be controlled, and interactive operations between the dual-drive electric machine (EM100) and the output/input ends are also enabled to be controlled,
wherein the inner rotation part of electric machine (EM101) of the dual-drive electric machine (EM100) and the planetary wheel (W103) of the planetary gear set (DG101) and the rocker arm (A101) are jointly combined on the output/input rotation shaft (SI02) for being served as an output/input end, the sun wheel (W101) is combined on the input/output rotation shaft (S101) for being served as an output/input end, the input/output rotation shaft (S101) is connected to an action side of the controllable brake device (BK103) while the other action side of the controllable brake device (BK103) is fixed in the housing (H100), the planetary gear set (DG101) is also fixed in the housing (H100), the outer annular wheel (W102) of the planetary gear set (DG101) is combined with the outer rotation part of electric machine (EM102) and combined with the sleeve type rotation shaft (AS101), the sleeve type rotation shaft (AS101) rotated and sleeved on the input/output rotation shaft (S101) is served as an output/input end, and the output/input rotation shaft (SI02) is connected to an action side of the controllable brake device (BK102) while the other action side of the controllable brake device (BK102) is fixed in the housing (H100), wherein:
--Planetary gear set (DG101): constituted by a sun wheel (W101) and an outer annular wheel (W102) and at least a planetary wheel (W103), and including through gears engaging with each other, or through friction wheels mutually performing friction transmissions to form a planetary gear set function, and structured by the input/output rotation shaft (S101), the output/input rotation shaft (SI02), the rocker arm (A101), the sleeve type rotation shaft (AS101) and a bearing, as well as installed with a shell for being combined in the housing (H100);
--Rocker arm (A101): having one end provided for allowing the planetary wheel (W103) to rotate and link, and the other end being connected to the inner rotation part of electric machine (EM101) and the output/input rotation shaft (S102);
--Controllable brake device (BK102): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the output/input rotation shaft (S 102), and the other action side is fixed in the housing (H100);
--Controllable brake device (BK103): constituted by a brake device controlled by a manual force or mechanical force or hydraulic force or pneumatic force or electromagnetic force, and having two controllable action sides for the operations of a brake locking state for engagement or a releasing state for separation, wherein one of the action sides is connected to the input/output rotation shaft (S101), and the other action side is fixed in the housing (H100);
--Dual-drive electric machine (EM100): constituted by a DC or AC, brush or brushless, synchronous or non-synchronous dual-drive electric machine, having an inner rotation part of electric machine (EM101) and an outer rotation part of electric machine (EM102), and installed with end covers, bearings and related electric conduction devices used to introduce electric energy, the inner rotation part of electric machine (EM101) and the outer rotation part of electric machine (EM102) are coaxially rotated, wherein the inner rotation part of electric machine (EM101) is combined with the output/input rotation shaft (S102), and the outer rotation part of electric machine (EM102) is combined with the outer annular wheel (W102);
-- The inner rotation part of electric machine (EM101) of the dual-drive electric machine (EM100) and the planetary wheel (W103) of the planetary gear set (DG101) and the rocker arm (A101) are jointly combined on the output/input rotation shaft (SI02) for being served as an output/input end, the sun wheel (W101) is combined on the input/output rotation shaft (S101) for being served as an output/input end, the input/output rotation shaft (S101) is connected to an action side of the controllable brake device (BK103) while the other action side of the controllable brake device (BK103) is fixed in the housing (H100); the rocker arm (A101) linked by the planetary wheel (W103) of the planetary gear set (DG101) is combined with the output/input rotation shaft (S102) for being served as an output/input end, the output/input rotation shaft (S102) is connected to an action side of the controllable brake device (BK102) while the other action side of the controllable brake device (BK102) is fixed in the housing (H100), the outer annular wheel (W102) is combined with the outer rotation part of electric machine (EM102) and combined with the sleeve type rotation shaft (AS 101), and the sleeve type rotation shaft (AS101) rotated and sleeved on the input/output rotation shaft (S101) is served as an output/input end;
The operations include one or more than one of following functions:
--When the controllable brake device (BK102) and the controllable brake device (BK103) are both controlled to be in the releasing state, and the dual-drive electric machine (EM100) is not operated as the electric machinery function, the transmission relations between the input/output rotation shaft (S101), the output/input rotation shaft (S102) and the sleeve type rotation shaft (AS101) are in the releasing state allowing idle rotation;
-- When the controllable brake device (BK102) and the controllable brake device (BK103) are both controlled to be in the releasing state, and the dual-drive electric machine (EM100) is operated as the electric machinery function, the corresponding interactive operation of the power generator function or the motor function are correspondingly performed between the inner rotation part of electric machine (EM101) and the outer rotation part of electric machine (EM102), according to the damping of the external load or the rotation torque, the rotation speed and the rotation direction of the externally inputted rotary kinetic energy sustained by the input/output rotation shaft (S101), the output/input rotation shaft (S102) and the sleeve type rotation shaft (AS101);
--When the controllable brake device (BK103) is controlled to be in the brake locking state and the controllable brake device (BK102) is controlled to be in the releasing state, and the dual-drive electric machine (EM100) is not operated as the electric machinery function, the transmission relation between the sleeve type rotation shaft (AS101) and the output/input rotation shaft (S102) is in a connecting relation allowing for transmission;
--When the controllable brake device (BK103) is controlled to be in the brake locking state and the controllable brake device (BK102) is controlled to be in the releasing state, and the dual-drive electric machine (EM100) is operated with the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the sleeve type rotation shaft (AS101) and the output/input rotation shaft (S102);
--When the controllable brake device (BK103) is controlled to be in the releasing state and the controllable brake device (BK102) is controlled to be in the brake locking state, and the dual-drive electric machine (EM100) is not operated as the electric machinery function, the transmission relation between the input/output rotation shaft (S101) and the sleeve type rotation shaft (AS101) is in a connecting relation allowing for transmission;
--When the controllable brake device (BK103) is controlled to be in the releasing state and the controllable brake device (BK102) is controlled to be in the brake locking state, and the dual-drive electric machine (EM100) is operated as the electric machinery function, between the inner rotation part of the electric machine (EM101) and the outer rotation part of the electric machine (EM102) is operated as the power generator function or the motor function, for performing corresponding interactive operations with the damping of external load or the externally inputted rotary kinetic energy sustained by the input/output rotation shaft (S101) and the sleeve type rotation shaft (AS101);
--When the controllable brake device (BK101) and the controllable brake device (BK102) are both controlled to be in the brake locking state, the relations between the input/output rotation shaft (S101), the output/input rotation shaft (S102) and the sleeve type rotation shaft (AS101) are all in the brake locking state;
The interactive operations of corresponding function performed by the mentioned dual-drive electric machine (EM100) include receiving the driving control of externally inputted electric energy to operate as the motor function for individually driving the load, or working with the externally inputted rotary kinetic energy for commonly driving the load;
The interactive operations of corresponding function performed by the mentioned dual-drive electric machine (EM100) include receiving the driving of the externally inputted rotary kinetic energy or the driving of the load inertia kinetic energy for being operated as the power generator function, so as to output the electric energy to drive the external electric load or charge the external electric energy storing device.

## Patentansprüche

1. Elektrische Maschine mit Doppelantrieb, die ein steuerbares Planetengetriebe aufweist, wobei ein inneres Drehteil einer elektrischen Maschine (EM101) und ein äußeres Drehteil einer elektrischen Maschine (EM102) der elektrischen Maschine mit Doppelantrieb (EM100) jeweils mit zwei der drei Ausgabe-/Eingabeenden eines Planetengetriebes (DG101) kombiniert sind, das ein Sonnenrad (W101), ein äußeres ringförmiges Rad (W102) und ein Planetenrad (W103) umfasst, wobei eine muffenartige Drehwelle (AS101), die eine Eingabe-/Ausgabedrehwelle (S101) ummantelt, die als ein Ausgabe-/Eingabeende dient, bereitgestellt ist, wobei eine Ausgabe-/Eingabedrehwelle (S102) ebenso bereitgestellt ist, wobei die Eingabe-/Ausgabedrehwelle (S101) oder die Ausgabe-/Eingabewelle (S102) mit einer Aktionsseite einer entsprechenden steuerbaren Bremsvorrichtung verbunden ist und die andere Aktionsseite der steuerbaren Bremsvorrichtung mit einem Gehäuse (H100) verbunden ist; wobei durch Steuern der steuerbaren Bremsvorrichtung, um ein Verriegeln oder Freigeben der Bremse durchzuführen, den Vorgängen einer Funktion einer Übersetzung eines Verbindens einer Übersetzung oder des Freigebens zwischen der Eingabe-/Ausgabedrehwelle (S101), der Ausgabe-/Eingabedrehwelle (S102) und der muffenartigen Drehwelle (AS101) ermöglicht wird, gesteuert zu werden, und interaktiven Vorgängen zwischen der elektrischen Maschine mit Doppelantrieb (EM100) und den Ausgabe-/Eingabeenden ebenso ermöglicht wird, gesteuert zu werden,
wobei die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, als ein Ausgabe-/Eingabeende dient, wobei ein Kipphebel (A101), der durch das Planetenrad (W103) verknüpft ist, mit dem äußeren Drehteil der elektrischen Maschine (EM102) kombiniert ist und mit der muffenartigen Drehwelle (AS 101) kombiniert ist, wobei die muffenartige Drehwelle (AS101), die die Drehwelle (S101) ummantelt, als ein Ausgabe-/Eingabeende dient, wobei das äußere ringförmige Rad (W102) des Planetengetriebes (DG101) zum Antreiben der Ausgabe-/Eingabedrehwelle (S102) bereitgestellt ist und die Ausgabe-/Eingabedrehwelle (S102) mit einer Aktionsseite der steuerbaren Bremsvorrichtung (BK102) verbunden ist, während die andere Aktionsseite der steuerbaren Bremsvorrichtung (BK102) in dem Gehäuse (H100) fixiert ist, wobei:
-- Planetengetriebe (DG101): dargestellt durch ein Sonnenrad (W101) und ein äußeres ringförmiges Rad (W102) und wenigstens ein Planetenrad (W103), und das durch Zahnräder, die miteinander in Eingriff stehen, oder durch Reibungsräder, die gegenseitig Reibung durchführen, Übersetzungen beinhaltet, um eine Funktion des Planetengetriebes auszubilden, und durch die Drehwelle (S101), die Drehwelle (S102), den Kipphebel (A101), die muffenartige Drehwelle (AS101) und ein Lager strukturiert ist, sowie mit einer Hülle installiert ist, um in dem Gehäuse (H100) kombiniert zu sein;
-- Kipphebel (A101): weist ein Ende auf, das bereitgestellt ist, um dem Planetenrad (W103) zu ermöglichen, sich zu drehen und verknüpfen, und wobei sich das andere Ende zu der Drehwelle (S101) hin axial erstreckt, um mit dem äußeren Drehteil der elektrischen Maschine (EM102) kombiniert zu sein und mit der muffenartigen Drehwelle (AS101) kombiniert zu sein;
-- Steuerbare Bremsvorrichtung (BK102): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird und zwei steuerbare Aktionsseiten für die Vorgänge eines Bremsverriegelungszustands für einen Eingriff oder eines Freigabezustands für eine Trennung aufweist, wobei eine der Aktionsseiten mit der Ausgabe-/Eingabedrehwelle (S102) verbunden ist und die andere Aktionsseite in dem Gehäuse (H100) fixiert ist;
-- Elektrische Maschine mit Doppelantrieb (EM 100): dargestellt durch eine Gleichstrom- oder Wechselstrom-, Bürsten- oder Bürstenlos-, synchrone oder nicht synchrone elektrische Maschine mit Doppelantrieb, die ein inneres Drehteil der elektrischen Maschine (EM101) und ein äußeres Drehteil der elektrischen Maschine (EM102) aufweist und mit Endabdeckungen, Lagern und zugehörigen elektrischen Leitungsvorrichtungen installiert ist, die verwendet werden, um elektrische Energie einzuspeisen, wobei das innere Drehteil der elektrischen Maschine (EM101) und das äußere Drehteil der elektrischen Maschine (EM102) koaxial gedreht werden, wobei das innere Drehteil der elektrischen Maschine (EM101) mit der Eingabe-/Ausgabedrehwelle (S101) kombiniert ist und das äußere Drehteil der elektrischen Maschine (EM102) mit dem Kipphebel (A101) kombiniert ist;
-- Die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, dient als ein Ausgabe-/Eingabeende, wobei der Kipphebel (A101), der durch das Planetenrad (W103) verknüpft ist, mit dem äußeren Drehteil der elektrischen Maschine (EM102) kombiniert ist und mit der muffenartigen Drehwelle (AS101) kombiniert ist und die muffenartige Drehwelle (AS101), die auf der Eingabe-/Ausgabedrehwelle (S101) gedreht wird und diese ummantelt, als ein Ausgabe-/Eingabeende dient;
-- Das äußere ringförmige Rad (W102) des Planetengetriebes (DG101) ist zum Antreiben der Ausgabe-/Eingabedrehwelle (S102) bereitgestellt und die Ausgabe-/Eingabedrehwelle (S102) ist mit einer Aktionsseite der steuerbaren Bremsvorrichtung verbunden (BK102), während die andere Aktionsseite der steuerbaren Bremsvorrichtung (BK102) in dem Gehäuse (H100) fixiert ist;
Die Vorgänge beinhalten eine oder mehrere der folgenden Funktionen:
-- Wenn die steuerbare Bremsvorrichtung (BK102) gesteuert wird, um sich in dem Freigabezustand zu befinden, und die elektrische Maschine mit Doppelantrieb (EM100) nicht als die Funktion der elektrischen Maschinerie betrieben wird, befinden sich die Übersetzungsbeziehungen zwischen der Eingabe-/Ausgabedrehwelle (S101), der muffenartigen Drehwelle (AS101) und der Ausgabe-/Eingabedrehwelle (S102) in dem Freigabezustand, der eine Leerlaufdrehung ermöglicht;
-- Wenn die steuerbare Bremsvorrichtung (BK102) gesteuert wird, um sich in dem Freigabezustand zu befinden, und die elektrische Maschine mit Doppelantrieb (EM100) als die Funktion der elektronischen Maschinerie betrieben wird, werden die entsprechenden interaktiven Vorgänge der Funktion eines Stromgenerators oder der Funktion eines Motors zwischen dem inneren Drehteil der elektrischen Maschine (EM101) und dem äußeren Drehteil der elektrischen Maschine (EM102) gemäß der Dämpfung der externen Last oder des Drehmoments, der Drehzahl und der Drehrichtung der extern eingegebenen kinetischen Drehenergie durchgeführt, die durch die Eingabe-/Ausgabedrehwelle (S101), die Ausgabe-/Eingabedrehwelle (S102) und die muffenartige Drehwelle (AS101) aufrechterhalten wird;
-- Wenn die steuerbare Bremsvorrichtung (BK102) gesteuert wird, um sich in dem Bremsverriegelungszustand zu befinden, und die elektrische Maschine mit Doppelantrieb (EM100) nicht als die Funktion der elektrischen Maschinerie betrieben wird, befindet sich die Übersetzungsbeziehung zwischen der Eingabe-/Ausgabedrehwelle (S101) und der muffenartigen Drehwelle (AS101) in einer Verbindungsbeziehung, die die Übersetzung ermöglicht;
-- Wenn die steuerbare Bremsvorrichtung (BK102) gesteuert wird, um sich in dem Bremsverriegelungszustand zu befinden, und die elektrische Maschine mit Doppelantrieb (EM100) als die Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen interaktiver Vorgänge gemäß der Dämpfung der externen Last oder der extern eingegebenen kinetischen Drehenergie betrieben, die durch die Eingabe-/Ausgabedrehwelle (S101) und die muffenartige Drehwelle (AS101) aufrechterhalten wird;
Die interaktiven Vorgänge der entsprechenden Funktion, die durch die erwähnte elektrische Maschine mit Doppelantrieb (EM100) durchgeführt werden, beinhalten ein Empfangen der Antriebssteuerung von extern eingegebener elektrischer Energie, um als die Funktion des Motors zum individuellen Antreiben der Last oder Arbeiten mit der extern eingegebenen kinetischen Drehenergie zum gemeinsamen Antreiben der Last zu in Betrieb zu sein;
Die interaktiven Vorgänge der entsprechenden Funktion, die durch die erwähnte elektrische Maschine mit Doppelantrieb (EM100) durchgeführt werden, beinhalten das Empfangen des Antreibens der extern eingegebenen kinetischen Drehenergie oder des Antreibens der kinetischen Energie einer Lastträgheit, um als die Funktion des Stromgenerators betrieben zu werden, um die elektrische Energie auszugeben, um die externe elektrische Last anzutreiben oder die Speichervorrichtung der externen elektrischen Energie aufzuladen.

2. Elektrische Maschine mit Doppelantrieb, die das steuerbare Planetengetriebe aufweist, wobei ein inneres Drehteil einer elektrischen Maschine (EM101) und ein äußeres Drehteil einer elektrischen Maschine (EM102) der elektrischen Maschine mit Doppelantrieb (EM100) jeweils mit zwei der drei Ausgabe-/Eingabeenden des Planetengetriebes (DG101) kombiniert sind, das ein Sonnenrad (W101), ein äußeres ringförmiges Rad (W102) und ein Planetenrad (W103) umfasst, wobei eine muffenartige Drehwelle (AS101), die eine Eingabe-/Ausgabedrehwelle (S101) ummantelt, die als ein Ausgabe-/Eingabeende dient, bereitgestellt ist, wobei eine Ausgabe-/Eingabedrehwelle (S102) ebenso bereitgestellt ist, wobei die Eingabe-/Ausgabedrehwelle (S101) oder die Ausgabe-/Eingabewelle (S102) mit einer Aktionsseite einer entsprechenden steuerbaren Bremsvorrichtung verbunden ist und die andere Aktionsseite der steuerbaren Bremsvorrichtung mit einem Gehäuse (H100) verbunden ist; wobei durch Steuern der steuerbaren Bremsvorrichtung, um das Verriegeln oder Freigeben der Bremse durchzuführen, Vorgängen der Funktion der Übersetzung des Verbindens der Übersetzung oder des Freigebens zwischen der Eingabe-/Ausgabedrehwelle (S101), der Ausgabe-/Eingabedrehwelle (S102) und der muffenartigen Drehwelle (AS101) ermöglicht wird, gesteuert zu werden, und interaktiven Vorgängen zwischen der elektrischen Maschine mit Doppelantrieb (EM100) und den Ausgabe-/Eingabeenden ebenso ermöglicht wird, gesteuert zu werden,
wobei die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, als ein Ausgabe-/Eingabeende dient und zum Verbinden mit einer Aktionsseite der steuerbaren Bremsvorrichtung (BK103) bereitgestellt ist, während die andere Aktionsseite der steuerbaren Bremsvorrichtung (BK103) in dem Gehäuse (H100) fixiert ist, wobei das Planetengetriebe (DG101) ebenso in dem Gehäuse (H100) fixiert ist, wobei das Planetenrad (W103) des Planetengetriebes (DG101) zum Verknüpfen eines Kipphebels (A101) bereitgestellt ist und mit dem äußeren Drehteil der elektrischen Maschine (EM102) und der muffenartigen Drehwelle (AS101) kombiniert ist, wobei die muffenartige Drehwelle (AS101) als ein Ausgabe-/Eingabeende dient und das äußere ringförmige Rad (W102) des Planetengetriebes (DG101) zum Antreiben der Ausgabe-/Eingabedrehwelle (S102) bereitgestellt ist, wobei:
-- Planetengetriebe (DG101): dargestellt durch ein Sonnenrad (W101) und ein äußeres ringförmiges Rad (W102) und wenigstens ein Planetenrad (W103), und das durch Zahnräder, die miteinander in Eingriff stehen, oder durch Reibungsräder, die gegenseitig Reibung durchführen, Übersetzungen beinhaltet, um eine Funktion des Planetengetriebes auszubilden, und durch die Eingabe-/Ausgabedrehwelle (S101), die Ausgabe-/Eingabedrehwelle (S102), den Kipphebel (A101), die muffenartige Drehwelle (AS101) und ein Lager strukturiert ist, sowie mit einer Hülle installiert ist, um in dem Gehäuse (H100) kombiniert zu sein;
-- Kipphebel (A101): weist ein Ende auf, das bereitgestellt ist, um dem Planetenrad (W103) zu ermöglichen, sich zu drehen und verknüpfen, und wobei sich das andere Ende zu der Eingabe-/Ausgabedrehwelle (S101) hin axial erstreckt, um mit dem äußeren Drehteil der elektrischen Maschine kombiniert zu sein (EM102) und mit der muffenartigen Drehwelle (AS101) kombiniert zu sein;
-- Steuerbare Bremsvorrichtung (BK103): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird und zwei steuerbare Aktionsseiten für die Vorgänge eines Bremsverriegelungszustands für den Eingriff oder eines Freigabezustands für die Trennung aufweist, wobei eine der Aktionsseiten mit der Eingabe-/Ausgabedrehwelle (S101) verbunden ist und die andere Aktionsseite in dem Gehäuse (H100) fixiert ist;
-- Elektrische Maschine mit Doppelantrieb (EM 100): dargestellt durch eine Gleichstrom- oder Wechselstrom-, Bürsten- oder Bürstenlos-, synchrone oder nicht synchrone elektrische Maschine mit Doppelantrieb, die ein inneres Drehteil der elektrischen Maschine (EM101) und ein äußeres Drehteil der elektrischen Maschine (EM102) aufweist und mit Endabdeckungen, Lagern und zugehörigen elektrischen Leitungsvorrichtungen installiert ist, die verwendet werden, um elektrische Energie einzuspeisen, wobei das innere Drehteil der elektrischen Maschine (EM101) und das äußere Drehteil der elektrischen Maschine (EM102) koaxial gedreht werden, wobei das innere Drehteil der elektrischen Maschine (EM101) mit der Eingabe-/Ausgabedrehwelle (S101) kombiniert ist und das äußere Drehteil der elektrischen Maschine (EM102) mit dem Kipphebel (A101) kombiniert ist;
-- Die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, dient als ein Ausgabe-/Eingabeende zum Verbinden mit einer Aktionsseite der steuerbaren Bremsvorrichtung (BK103), während die andere Aktionsseite der steuerbaren Bremsvorrichtung (BK103) in dem Gehäuse (H100) fixiert ist;
-- Das Planetenrad (W103) des Planetengetriebes (DG101) ist zum Verknüpfen eines Kipphebels (A101) bereitgestellt und mit dem äußeren Drehteil der elektrischen Maschine (EM102) kombiniert und mit der muffenartigen Drehwelle (AS101) kombiniert, wobei die muffenartige Drehwelle (AS101), die auf der Eingabe-/Ausgabedrehwelle (S101) gedreht wird und diese ummantelt, als ein Ausgabe-/Eingabeende dient, wobei das äußere ringförmige Rad (W102) des Planetengetriebes (DG101) zum Antreiben der Ausgabe-/Eingabedrehwelle (S102) bereitgestellt ist und die Eingabe-/Ausgabedrehwelle (S101), die mit dem Sonnenrad (W101) verbunden ist, ebenso als ein Ausgabe-/Eingabeende dient;
Die Vorgänge beinhalten eine oder mehrere der folgenden Funktionen:
-- Wenn die steuerbare Bremsvorrichtung (BK103) gesteuert wird, um sich in dem Freigabezustand zu befinden, und die elektrische Maschine mit Doppelantrieb (EM100) nicht als die Funktion der elektrischen Maschinerie betrieben wird, befindet sich die Übersetzungsbeziehung zwischen der Eingabe-/Ausgabedrehwelle (S101) und der muffenartigen Drehwelle (AS101) und der Ausgabe-/Eingabedrehwelle (S102) in dem Freigabezustand, der die Leerlaufdrehung ermöglicht;
-- Wenn die steuerbare Bremsvorrichtung (BK103) gesteuert wird, um sich in dem Freigabezustand zu befinden, und die elektrische Maschine mit Doppelantrieb (EM100) als die Funktion der elektrischen Maschinerie betrieben wird, werden die entsprechenden interaktiven Vorgänge der Funktion des Stromgenerators oder der Funktion des Motors entsprechend zwischen dem inneren Drehteil der elektrischen Maschine (EM101) und dem äußeren Drehteil der elektrischen Maschine (EM102) gemäß der Dämpfung der externen Last oder des Drehmoments, der Drehzahl und der Drehrichtung der extern eingegebenen kinetischen Drehenergie durchgeführt, die durch die Eingabe-/Ausgabedrehwelle (S101), die Ausgabe-/Eingabedrehwelle (S102) und die muffenartige Drehwelle (AS101) aufrechterhalten wird;
-- Wenn die steuerbare Bremsvorrichtung (BK103) gesteuert wird, um sich in dem Bremsverriegelungszustand zu befinden, und die elektrische Maschine mit Doppelantrieb (EM100) nicht als die Funktion der elektrischen Maschinerie betrieben wird, befindet sich die Übersetzungsbeziehung zwischen der muffenartigen Drehwelle (AS101) und der Ausgabe-/Eingabedrehwelle (S102) in einer Verbindungsbeziehung, die die Übersetzung ermöglicht;
-- Wenn die steuerbare Bremsvorrichtung (BK103) gesteuert wird, um sich in dem Bremsverriegelungszustand zu befinden, und die elektrische Maschine mit Doppelantrieb (EM100) als die Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen interaktiver Vorgänge gemäß der Dämpfung der externen Last oder der extern eingegebenen kinetischen Drehenergie betrieben, die durch die muffenartige Drehwelle (AS101) und die Ausgabe-/Eingabedrehwelle (S102) aufrechterhalten wird;
Die interaktiven Vorgänge der entsprechenden Funktion, die durch die erwähnte elektrische Maschine mit Doppelantrieb (EM100) durchgeführt werden, beinhalten das Empfangen der Antriebssteuerung von extern eingegebener elektrischer Energie, um als die Funktion des Motors zum individuellen Antreiben der Last oder Arbeiten mit der extern eingegebenen kinetischen Drehenergie zum gemeinsamen Antreiben der Last in Betrieb zu sein;
Die interaktiven Vorgänge der entsprechenden Funktion, die durch die erwähnte elektrische Maschine mit Doppelantrieb (EM100) durchgeführt werden, beinhalten das Empfangen des Antreibens der extern eingegebenen kinetischen Drehenergie oder des Antreibens der kinetischen Energie der Lastträgheit, um als die Funktion des Stromgenerators betrieben zu werden, um die elektrische Energie auszugeben, um die externe elektrische Last anzutreiben oder die Speichervorrichtung der externen elektrischen Energie aufzuladen.

3. Elektrische Maschine mit Doppelantrieb, die das steuerbare Planetengetriebe aufweist, wobei ein inneres Drehteil einer elektrischen Maschine (EM101) und ein äußeres Drehteil einer elektrischen Maschine (EM102) der elektrischen Maschine mit Doppelantrieb (EM100) jeweils mit zwei der drei Ausgabe-/Eingabeenden eines Planetengetriebes (DG101) kombiniert sind, das ein Sonnenrad (W101), ein äußeres ringförmiges Rad (W102) und ein Planetenrad (W103) umfasst, wobei eine muffenartige Drehwelle (AS101), die eine Eingabe-/Ausgabedrehwelle (S101) ummantelt, die als ein Ausgabe-/Eingabeende dient, bereitgestellt ist, wobei eine Ausgabe-/Eingabedrehwelle (S102) ebenso bereitgestellt ist, wobei die Eingabe-/Ausgabedrehwelle (S101) oder die Ausgabe-/Eingabewelle (S102) mit einer Aktionsseite einer entsprechenden steuerbaren Bremsvorrichtung verbunden ist und die andere Aktionsseite der steuerbaren Bremsvorrichtung mit einem Gehäuse (H100) verbunden ist; wobei durch Steuern der steuerbaren Bremsvorrichtung, um das Verriegeln oder Freigeben der Bremse durchzuführen, den Vorgängen der Funktion der Übersetzung des Verbindens der Übersetzung oder des Freigebens zwischen der Eingabe-/Ausgabedrehwelle (S101), der Ausgabe-/Eingabedrehwelle (S102) und der muffenartigen Drehwelle (AS101) ermöglicht wird, gesteuert zu werden, und interaktiven Vorgängen zwischen der elektrischen Maschine mit Doppelantrieb (EM100) und den Ausgabe-/Eingabeenden ebenso ermöglicht wird, gesteuert zu werden,
wobei die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, als ein Ausgabe-/Eingabeende dient und zum Verbinden mit einer Aktionsseite der steuerbaren Bremsvorrichtung (BK103) bereitgestellt ist, während die andere Aktionsseite der steuerbaren Bremsvorrichtung (BK103) in dem Gehäuse (H100) fixiert ist, wobei das Planetengetriebe (DG101) ebenso in dem Gehäuse (H100) fixiert ist, wobei das Planetenrad (W103) des Planetengetriebes (DG101) zum Verknüpfen eines Kipphebels (A101) bereitgestellt ist und mit dem äußeren Drehteil der elektrischen Maschine (EM102) kombiniert ist und mit der muffenartigen Drehwelle (AS101) kombiniert ist, wobei die muffenartige Drehwelle (AS101), die auf der Eingabe-/Ausgabedrehwelle (S101) gedreht wird und diese ummantelt, als ein Ausgabe-/Eingabeende dient, wobei das äußere ringförmige Rad (W102) des Planetengetriebes (DG101) zum Antreiben der Ausgabe-/Eingabedrehwelle (S102) bereitgestellt ist und die Ausgabe-/Eingabedrehwelle (S102) mit einer Aktionsseite der steuerbaren Bremsvorrichtung (BK102) verbunden ist, während die andere Aktionsseite der steuerbaren Bremsvorrichtung (BK102) in dem Gehäuse (H100) fixiert ist, wobei:
-- Planetengetriebe (DG101): dargestellt durch ein Sonnenrad (W101) und ein äußeres ringförmiges Rad (W102) und wenigstens ein Planetenrad (W103), und das durch Zahnräder, die miteinander in Eingriff stehen, oder durch Reibungsräder, die gegenseitig Reibung durchführen, Übersetzungen beinhaltet, um eine Funktion des Planetengetriebes auszubilden, und durch die Eingabe-/Ausgabedrehwelle (S101), die Ausgabe-/Eingabedrehwelle (S102), den Kipphebel (A101), die muffenartige Drehwelle (AS101) und ein Lager strukturiert ist, sowie mit einer Hülle installiert ist, um in dem Gehäuse (H100) kombiniert zu sein;
-- Kipphebel (A101): weist ein Ende auf, das bereitgestellt ist, um dem Planetenrad (W103) zu ermöglichen, sich zu drehen und verknüpfen, und wobei sich das andere Ende zu der Eingabe-/Ausgabedrehwelle (S101) hin axial erstreckt, um mit der muffenartigen Drehwelle (AS101) kombiniert zu sein;
-- Steuerbare Bremsvorrichtung (BK102): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird und zwei steuerbare Aktionsseiten für die Vorgänge eines Bremsverriegelungszustands für den Eingriff oder eines Freigabezustands für die Trennung aufweist, wobei eine der Aktionsseiten mit der Ausgabe-/Eingabedrehwelle (S102) verbunden ist und die andere Aktionsseite in dem Gehäuse (H100) fixiert ist;
-- Steuerbare Bremsvorrichtung (BK103): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird und zwei steuerbare Aktionsseiten für die Vorgänge eines Bremsverriegelungszustands für den Eingriff oder eines Freigabezustands für die Trennung aufweist, wobei eine der Aktionsseiten mit der Eingabe-/Ausgabedrehwelle (S101) verbunden ist und die andere Aktionsseite in dem Gehäuse (H100) fixiert ist;
-- Elektrische Maschine mit Doppelantrieb (EM 100): dargestellt durch eine Gleichstrom- oder Wechselstrom-, Bürsten- oder Bürstenlos-, synchrone oder nicht synchrone elektrische Maschine mit Doppelantrieb, die ein inneres Drehteil der elektrischen Maschine (EM101) und ein äußeres Drehteil der elektrischen Maschine (EM102) aufweist und mit Endabdeckungen, Lagern und zugehörigen elektrischen Leitungsvorrichtungen installiert ist, die verwendet werden, um elektrische Energie einzuspeisen, wobei das innere Drehteil der elektrischen Maschine (EM101) und das äußere Drehteil der elektrischen Maschine (EM102) koaxial gedreht werden, wobei das innere Drehteil der elektrischen Maschine (EM101) mit der Eingabe-/Ausgabedrehwelle (S101) kombiniert ist und das äußere Drehteil der elektrischen Maschine (EM102) mit dem Kipphebel (A101) kombiniert ist;
-- Die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, dient als ein Ausgabe-/Eingabeende und ist zum Verbinden mit einer Aktionsseite der steuerbaren Bremsvorrichtung (BK103) bereitgestellt, während die andere Aktionsseite der steuerbaren Bremsvorrichtung (BK103) in dem Gehäuse (H100) fixiert ist; wobei das äußere ringförmige Rad (W102) des Planetengetriebes (DG101) mit der Ausgabe-/Eingabedrehwelle (S102) kombiniert ist, um als ein Ausgabe-/Eingabeende zu dienen, und zum Verbinden mit einer Aktionsseite der steuerbaren Bremsvorrichtung (BK102) bereitgestellt ist, während die andere Aktionsseite der steuerbaren Bremsvorrichtung (BK102) in dem Gehäuse (H100) fixiert ist, wobei der Kipphebel (A101), der durch das Planetenrad (W103) verknüpft ist, mit dem äußeren Drehteil der elektrischen Maschine (EM102) kombiniert ist und mit der muffenartigen Drehwelle (AS101) kombiniert ist und wobei die muffenartige Drehwelle (AS101), die auf der Eingabe-/Ausgabedrehwelle (S101) gedreht wird und diese ummantelt, als ein Ausgabe-/Eingabeende dient;
Die Vorgänge beinhalten eine oder mehrere der folgenden Funktionen:
-- Wenn die steuerbare Bremsvorrichtung (BK102) und die steuerbare Bremsvorrichtung (BK103) beide gesteuert werden, um sich in dem Freigabezustand zu befinden, und die elektrische Maschine mit Doppelantrieb (EM100) nicht als die Funktion der elektrischen Maschinerie betrieben wird, befinden sich die Übersetzungsbeziehungen zwischen der Eingabe-/Ausgabedrehwelle (S101), der Ausgabe-/Eingabedrehwelle (S102) und der muffenartigen Drehwelle (AS101) in dem Freigabezustand, der die Leerlaufdrehung ermöglicht;
-- Wenn die steuerbare Bremsvorrichtung (BK102) und die steuerbare Bremsvorrichtung (BK103) beide gesteuert werden, um sich in dem Freigabezustand zu befinden, und die elektrische Maschine mit Doppelantrieb (EM100) als die Funktion der elektrischen Maschinerie betrieben wird, wird der entsprechende interaktive Vorgang der Funktion des Stromgenerators oder der Funktion des Motors entsprechend zwischen dem inneren Drehteil der elektrischen Maschine (EM101) und dem äußeren Drehteil der elektrischen Maschine (EM102) gemäß der Dämpfung der externen Last oder des Drehmoments, der Drehzahl und der Drehrichtung der extern eingegebenen kinetischen Drehenergie durchgeführt, die durch die Eingabe-/Ausgabedrehwelle (S101), die Ausgabe-/Eingabedrehwelle (S102) und die muffenartige Drehwelle (AS101) aufrechterhalten wird;
-- Wenn die steuerbare Bremsvorrichtung (BK103) gesteuert wird, um sich in dem Bremsverriegelungszustand zu befinden, und die steuerbare Bremsvorrichtung (BK102) gesteuert wird, um sich in dem Freigabezustand zu befinden, und die elektrische Maschine mit Doppelantrieb (EM100) nicht als die Funktion der elektrischen Maschinerie betrieben wird, befindet sich die Übersetzungsbeziehung zwischen der muffenartigen Drehwelle (AS101) und der Ausgabe-/Eingabedrehwelle (S102) in einer Verbindungsbeziehung, die die Übersetzung ermöglicht;
-- Wenn die steuerbare Bremsvorrichtung (BK103) gesteuert wird, um sich in dem Bremsverriegelungszustand zu befinden, und die steuerbare Bremsvorrichtung (BK102) gesteuert wird, um sich in dem Freigabezustand zu befinden, und die elektrische Maschine mit Doppelantrieb (EM100) mit der Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen entsprechender interaktiver Vorgänge mit der Dämpfung der externen Last oder der extern eingegebenen kinetischen Drehenergie betrieben, die durch die muffenartige Drehwelle (AS101) und die Ausgabe-/Eingabedrehwelle (S102) aufrechterhalten wird;
-- Wenn die steuerbare Bremsvorrichtung (BK103) gesteuert wird, um sich in dem Freigabezustand zu befinden, und die steuerbare Bremsvorrichtung (BK102) gesteuert wird, um sich in dem Bremsverriegelungszustand zu befinden, und die elektrische Maschine mit Doppelantrieb (EM100) nicht als die Funktion der elektrischen Maschinerie betrieben wird, befindet sich die Übersetzungsbeziehung zwischen der Eingabe-/Ausgabedrehwelle (S101) und der muffenartigen Drehwelle (AS101) in einer Verbindungsbeziehung, die die Übersetzung ermöglicht;
-- Wenn die steuerbare Bremsvorrichtung (BK103) gesteuert wird, um sich in dem Freigabezustand zu befinden, und die steuerbare Bremsvorrichtung (BK102) gesteuert wird, um sich in dem Bremsverriegelungszustand zu befinden, und die elektrische Maschine mit Doppelantrieb (EM100) als die Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen entsprechender interaktiver Vorgänge mit der Dämpfung der externen Last oder der extern eingegebenem kinetische Drehenergie betrieben, die durch die Eingabe-/Ausgabedrehwelle (S101) und die muffenartige Drehwelle (AS101) aufrechterhalten wird;
-- Wenn die steuerbare Bremsvorrichtung (BK101) und die steuerbare Bremsvorrichtung (BK102) beide gesteuert werden, um sich in dem Bremsverriegelungszustand zu befinden, befinden sich die Beziehungen zwischen der Eingabe-/Ausgabedrehwelle (S101), der Ausgabe-/Eingabedrehwelle (S102) und der muffenartigen Drehwelle (AS101) alle in dem Bremsverriegelungszustand;
Die interaktiven Vorgänge der entsprechenden Funktion, die durch die erwähnte elektrische Maschine mit Doppelantrieb (EM100) durchgeführt werden, beinhalten das Empfangen der Antriebssteuerung von extern eingegebener elektrischer Energie, um als die Funktion des Motors zum individuellen Antreiben der Last oder Arbeiten mit der extern eingegebenen kinetischen Drehenergie zum gemeinsamen Antreiben der Last in Betrieb zu sein;
Die interaktiven Vorgänge der entsprechenden Funktion, die durch die erwähnte elektrische Maschine mit Doppelantrieb (EM100) durchgeführt werden, beinhalten das Empfangen des Antreibens der extern eingegebenen kinetischen Drehenergie oder des Antreibens der kinetischen Energie der Lastträgheit, um als die Funktion des Stromgenerators betrieben zu werden, um die elektrische Energie auszugeben, um die externe elektrische Last anzutreiben oder die Speichervorrichtung der externen elektrischen Energie aufzuladen.

4. Elektrische Maschine mit Doppelantrieb, die das steuerbare Planetengetriebe aufweist, wobei ein inneres Drehteil einer elektrischen Maschine (EM101) und ein äußeres Drehteil einer elektrischen Maschine (EM102) der elektrischen Maschine mit Doppelantrieb (EM100) jeweils mit zwei der drei Ausgabe-/Eingabeenden des Planetengetriebes (DG101) kombiniert sind, das ein Sonnenrad (W101), ein äußeres ringförmiges Rad (W102) und ein Planetenrad (W103) umfasst, wobei eine muffenartige Drehwelle (AS101), die eine Eingabe-/Ausgabedrehwelle (S101) ummantelt, die als ein Ausgabe-/Eingabeende dient, bereitgestellt ist, wobei eine Ausgabe-/Eingabedrehwelle (S102) ebenso bereitgestellt ist, wobei die Eingabe-/Ausgabedrehwelle (S101) oder die Ausgabe-/Eingabewelle (S102) mit einer Aktionsseite einer entsprechenden steuerbaren Bremsvorrichtung verbunden ist und die andere Aktionsseite der steuerbaren Bremsvorrichtung mit einem Gehäuse (H100) verbunden ist; wobei durch Steuern der steuerbaren Bremsvorrichtung, um das Verriegeln oder Freigeben der Bremse durchzuführen, den Vorgängen der Funktion der Übersetzung des Verbindens der Übersetzung oder des Freigebens zwischen der Eingabe-/Ausgabedrehwelle (S101), der Ausgabe-/Eingabedrehwelle (S102) und der muffenartigen Drehwelle (AS101) ermöglicht wird, gesteuert zu werden, und interaktiven Vorgängen zwischen der elektrischen Maschine mit Doppelantrieb (EM100) und den Ausgabe-/Eingabeenden ebenso ermöglicht wird, gesteuert zu werden,
wobei die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, als ein Ausgabe-/Eingabeende dient, wobei das äußere ringförmige Rad (W102) mit dem äußeren Drehteil der elektrischen Maschine (EM102) kombiniert ist und mit der muffenartigen Drehwelle (AS101) kombiniert ist, wobei die muffenartige Drehwelle (AS101), die die Drehwelle (S101) ummantelt, als ein Ausgabe-/Eingabeende dient, wobei der Kipphebel (A101), der durch das Planetenrad (W103) des Planetengetriebes (DG101) verknüpft ist, zum Antreiben der Ausgabe-/Eingabedrehwelle (S102) bereitgestellt ist und die Ausgabe-/Eingabedrehwelle (S102) oder der Kipphebel (A101) mit einer Aktionsseite der steuerbaren Bremsvorrichtung (BK102) verbunden ist, während die andere Aktionsseite der steuerbaren Bremsvorrichtung (BK102) in dem Gehäuse (H100) fixiert ist, wobei:
-- Planetengetriebe (DG101): dargestellt durch ein Sonnenrad (W101) und ein äußeres ringförmiges Rad (W102) und wenigstens ein Planetenrad (W103), und das durch Zahnräder, die miteinander in Eingriff stehen, oder durch Reibungsräder, die gegenseitig Reibung durchführen, Übersetzungen beinhaltet, um eine Funktion des Planetengetriebes auszubilden, und durch die Eingabe-/Ausgabedrehwelle (S101), die Ausgabe-/Eingabedrehwelle (S102), den Kipphebel (A101), die muffenartige Drehwelle (AS101) und ein Lager strukturiert ist, sowie mit einer Hülle installiert ist, um in dem Gehäuse (H100) kombiniert zu sein;
-- Kipphebel (A101): weist ein Ende auf, das bereitgestellt ist, um dem Planetenrad (W103) zu ermöglichen, sich zu drehen und verknüpfen, und wobei das andere Ende mit der Ausgabe-/Eingabedrehwelle (S102) verbunden ist;
-- Steuerbare Bremsvorrichtung (BK102): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird, und zwei steuerbare Aktionsseiten für die Vorgänge eines Bremsverriegelungszustands für den Eingriff oder eines Freigabezustands für die Trennung aufweist, wobei eine der Aktionsseiten mit der Ausgabe-/Eingabedrehwelle (S102) oder dem Kipphebel (A101) verbunden ist und die andere Aktionsseite in dem Gehäuse (H100) fixiert ist;
-- Elektrische Maschine mit Doppelantrieb (EM 100): dargestellt durch eine Gleichstrom- oder Wechselstrom-, Bürsten- oder Bürstenlos-, synchrone oder nicht synchrone elektrische Maschine mit Doppelantrieb, die ein inneres Drehteil der elektrischen Maschine (EM101) und ein äußeres Drehteil der elektrischen Maschine (EM102) aufweist und mit Endabdeckungen, Lagern und zugehörigen elektrischen Leitungsvorrichtungen installiert ist, die verwendet werden, um elektrische Energie einzuspeisen, wobei das innere Drehteil der elektrischen Maschine (EM101) und das äußere Drehteil der elektrischen Maschine (EM102) koaxial gedreht werden, wobei das innere Drehteil der elektrischen Maschine (EM101) mit der Eingabe-/Ausgabedrehwelle (S101) kombiniert ist und das äußere Drehteil der elektrischen Maschine (EM102) mit dem äußeren ringförmigen Rad (W102) kombiniert ist;
-- Die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, dient als ein Ausgabe-/Eingabeende, wobei das äußere ringförmige Rad (W102) mit dem äußeren Drehteil der elektrischen Maschine (EM102) kombiniert ist und mit der muffenartigen Drehwelle (AS101) kombiniert ist und die muffenartige Drehwelle (AS101), die auf der Eingabe-/Ausgabedrehwelle (S101) gedreht wird und diese ummantelt, als ein Ausgabe-/Eingabeende dient;
-- Der Kipphebel (A101), der durch das Planetenrad (W103) des Planetengetriebes (DG101) verknüpft ist, ist zum Antreiben der Ausgabe-/Eingabedrehwelle (S102) bereitgestellt, und die Ausgabe-/Eingabedrehwelle (A101) oder der Kipphebel (A101) ist mit einer Aktionsseite der steuerbaren Bremsvorrichtung verbunden (BK102), während die andere Aktionsseite der steuerbaren Bremsvorrichtung (BK102) in dem Gehäuse (H100) fixiert ist;
Die Vorgänge beinhalten eine oder mehrere der folgenden Funktionen:
-- Wenn die steuerbare Bremsvorrichtung (BK102) gesteuert wird, um sich in dem Freigabezustand zu befinden, und die elektrische Maschine mit Doppelantrieb (EM100) nicht als die Funktion der elektrischen Maschinerie betrieben wird, befinden sich die Übersetzungsbeziehungen zwischen der Eingabe-/Ausgabedrehwelle (S101), der muffenartigen Drehwelle (AS101) und der Ausgabe-/Eingabedrehwelle (S102) in dem Freigabezustand, der die Leerlaufdrehung ermöglicht;
-- Wenn die steuerbare Bremsvorrichtung (BK102) gesteuert wird, um sich in dem Freigabezustand zu befinden, und die elektrische Maschine mit Doppelantrieb (EM100) als die Funktion der elektronischen Maschinerie betrieben wird, werden die entsprechenden interaktiven Vorgänge der Funktion des Stromgenerators oder der Funktion des Motors zwischen dem inneren Drehteil der elektrischen Maschine (EM101) und dem äußeren Drehteil der elektrischen Maschine (EM102) gemäß der Dämpfung der externen Last oder des Drehmoments, der Drehzahl und der Drehrichtung der extern eingegebenen kinetischen Drehenergie durchgeführt, die durch die Eingabe-/Ausgabedrehwelle (S101), die Ausgabe-/Eingabedrehwelle (S102) und die muffenartige Drehwelle (AS101) aufrechterhalten wird;
-- Wenn die steuerbare Bremsvorrichtung (BK102) gesteuert wird, um sich in dem Bremsverriegelungszustand zu befinden, und die elektrische Maschine mit Doppelantrieb (EM100) nicht als die Funktion der elektrischen Maschinerie betrieben wird, befindet sich die Übersetzungsbeziehung zwischen der Eingabe-/Ausgabedrehwelle (S101) und der muffenartigen Drehwelle (AS101) in einer Verbindungsbeziehung, die die Übersetzung ermöglicht;
-- Wenn die steuerbare Bremsvorrichtung (BK102) gesteuert wird, um sich in dem Bremsverriegelungszustand zu befinden, und die elektrische Maschine mit Doppelantrieb (EM100) als die Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen interaktiver Vorgänge gemäß der Dämpfung der externen Last oder der extern eingegebenen kinetischen Drehenergie betrieben, die durch die Eingabe-/Ausgabedrehwelle (S101) und die muffenartige Drehwelle (AS101) aufrechterhalten wird;
Die interaktiven Vorgänge der entsprechenden Funktion, die durch die erwähnte elektrische Maschine mit Doppelantrieb (EM100) durchgeführt werden, beinhalten das Empfangen der Antriebssteuerung von extern eingegebener elektrischer Energie, um als die Funktion des Motors zum individuellen Antreiben der Last oder Arbeiten mit der extern eingegebenen kinetischen Drehenergie zum gemeinsamen Antreiben der Last in Betrieb zu sein;
Die interaktiven Vorgänge der entsprechenden Funktion, die durch die erwähnte elektrische Maschine mit Doppelantrieb (EM100) durchgeführt werden, beinhalten das Empfangen des Antreibens der extern eingegebenen kinetischen Drehenergie oder des Antreibens der kinetischen Energie der Lastträgheit, um als die Funktion des Stromgenerators betrieben zu werden, um die elektrische Energie auszugeben, um die externe elektrische Last anzutreiben oder die Speichervorrichtung der externen elektrischen Energie aufzuladen.

5. Elektrische Maschine mit Doppelantrieb, die das steuerbare Planetengetriebe aufweist, wobei ein inneres Drehteil einer elektrischen Maschine (EM101) und ein äußeres Drehteil einer elektrischen Maschine (EM102) der elektrischen Maschine mit Doppelantrieb (EM100) jeweils mit zwei der drei Ausgabe-/Eingabeenden eines Planetengetriebes (DG101) kombiniert sind, das ein Sonnenrad (W101), ein äußeres ringförmiges Rad (W102) und ein Planetenrad (W103) umfasst, wobei eine muffenartige Drehwelle (AS101), die eine Eingabe-/Ausgabedrehwelle (S101) ummantelt, die als ein Ausgabe-/Eingabeende dient, bereitgestellt ist, wobei eine Ausgabe-/Eingabedrehwelle (S102) ebenso bereitgestellt ist, wobei die Eingabe-/Ausgabedrehwelle (S101) oder die Ausgabe-/Eingabewelle (S102) mit einer Aktionsseite einer entsprechenden steuerbaren Bremsvorrichtung verbunden ist und die andere Aktionsseite der steuerbaren Bremsvorrichtung mit einem Gehäuse (H100) verbunden ist; wobei durch Steuern der steuerbaren Bremsvorrichtung, um das Verriegeln oder Freigeben der Bremse durchzuführen, den Vorgängen der Funktion der Übersetzung des Verbindens der Übersetzung oder des Freigebens zwischen der Eingabe-/Ausgabedrehwelle (S101), der Ausgabe-/Eingabedrehwelle (S102) und der muffenartigen Drehwelle (AS101) ermöglicht wird, gesteuert zu werden, und interaktiven Vorgängen zwischen der elektrischen Maschine mit Doppelantrieb (EM100) und den Ausgabe-/Eingabeenden ebenso ermöglicht wird, gesteuert zu werden,
wobei die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, als ein Ausgabe-/Eingabeende dient und zum Verbinden mit einer Aktionsseite der steuerbaren Bremsvorrichtung (BK103) bereitgestellt ist, während die andere Aktionsseite der steuerbaren Bremsvorrichtung (BK103) in dem Gehäuse (H100) fixiert ist, wobei das Planetengetriebe (DG101) ebenso in dem Gehäuse (H100) fixiert ist, wobei das äußere ringförmige Rad (W102) des Planetengetriebes (DG101) mit dem äußeren Drehteil der elektrischen Maschine (EM102) und der muffenartigen Drehwelle (AS101) kombiniert ist, wobei die muffenartige Drehwelle (AS101) als ein Ausgabe-/Eingabeende dient und das Planetenrad (W103) des Planetengetriebes (DG101) zum Verknüpfen des Kipphebels (A101) und Antreiben der Ausgabe-/Eingabedrehwelle (S102) bereitgestellt ist, wobei:
-- Planetengetriebe (DG101): dargestellt durch ein Sonnenrad (W101) und ein äußeres ringförmiges Rad (W102) und wenigstens ein Planetenrad (W103), und das durch Zahnräder, die miteinander in Eingriff stehen, oder durch Reibungsräder, die gegenseitig Reibung durchführen, Übersetzungen beinhaltet, um eine Funktion des Planetengetriebes auszubilden, und durch die Eingabe-/Ausgabedrehwelle (S101), die Ausgabe-/Eingabedrehwelle (S102), den Kipphebel (A101), die muffenartige Drehwelle (AS101) und ein Lager strukturiert ist, sowie mit einer Hülle installiert ist, um in dem Gehäuse (H100) kombiniert zu sein;
-- Kipphebel (A101): weist ein Ende auf, das bereitgestellt ist, um dem Planetenrad (W103) zu ermöglichen, sich zu drehen und verknüpfen, und wobei das andere Ende mit der Ausgabe-/Eingabedrehwelle (S102) verbunden ist;
-- Steuerbare Bremsvorrichtung (BK103): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird, und zwei steuerbare Aktionsseiten für die Vorgänge eines Bremsverriegelungszustands für den Eingriff oder eines Freigabezustands für die Trennung aufweist, wobei eine der Aktionsseiten mit der Eingabe-/Ausgabedrehwelle (S101) verbunden ist und die andere Aktionsseite in dem Gehäuse (H100) fixiert ist;
-- Elektrische Maschine mit Doppelantrieb (EM 100): dargestellt durch eine Gleichstrom- oder Wechselstrom-, Bürsten- oder Bürstenlos-, synchrone oder nicht synchrone elektrische Maschine mit Doppelantrieb, die ein inneres Drehteil der elektrischen Maschine (EM101) und ein äußeres Drehteil der elektrischen Maschine (EM102) aufweist und mit Endabdeckungen, Lagern und zugehörigen elektrischen Leitungsvorrichtungen installiert ist, die verwendet werden, um elektrische Energie einzuspeisen, wobei das innere Drehteil der elektrischen Maschine (EM101) und das äußere Drehteil der elektrischen Maschine (EM102) koaxial gedreht werden, wobei das innere Drehteil der elektrischen Maschine (EM101) mit der Eingabe-/Ausgabedrehwelle (S101) kombiniert ist und das äußere Drehteil der elektrischen Maschine (EM102) mit dem äußeren ringförmigen Rad (W102) kombiniert ist;
-- Die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, dient als ein Ausgabe-/Eingabeende und ist zum Verbinden mit einer Aktionsseite der steuerbaren Bremsvorrichtung (BK103) bereitgestellt, während die andere Aktionsseite der steuerbaren Bremsvorrichtung (BK103) in dem Gehäuse (H100) fixiert ist;
-- Das äußere ringförmige Rad (W102) des Planetengetriebes (DG101) ist mit dem äußeren Drehteil der elektrischen Maschine (EM102) kombiniert und ist mit der muffenartigen Drehwelle (AS101) kombiniert, wobei die muffenartige Drehwelle (AS101), die auf der Eingabe-/Ausgabedrehwelle (S101) gedreht wird und diese ummantelt, als ein Ausgabe-/Eingabeende dient, wobei das Planetenrad (W103) des Planetengetriebes (DG101) zum Verknüpfen des Kipphebels (A101) und Antreiben der Ausgabe-/Eingabedrehwelle (S102) bereitgestellt ist und die Eingabe-/Ausgabedrehwelle (S101), die mit dem Sonnenrad (W101) kombiniert ist, ebenso als ein Ausgabe-/Eingabeende dient;
Die Vorgänge beinhalten eine oder mehrere der folgenden Funktionen:
-- Wenn die steuerbare Bremsvorrichtung (BK103) gesteuert wird, um sich in dem Freigabezustand zu befinden, und die elektrische Maschine mit Doppelantrieb (EM100) nicht als die Funktion der elektrischen Maschinerie betrieben wird, befindet sich die Übersetzungsbeziehung zwischen der Eingabe-/Ausgabedrehwelle (S101), der muffenartigen Drehwelle (AS101) und der Ausgabe-/Eingabedrehwelle (S102) in dem Freigabezustand, der die Leerlaufdrehung ermöglicht;
-- Wenn die steuerbare Bremsvorrichtung (BK103) gesteuert wird, um sich in dem Freigabezustand zu befinden, und die elektrische Maschine mit Doppelantrieb (EM100) als die Funktion der elektrischen Maschinerie betrieben wird, werden die entsprechenden interaktiven Vorgänge der Funktion des Stromgenerators oder der Funktion des Motors entsprechend zwischen dem inneren Drehteil der elektrischen Maschine (EM101) und dem äußeren Drehteil der elektrischen Maschine (EM102) gemäß der Dämpfung der externen Last oder des Drehmoments, der Drehzahl und der Drehrichtung der extern eingegebenen kinetischen Drehenergie durchgeführt, die durch die Eingabe-/Ausgabedrehwelle (S101), die Ausgabe-/Eingabedrehwelle (S102) und die muffenartige Drehwelle (AS101) aufrechterhalten wird;
-- Wenn die steuerbare Bremsvorrichtung (BK103) gesteuert wird, um sich in dem Bremsverriegelungszustand zu befinden, und die elektrische Maschine mit Doppelantrieb (EM100) nicht als die Funktion der elektrischen Maschinerie betrieben wird, befindet sich die Übersetzungsbeziehung zwischen der muffenartigen Drehwelle (AS101) und der Ausgabe-/Eingabedrehwelle (S102) in einer Verbindungsbeziehung, die die Übersetzung ermöglicht;
-- Wenn die steuerbare Bremsvorrichtung (BK103) gesteuert wird, um sich in dem Bremsverriegelungszustand zu befinden, und die elektrische Maschine mit Doppelantrieb (EM100) als die Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen interaktiver Vorgänge gemäß der Dämpfung der externen Last oder der extern eingegebenen kinetischen Drehenergie betrieben, die durch die muffenartige Drehwelle (AS101) und die Ausgabe-/Eingabedrehwelle (S102) aufrechterhalten wird;
Die interaktiven Vorgänge der entsprechenden Funktion, die durch die erwähnte elektrische Maschine mit Doppelantrieb (EM100) durchgeführt werden, beinhalten das Empfangen der Antriebssteuerung von extern eingegebener elektrischer Energie, um als die Funktion des Motors zum individuellen Antreiben der Last oder Arbeiten mit der extern eingegebenen kinetischen Drehenergie zum gemeinsamen Antreiben der Last in Betrieb zu sein;
Die interaktiven Vorgänge der entsprechenden Funktion, die durch die erwähnte elektrische Maschine mit Doppelantrieb (EM 100) durchgeführt werden, beinhalten das Empfangen des Antreibens der extern eingegebenen kinetischen Drehenergie oder des Antreibens der kinetischen Energie der Lastträgheit, um als die Funktion des Stromgenerators betrieben zu werden, um die elektrische Energie auszugeben, um die externe elektrische Last anzutreiben oder die Speichervorrichtung der externen elektrischen Energie aufzuladen.

6. Elektrische Maschine mit Doppelantrieb, die das steuerbare Planetengetriebe aufweist, wobei ein inneres Drehteil einer elektrischen Maschine (EM101) und ein äußeres Drehteil einer elektrischen Maschine (EM102) der elektrischen Maschine mit Doppelantrieb (EM100) jeweils mit zwei der drei Ausgabe-/Eingabeenden eines Planetengetriebes (DG101) kombiniert sind, das ein Sonnenrad (W101), ein äußeres ringförmiges Rad (W102) und ein Planetenrad (W103) umfasst, wobei eine muffenartige Drehwelle (AS101), die eine Eingabe-/Ausgabedrehwelle (S101) ummantelt, die als ein Ausgabe-/Eingabeende dient, bereitgestellt ist, wobei eine Ausgabe-/Eingabedrehwelle (S102) ebenso bereitgestellt ist, wobei die Eingabe-/Ausgabedrehwelle (S101) oder die Ausgabe-/Eingabewelle (S102) mit einer Aktionsseite einer entsprechenden steuerbaren Bremsvorrichtung verbunden ist und die andere Aktionsseite der steuerbaren Bremsvorrichtung mit einem Gehäuse (H100) verbunden ist; wobei durch Steuern der steuerbaren Bremsvorrichtung, um das Verriegeln oder Freigeben der Bremse durchzuführen, den Vorgängen der Funktion der Übersetzung des Verbindens der Übersetzung oder des Freigebens zwischen der Eingabe-/Ausgabedrehwelle (S101), der Ausgabe-/Eingabedrehwelle (S102) und der muffenartigen Drehwelle (AS101) ermöglicht wird, gesteuert zu werden, und interaktiven Vorgängen zwischen der elektrischen Maschine mit Doppelantrieb (EM100) und den Ausgabe-/Eingabeenden ebenso ermöglicht wird, gesteuert zu werden,
wobei die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, als ein Ausgabe-/Eingabeende dient und zum Verbinden mit einer Aktionsseite der steuerbaren Bremsvorrichtung (BK103) bereitgestellt ist, während die andere Aktionsseite der steuerbaren Bremsvorrichtung (BK103) in dem Gehäuse (H100) fixiert ist, wobei das Planetengetriebe (DG101) ebenso in dem Gehäuse (H100) fixiert ist, wobei das äußere ringförmige Rad (W102) des Planetengetriebes (DG101) mit dem äußeren Drehteil der elektrischen Maschine (EM102) kombiniert ist und mit der muffenartigen Drehwelle (AS101) kombiniert ist, wobei die muffenartige Drehwelle (AS101), die auf der Eingabe-/Ausgabedrehwelle (S101) gedreht wird und diese ummantelt, als ein Ausgabe-/Eingabeende dient, wobei das Planetenrad (W103) des Planetengetriebes (DG101) zum Verknüpfen des Kipphebels (A101) und Antreiben der Ausgabe-/Eingabedrehwelle (S102) bereitgestellt ist und die Ausgabe-/Eingabedrehwelle (S102) oder der Kipphebel (A101) mit einer Aktionsseite der steuerbaren Bremsvorrichtung (BK102) verbunden ist, während die andere Aktionsseite der steuerbaren Bremsvorrichtung (BK102) in dem Gehäuse (H100) fixiert ist, wobei:
-- Planetengetriebe (DG101): dargestellt durch ein Sonnenrad (W101) und ein äußeres ringförmiges Rad (W102) und wenigstens ein Planetenrad (W103), und das durch Zahnräder, die miteinander in Eingriff stehen, oder durch Reibungsräder, die gegenseitig Reibung durchführen, Übersetzungen beinhaltet, um eine Funktion des Planetengetriebes auszubilden, und durch die Eingabe-/Ausgabedrehwelle (S101), die Ausgabe-/Eingabedrehwelle (S102), den Kipphebel (A101), die muffenartige Drehwelle (AS101) und ein Lager strukturiert ist, sowie mit einer Hülle installiert ist, um in dem Gehäuse (H100) kombiniert zu sein;
-- Kipphebel (A101): weist ein Ende auf, das bereitgestellt ist, um dem Planetenrad (W103) zu ermöglichen, sich zu drehen und verknüpfen, und wobei das andere Ende mit der Ausgabe-/Eingabedrehwelle (S102) verbunden ist;
-- Steuerbare Bremsvorrichtung (BK102): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird, und zwei steuerbare Aktionsseiten für die Vorgänge eines Bremsverriegelungszustands für den Eingriff oder eines Freigabezustands für die Trennung aufweist, wobei eine der Aktionsseiten mit der Ausgabe-/Eingabedrehwelle (S102) oder dem Kipphebel (A101) verbunden ist und die andere Aktionsseite in dem Gehäuse (H100) fixiert ist;
-- Steuerbare Bremsvorrichtung (BK103): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird, und zwei steuerbare Aktionsseiten für die Vorgänge eines Bremsverriegelungszustands für den Eingriff oder eines Freigabezustands für die Trennung aufweist, wobei eine der Aktionsseiten mit der Eingabe-/Ausgabedrehwelle (S101) verbunden ist und die andere Aktionsseite in dem Gehäuse (H100) fixiert ist;
-- Elektrische Maschine mit Doppelantrieb (EM 100): dargestellt durch eine Gleichstrom- oder Wechselstrom-, Bürsten- oder Bürstenlos-, synchrone oder nicht synchrone elektrische Maschine mit Doppelantrieb, die ein inneres Drehteil der elektrischen Maschine (EM101) und ein äußeres Drehteil der elektrischen Maschine (EM102) aufweist und mit Endabdeckungen, Lagern und zugehörigen elektrischen Leitungsvorrichtungen installiert ist, die verwendet werden, um elektrische Energie einzuspeisen, wobei das innere Drehteil der elektrischen Maschine (EM101) und das äußere Drehteil der elektrischen Maschine (EM102) koaxial gedreht werden, wobei das innere Drehteil der elektrischen Maschine (EM101) mit der Eingabe-/Ausgabedrehwelle (S101) kombiniert ist und das äußere Drehteil der elektrischen Maschine (EM102) mit dem äußeren ringförmigen Rad (W102) kombiniert ist;
-- Die Eingabe-/Ausgabedrehwelle (S101), die durch das Sonnenrad (W101) des Planetengetriebes (DG101) und das innere Drehteil der elektrischen Maschine (EM101) der elektrischen Maschine mit Doppelantrieb (EM100) gemeinsam genutzt wird, dient als ein Ausgabe-/Eingabeende und ist zum Verbinden mit einer Aktionsseite der steuerbaren Bremsvorrichtung (BK103) bereitgestellt, während die andere Aktionsseite der steuerbaren Bremsvorrichtung (BK103) in dem Gehäuse (H100) fixiert ist; wobei der Kipphebel (A101), der durch das Planetenrad (W103) des Planetengetriebes (DG101) verknüpft ist, mit der Ausgabe-/Eingabedrehwelle (S102) kombiniert ist, um als ein Ausgabe-/Eingabeende zu dienen, wobei die Ausgabe-/Eingabedrehwelle (S102) oder der Kipphebel (A101) mit einer Aktionsseite der steuerbaren Bremsvorrichtung (BK102) verbunden ist, während die andere Aktionsseite der steuerbaren Bremsvorrichtung (BK102) in dem Gehäuse (H100) fixiert ist, wobei das äußere ringförmige Rad (W102) mit dem äußeren Drehteil der elektrischen Maschine (EM102) kombiniert ist und mit der muffenartigen Drehwelle (AS101) kombiniert ist und wobei die muffenartige Drehwelle (AS101), die auf der Eingabe-/Ausgabedrehwelle (S101) gedreht wird und diese ummantelt, als ein Ausgabe-/Eingabeende dient;
Die Vorgänge beinhalten eine oder mehrere der folgenden Funktionen:
-- Wenn die steuerbare Bremsvorrichtung (BK102) und die steuerbare Bremsvorrichtung (BK103) beide gesteuert werden, um sich in dem Freigabezustand zu befinden, und die elektrische Maschine mit Doppelantrieb (EM100) nicht als die Funktion der elektrischen Maschinerie betrieben wird, befinden sich die Übersetzungsbeziehungen zwischen der Eingabe-/Ausgabedrehwelle (S101), der Ausgabe-/Eingabedrehwelle (S102) und der muffenartigen Drehwelle (AS101) in dem Freigabezustand, der die Leerlaufdrehung ermöglicht;
-- Wenn die steuerbare Bremsvorrichtung (BK102) und die steuerbare Bremsvorrichtung (BK103) beide gesteuert werden, um sich in dem Freigabezustand zu befinden, und die elektrische Maschine mit Doppelantrieb (EM100) als die Funktion der elektrischen Maschinerie betrieben wird, wird der entsprechende interaktive Vorgang der Funktion des Stromgenerators oder der Funktion des Motors entsprechend zwischen dem inneren Drehteil der elektrischen Maschine (EM101) und dem äußeren Drehteil der elektrischen Maschine (EM102) gemäß der Dämpfung der externen Last oder des Drehmoments, der Drehzahl und der Drehrichtung der extern eingegebenen kinetischen Drehenergie durchgeführt, die durch die Eingabe-/Ausgabedrehwelle (S101), die Ausgabe-/Eingabedrehwelle (S102) und die muffenartige Drehwelle (AS101) aufrechterhalten wird;
-- Wenn die steuerbare Bremsvorrichtung (BK103) gesteuert wird, um sich in dem Bremsverriegelungszustand zu befinden, und die steuerbare Bremsvorrichtung (BK102) gesteuert wird, um sich in dem Freigabezustand zu befinden, und die elektrische Maschine mit Doppelantrieb (EM 100) nicht als die Funktion der elektrischen Maschinerie betrieben wird, befindet sich die Übersetzungsbeziehung zwischen der muffenartigen Drehwelle (AS101) und der Ausgabe-/Eingabedrehwelle (S102) in einer Verbindungsbeziehung, die die Übersetzung ermöglicht;
-- Wenn die steuerbare Bremsvorrichtung (BK103) gesteuert wird, um sich in dem Bremsverriegelungszustand zu befinden, und die steuerbare Bremsvorrichtung (BK102) gesteuert wird, um sich in dem Freigabezustand zu befinden, und die elektrische Maschine mit Doppelantrieb (EM100) mit der Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen entsprechender interaktiver Vorgänge mit der Dämpfung der externen Last oder der extern eingegebenen kinetische Drehenergie betrieben, die durch die muffenartige Drehwelle (AS101) und die Ausgabe-/Eingabedrehwelle (S102) aufrechterhalten wird;
-- Wenn die steuerbare Bremsvorrichtung (BK103) gesteuert wird, um sich in dem Freigabezustand zu befinden, und die steuerbare Bremsvorrichtung (BK102) gesteuert wird, um sich in dem Bremsverriegelungszustand zu befinden, und die elektrische Maschine mit Doppelantrieb (EM 100) nicht als die Funktion der elektrischen Maschinerie betrieben wird, befindet sich die Übersetzungsbeziehung zwischen der Eingabe-/Ausgabedrehwelle (S101) und der muffenartigen Drehwelle (AS101) in einer Verbindungsbeziehung, die die Übersetzung ermöglicht;
-- Wenn die steuerbare Bremsvorrichtung (BK103) gesteuert wird, um sich in dem Freigabezustand zu befinden, und die steuerbare Bremsvorrichtung (BK102) gesteuert wird, um sich in dem Bremsverriegelungszustand zu befinden, und die elektrische Maschine mit Doppelantrieb (EM100) als die Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen entsprechender interaktiver Vorgänge mit der Dämpfung der externen Last oder der extern eingegebenem kinetische Drehenergie betrieben, die durch die Eingabe-/Ausgabedrehwelle (S101) und die muffenartige Drehwelle (AS101) aufrechterhalten wird;
-- Wenn die steuerbare Bremsvorrichtung (BK101) und die steuerbare Bremsvorrichtung (BK102) beide gesteuert werden, ume sich in dem Bremsverriegelungszustand zu befinden, befinden sich die Beziehungen zwischen der Eingabe-/Ausgabedrehwelle (S101), der Ausgabe-/Eingabedrehwelle (S102) und der muffenartigen Drehwelle (AS101) alle in dem Bremsverriegelungszustand;
Die interaktiven Vorgänge der entsprechenden Funktion, die durch die erwähnte elektrische Maschine mit Doppelantrieb (EM100) durchgeführt werden, beinhalten das Empfangen der Antriebssteuerung von extern eingegebener elektrischer Energie, um als die Funktion des Motors zum individuellen Antreiben der Last oder Arbeiten mit der extern eingegebenen kinetischen Drehenergie zum gemeinsamen Antreiben der Last in Betrieb zu sein;
Die interaktiven Vorgänge der entsprechenden Funktion, die durch die erwähnte elektrische Maschine mit Doppelantrieb (EM100) durchgeführt werden, beinhalten das Empfangen des Antreibens der extern eingegebenen kinetischen Drehenergie oder des Antreibens der kinetischen Energie der Lastträgheit, um als die Funktion des Stromgenerators betrieben zu werden, um die elektrische Energie auszugeben, um die externe elektrische Last anzutreiben oder die Speichervorrichtung der externen elektrischen Energie aufzuladen.

7. Elektrische Maschine mit Doppelantrieb, die ein steuerbares Planetengetriebe aufweist, wobei ein inneres Drehteil einer elektrischen Maschine (EM101) und ein äußeres Drehteil einer elektrischen Maschine (EM102) der elektrischen Maschine mit Doppelantrieb (EM100) jeweils mit zwei der drei Ausgabe-/Eingabeenden eines Planetengetriebes (DG101) kombiniert sind, das ein Sonnenrad (W101), ein äußeres ringförmiges Rad (W102) und ein Planetenrad (W103) umfasst, wobei eine muffenartige Drehwelle (AS101), die eine Eingabe-/Ausgabedrehwelle (S101) ummantelt, die als ein Ausgabe-/Eingabeende dient, bereitgestellt ist, wobei eine Ausgabe-/Eingabedrehwelle (S102) ebenso bereitgestellt ist, wobei die Eingabe-/Ausgabedrehwelle (S101) oder die Ausgabe-/Eingabewelle (S102) mit einer Aktionsseite einer entsprechenden steuerbaren Bremsvorrichtung verbunden ist und die andere Aktionsseite der steuerbaren Bremsvorrichtung mit einem Gehäuse (H100) verbunden ist; wobei durch Steuern der steuerbaren Bremsvorrichtung, um das Verriegeln oder Freigeben der Bremse durchzuführen, den Vorgängen der Funktion der Übersetzung des Verbindens der Übersetzung oder des Freigebens zwischen der Eingabe-/Ausgabedrehwelle (S101), der Ausgabe-/Eingabedrehwelle (S102) und der muffenartigen Drehwelle (AS101) ermöglicht wird, gesteuert zu werden, und interaktiven Vorgängen zwischen der elektrischen Maschine mit Doppelantrieb (EM100) und den Ausgabe-/Eingabeenden ebenso ermöglicht wird, gesteuert zu werden,
wobei das innere Drehteil der elektrischen Maschine (EM101) der elektrischen Maschine mit Doppelantrieb (EM100) und das Planetenrad (W103) des Planetengetriebes (DG101) und der Kipphebel (A101) auf der Ausgabe-/Eingabedrehwelle (S102) zusammen kombiniert sind, um als ein Ausgabe-/Eingabeende zu dienen, wobei das Sonnenrad (W101) auf der Eingabe-/Ausgabedrehwelle (S101) kombiniert ist, um als ein Ausgabe-/Eingabeende zu dienen, wobei das äußere ringförmige Rad (W102) mit dem äußeren Drehteil der elektrischen Maschine (EM102) kombiniert ist und mit der muffenartigen Drehwelle (AS101) kombiniert ist, wobei die muffenartige Drehwelle (AS101), die die Eingabe-/Ausgabedrehwelle (S101) ummantelt, als eine Ausgabe-/Eingabewelle dient und die Ausgabe-/Eingabedrehwelle (S102) mit einer Aktionsseite der steuerbaren Bremsvorrichtung (BK102) verbunden ist, während die andere Aktionsseite der steuerbaren Bremsvorrichtung (BK102) in dem Gehäuse (H100) fixiert ist, wobei:
-- Planetengetriebe (DG101): dargestellt durch ein Sonnenrad (W101) und ein äußeres ringförmiges Rad (W102) und wenigstens ein Planetenrad (W103) und das durch Zahnräder, die miteinander in Eingriff stehen, oder durch Reibungsräder, die gegenseitig Reibung durchführen, Übersetzungen beinhaltet, um eine Funktion des Planetengetriebes auszubilden, und durch die Eingabe-/Ausgabedrehwelle (S101), die Ausgabe-/Eingabedrehwelle (S102), den Kipphebel (A101), die muffenartige Drehwelle (AS101) und ein Lager strukturiert ist, sowie mit einer Hülle installiert ist, um in dem Gehäuse (H100) kombiniert zu sein;
-- Kipphebel (A101): weist ein Ende auf, das bereitgestellt ist, um dem Planetenrad (W103) zu ermöglichen, sich zu drehen und verknüpfen, und wobei das andere Ende mit dem inneren Drehteil der elektrischen Maschine (EM101) und der Ausgabe-/Eingabedrehwelle (S102) verbunden ist;
-- Steuerbare Bremsvorrichtung (BK102): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird, und zwei steuerbare Aktionsseiten für die Vorgänge eines Bremsverriegelungszustands für den Eingriff oder eines Freigabezustands für die Trennung aufweist, wobei eine der Aktionsseiten mit der Ausgabe-/Eingabedrehwelle (S102) verbunden ist und die andere Aktionsseite in dem Gehäuse (H100) fixiert ist;
-- Elektrische Maschine mit Doppelantrieb (EM 100): dargestellt durch eine Gleichstrom- oder Wechselstrom-, Bürsten- oder Bürstenlos-, synchrone oder nicht synchrone elektrische Maschine mit Doppelantrieb, die ein inneres Drehteil der elektrischen Maschine (EM101) und ein äußeres Drehteil der elektrischen Maschine (EM102) aufweist und mit Endabdeckungen, Lagern und zugehörigen elektrischen Leitungsvorrichtungen installiert ist, die verwendet werden, um elektrische Energie einzuspeisen, wobei das innere Drehteil der elektrischen Maschine (EM101) und das äußere Drehteil der elektrischen Maschine (EM102) koaxial gedreht werden, wobei das innere Drehteil der elektrischen Maschine (EM101) mit der Eingabe-/Ausgabedrehwelle (S101) kombiniert ist und das äußere Drehteil der elektrischen Maschine (EM102) mit dem äußeren ringförmigen Rad (W102) kombiniert ist;
-- Das innere Drehteil der elektrischen Maschine (EM101) der elektrischen Maschine mit Doppelantrieb (EM100) und das Planetenrad (W103) des Planetengetriebes (DG101) und der Kipphebel (A101) sind auf der Ausgabe-/Eingabedrehwelle (S102) zusammen kombiniert, um als ein Ausgabe-/Eingabeende zu dienen, wobei das Sonnenrad (W101), das auf der Eingabe-/Ausgabedrehwelle (S101) kombiniert ist, als ein Ausgabe-/Eingabeende dient, wobei das äußere ringförmige Rad (W102) mit dem äußeren Drehteil der elektrischen Maschine (EM102) kombiniert ist und mit der muffenartigen Drehwelle (AS101) kombiniert ist und die muffenartige Drehwelle (AS101), die auf der Eingabe-/Ausgabedrehwelle (S101) gedreht wird und diese ummantelt, als ein Ausgabe-/Eingabeende dient;
-- Das Planetenrad (W103) des Planetengetriebes (DG101), der Kipphebel (A101) und das innere Drehteil der elektrischen Maschine (EM101) sind auf der Ausgabe-/Eingabedrehwelle (S102) zusammen kombiniert und die Ausgabe-/Eingabedrehwelle (S102) ist mit einer Aktionsseite der steuerbaren Bremsvorrichtung (BK102) verbunden, während die andere Aktionsseite der steuerbaren Bremsvorrichtung (BK102) in dem Gehäuse (H100) fixiert ist;
Die Vorgänge beinhalten eine oder mehrere der folgenden Funktionen:
-- Wenn die steuerbare Bremsvorrichtung (BK102) gesteuert wird, um sich in dem Freigabezustand zu befinden, und die elektrische Maschine mit Doppelantrieb (EM100) nicht als die Funktion der elektrischen Maschinerie betrieben wird, befinden sich die Übersetzungsbeziehungen zwischen der Eingabe-/Ausgabedrehwelle (S101), der muffenartigen Drehwelle (AS101) und der Ausgabe-/Eingabedrehwelle (S102) in dem Freigabezustand, der die Leerlaufdrehung ermöglicht;
-- Wenn die steuerbare Bremsvorrichtung (BK102) gesteuert wird, um sich in dem Freigabezustand zu befinden, und die elektrische Maschine mit Doppelantrieb (EM100) als die Funktion der elektronischen Maschinerie betrieben wird, werden die entsprechenden interaktiven Vorgänge der Funktion des Stromgenerators oder der Funktion des Motors zwischen dem inneren Drehteil der elektrischen Maschine (EM101) und dem äußeren Drehteil der elektrischen Maschine (EM102) gemäß der Dämpfung der externen Last oder des Drehmoments, der Drehzahl und der Drehrichtung der extern eingegebenen kinetischen Drehenergie durchgeführt, die durch die Eingabe-/Ausgabedrehwelle (S101), die Ausgabe-/Eingabedrehwelle (S102) und die muffenartige Drehwelle (AS101) aufrechterhalten wird;
-- Wenn die steuerbare Bremsvorrichtung (BK102) gesteuert wird, um sich in dem Bremsverriegelungszustand zu befinden, und die elektrische Maschine mit Doppelantrieb (EM100) nicht als die Funktion der elektrischen Maschinerie betrieben wird, befindet sich die Übersetzungsbeziehung zwischen der Eingabe-/Ausgabedrehwelle (S101) und der muffenartigen Drehwelle (AS101) in einer Verbindungsbeziehung, die die Übersetzung ermöglicht;
-- Wenn die steuerbare Bremsvorrichtung (BK102) gesteuert wird, um sich in dem Bremsverriegelungszustand zu befinden, und die elektrische Maschine mit Doppelantrieb (EM100) als die Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen interaktiver Vorgänge gemäß der Dämpfung der externen Last oder der extern eingegebenen kinetischen Drehenergie betrieben, die durch die Eingabe-/Ausgabedrehwelle (S101) und die muffenartige Drehwelle (AS101) aufrechterhalten wird;
Die interaktiven Vorgänge der entsprechenden Funktion, die durch die erwähnte elektrische Maschine mit Doppelantrieb (EM100) durchgeführt werden, beinhalten das Empfangen der Antriebssteuerung von extern eingegebener elektrischer Energie, um als die Funktion des Motors zum individuellen Antreiben der Last oder Arbeiten mit der extern eingegebenen kinetischen Drehenergie zum gemeinsamen Antreiben der Last in Betrieb zu sein;
Die interaktiven Vorgänge der entsprechenden Funktion, die durch die erwähnte elektrische Maschine mit Doppelantrieb (EM100) durchgeführt werden, beinhalten das Empfangen des Antreibens der extern eingegebenen kinetischen Drehenergie oder des Antreibens der kinetischen Energie der Lastträgheit, um als die Funktion des Stromgenerators betrieben zu werden, um die elektrische Energie auszugeben, um die externe elektrische Last anzutreiben oder die Speichervorrichtung der externen elektrischen Energie aufzuladen.

8. Elektrische Maschine mit Doppelantrieb, die ein steuerbares Planetengetriebe aufweist, wobei ein inneres Drehteil einer elektrischen Maschine (EM101) und ein äußeres Drehteil einer elektrischen Maschine (EM102) der elektrischen Maschine mit Doppelantrieb (EM100) jeweils mit zwei der drei Ausgabe-/Eingabeenden eines Planetengetriebes (DG101) kombiniert sind, das ein Sonnenrad (W101), ein äußeres ringförmiges Rad (W102) und ein Planetenrad (W103) umfasst, wobei eine muffenartige Drehwelle (AS101), die eine Eingabe-/Ausgabedrehwelle (S101) ummantelt, die als ein Ausgabe-/Eingabeende dient, bereitgestellt wird, wobei eine Ausgabe-/Eingabedrehwelle (S102) ebenso bereitgestellt ist, wobei die Eingabe-/Ausgabedrehwelle (S101) oder die Ausgabe-/Eingabewelle (S102) mit einer Aktionsseite einer entsprechenden steuerbaren Bremsvorrichtung verbunden ist und die andere Aktionsseite der steuerbaren Bremsvorrichtung mit einem Gehäuse (H100) verbunden ist; wobei durch Steuern der steuerbaren Bremsvorrichtung, um das Verriegeln oder Freigeben der Bremse durchzuführen, den Vorgängen der Funktion der Übersetzung des Verbindens der Übersetzung oder des Freigebens zwischen der Eingabe-/Ausgabedrehwelle (S101), der Ausgabe-/Eingabedrehwelle (S102) und der muffenartigen Drehwelle (AS101) ermöglicht wird, gesteuert zu werden, und interaktiven Vorgängen zwischen der elektrischen Maschine mit Doppelantrieb (EM100) und den Ausgabe-/Eingabeenden ebenso ermöglicht wird, gesteuert zu werden,
wobei das innere Drehteil der elektrischen Maschine (EM101) der elektrischen Maschine mit Doppelantrieb (EM100) und das Planetenrad (W103) des Planetengetriebes (DG101) und der Kipphebel (A101) auf der Ausgabe-/ Eingabedrehwelle (S102) zusammen kombiniert sind, um als ein Ausgabe-/Eingabeende zu dienen, wobei das Sonnenrad (W101) auf der Eingabe-/Ausgabedrehwelle (S101) kombiniert ist, um als ein Ausgabe-/Eingabeende zu dienen, wobei die Eingabe-/Ausgabedrehwelle (S101) mit einer Aktionsseite der steuerbaren Bremsvorrichtung (BK103) verbunden ist, während die andere Aktionsseite der steuerbaren Bremsvorrichtung (BK103) in dem Gehäuse (H100) fixiert ist, wobei das Planetengetriebe (DG101) ebenso in dem Gehäuse (H100) fixiert ist, wobei das äußere ringförmige Rad (W102) des Planetengetriebes (DG101) mit dem äußeren Drehteil der elektrischen Maschine (EM102) kombiniert ist und mit der muffenartigen Drehwelle (AS101) kombiniert ist und die muffenartige Drehwelle (AS101) als ein Ausgabe-/Eingabeende dient, wobei:
-- Planetengetriebe (DG101): dargestellt durch ein Sonnenrad (W101) und ein äußeres ringförmiges Rad (W102) und wenigstens ein Planetenrad (W103) und das durch Zahnräder, die miteinander in Eingriff stehen, oder durch Reibungsräder, die gegenseitig Reibung durchführen, Übersetzungen beinhaltet, um eine Funktion des Planetengetriebes auszubilden, und durch die Eingabe-/Ausgabedrehwelle (S101), die Ausgabe-/Eingabedrehwelle (S102), den Kipphebel (A101), die muffenartige Drehwelle (AS101) und ein Lager strukturiert ist, sowie mit einer Hülle installiert ist, um in dem Gehäuse (H100) kombiniert zu sein;
-- Kipphebel (A101): weist ein Ende auf, das bereitgestellt ist, um dem Planetenrad (W103) zu ermöglichen, sich zu drehen und verknüpfen, und wobei das andere Ende mit dem inneren Drehteil der elektrischen Maschine (EM101) und der Ausgabe-/Eingabedrehwelle (S102) verbunden ist;
-- Steuerbare Bremsvorrichtung (BK103): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird und zwei steuerbare Aktionsseiten für die Vorgänge eines Bremsverriegelungszustands für den Eingriff oder eines Freigabezustands für die Trennung aufweist, wobei eine der Aktionsseiten mit der Eingabe-/Ausgabedrehwelle (S101) verbunden ist und die andere Aktionsseite in dem Gehäuse (H100) fixiert ist;
-- Elektrische Maschine mit Doppelantrieb (EM100): dargestellt durch eine Gleichstrom- oder Wechselstrom-, Bürsten- oder Bürstenlos-, synchrone oder nicht synchrone elektrische Maschine mit Doppelantrieb, die ein inneres Drehteil der elektrischen Maschine (EM101) und ein äußeres Drehteil der elektrischen Maschine (EM102) aufweist und mit Endabdeckungen, Lagern und zugehörigen elektrischen Leitungsvorrichtungen installiert ist, die verwendet werden, um elektrische Energie einzuspeisen, wobei das innere Drehteil der elektrischen Maschine (EM101) und das äußere Drehteil der elektrischen Maschine (EM102) koaxial gedreht werden, wobei das innere Drehteil der elektrischen Maschine (EM101) mit der Eingabe-/Ausgabedrehwelle (S101) kombiniert ist und das äußere Drehteil der elektrischen Maschine (EM102) mit dem äußeren ringförmigen Rad (W102) kombiniert ist;
-- Das Sonnenrad (W101) des Planetengetriebes (DG101) ist auf der Eingabe-/Ausgabedrehwelle (S101) kombiniert und die Eingabe-/Ausgabedrehwelle (S101) ist mit einer Aktionsseite der steuerbaren Bremsvorrichtung (BK103) verbunden, während die andere Aktionsseite der steuerbaren Bremsvorrichtung (BK103) in dem Gehäuse (H100) fixiert ist;
-- Das äußere ringförmige Rad (W102) des Planetengetriebes (DG101) ist mit dem äußeren Drehteil der elektrischen Maschine (EM102) kombiniert und ist mit der muffenartigen Drehwelle (AS101) kombiniert, wobei die muffenartige Drehwelle (AS101), die auf der Eingabe-/Ausgabedrehwelle (S101) gedreht wird und diese ummantelt, als ein Ausgabe-/Eingabeende dient und die Eingabe-/Ausgabedrehwelle (S101), die mit dem Sonnenrad (W101) kombiniert ist, ebenso als ein Ausgabe-/Eingabeende dient;
Die Vorgänge beinhalten eine oder mehrere der folgenden Funktionen:
-- Wenn die steuerbare Bremsvorrichtung (BK103) gesteuert wird, um sich in dem Freigabezustand zu befinden, und die elektrische Maschine mit Doppelantrieb (EM100) nicht als die Funktion der elektrischen Maschinerie betrieben wird, befindet sich die Übersetzungsbeziehung zwischen der Eingabe-/Ausgabedrehwelle (S101), der muffenartigen Drehwelle (AS101) und der Ausgabe-/Eingabedrehwelle (S102) in dem Freigabezustand, der die Leerlaufdrehung ermöglicht;
-- Wenn die steuerbare Bremsvorrichtung (BK103) gesteuert wird, um sich in dem Freigabezustand zu befinden, und die elektrische Maschine mit Doppelantrieb (EM100) als die Funktion der elektrischen Maschinerie betrieben wird, werden die entsprechenden interaktiven Vorgänge der Funktion des Stromgenerators oder der Funktion des Motors entsprechend zwischen dem inneren Drehteil der elektrischen Maschine (EM101) und dem äußeren Drehteil der elektrischen Maschine (EM102) gemäß der Dämpfung der externen Last oder des Drehmoments, der Drehzahl und der Drehrichtung der extern eingegebenen kinetischen Drehenergie durchgeführt, die durch die Eingabe-/Ausgabedrehwelle (S101), die Ausgabe-/Eingabedrehwelle (S102) und die muffenartige Drehwelle (AS101) aufrechterhalten wird;
-- Wenn die steuerbare Bremsvorrichtung (BK103) gesteuert wird, um sich in dem Bremsverriegelungszustand zu befinden, und die elektrische Maschine mit Doppelantrieb (EM100) nicht als die Funktion der elektrischen Maschinerie betrieben wird, befindet sich die Übersetzungsbeziehung zwischen der muffenartigen Drehwelle (AS101) und der Ausgabe-/Eingabedrehwelle (S102) in einer Verbindungsbeziehung, die die Übersetzung ermöglicht;
-- Wenn die steuerbare Bremsvorrichtung (BK103) gesteuert wird, um sich in dem Bremsverriegelungszustand zu befinden, und die elektrische Maschine mit Doppelantrieb (EM100) als die Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen interaktiver Vorgänge gemäß der Dämpfung der externen Last oder der extern eingegebenen kinetischen Drehenergie betrieben, die durch die muffenartige Drehwelle (AS101) und die Ausgabe-/Eingabedrehwelle (S102) aufrechterhalten wird;
Die interaktiven Vorgänge der entsprechenden Funktion, die durch die erwähnte elektrische Maschine mit Doppelantrieb (EM100) durchgeführt werden, beinhalten das Empfangen der Antriebssteuerung von extern eingegebener elektrischer Energie, um als die Funktion des Motors zum individuellen Antreiben der Last oder Arbeiten mit der extern eingegebenen kinetischen Drehenergie zum gemeinsamen Antreiben der Last in Betrieb zu sein;
Die interaktiven Vorgänge der entsprechenden Funktion, die durch die erwähnte elektrische Maschine mit Doppelantrieb (EM100) durchgeführt werden, beinhalten das Empfangen des Antreibens der extern eingegebenen kinetischen Drehenergie oder des Antreibens der kinetischen Energie der Lastträgheit, um als die Funktion des Stromgenerators betrieben zu werden, um die elektrische Energie auszugeben, um die externe elektrische Last anzutreiben oder die Speichervorrichtung der externen elektrischen Energie aufzuladen.

9. Elektrische Maschine mit Doppelantrieb, die ein steuerbares Planetengetriebe aufweist, wobei ein inneres Drehteil einer elektrischen Maschine (EM101) und ein äußeres Drehteil einer elektrischen Maschine (EM102) der elektrischen Maschine mit Doppelantrieb (EM100) jeweils mit zwei der drei Ausgabe-/Eingabeenden eines Planetengetriebes (DG101) kombiniert sind, das ein Sonnenrad (W101), ein äußeres ringförmiges Rad (W102) und ein Planetenrad (W103) umfasst, wobei eine muffenartige Drehwelle (AS101), die eine Eingabe-/Ausgabedrehwelle (S101) ummantelt, die als ein Ausgabe-/Eingabeende dient, bereitgestellt ist, wobei eine Ausgabe-/Eingabedrehwelle (S102) ebenso bereitgestellt ist, wobei die Eingabe-/Ausgabedrehwelle (S101) oder die Ausgabe-/Eingabewelle (S102) mit einer Aktionsseite einer entsprechenden steuerbaren Bremsvorrichtung verbunden ist und die andere Aktionsseite der steuerbaren Bremsvorrichtung mit einem Gehäuse (H100) verbunden ist; wobei durch Steuern der steuerbaren Bremsvorrichtung, um das Verriegeln oder Freigeben der Bremse durchzuführen, den Vorgängen der Funktion der Übersetzung des Verbindens der Übersetzung oder des Freigebens zwischen der Eingabe-/Ausgabedrehwelle (S101), der Ausgabe-/Eingabedrehwelle (S102) und der muffenartigen Drehwelle (AS101) ermöglicht wird, gesteuert zu werden, und interaktiven Vorgängen zwischen der elektrischen Maschine mit Doppelantrieb (EM100) und den Ausgabe-/Eingabeenden ebenso ermöglicht wird, gesteuert zu werden,
wobei das innere Drehteil der elektrischen Maschine (EM101) der elektrischen Maschine mit Doppelantrieb (EM100) und das Planetenrad (W103) des Planetengetriebes (DG101) und der Kipphebel (A101) auf der Ausgabe-/Eingabedrehwelle (S102) zusammen kombiniert sind, um als ein Ausgabe-/Eingabeende zu dienen, wobei das Sonnenrad (W101) auf der Eingabe-/Ausgabedrehwelle (S101) kombiniert ist, um als ein Ausgabe-/Eingabeende zu dienen, wobei die Eingabe-/Ausgabedrehwelle (S101) mit einer Aktionsseite der steuerbaren Bremsvorrichtung (BK103) verbunden ist, während die andere Aktionsseite der steuerbaren Bremsvorrichtung (BK103) in dem Gehäuse (H100) fixiert ist, wobei das Planetengetriebe (DG101) ebenso in dem Gehäuse (H100) fixiert ist, wobei das äußere ringförmige Rad (W102) des Planetengetriebes (DG101) mit dem äußeren Drehteil der elektrischen Maschine (EM102) kombiniert ist und mit der muffenartigen Drehwelle (AS101) kombiniert ist, wobei die muffenartige Drehwelle (AS101), die auf der Eingabe-/Ausgabedrehwelle (S101) gedreht wird und diese ummantelt, als ein Ausgabe-/Eingabeede dient, wobei die Ausgabe-/Eingabedrehwelle (S102) mit einer Aktionsseite der steuerbaren Bremsvorrichtung (BK102) verbunden ist, während die andere Aktionsseite der steuerbaren Bremsvorrichtung (BK102) in dem Gehäuse (H100) fixiert ist, wobei:
-- Planetengetriebe (DG101): dargestellt durch ein Sonnenrad (W101) und ein äußeres ringförmiges Rad (W102) und wenigstens ein Planetenrad (W103) und das durch Zahnräder, die miteinander in Eingriff stehen, oder durch Reibungsräder, die gegenseitig Reibung durchführen, Übersetzungen beinhaltet, um eine Funktion des Planetengetriebes auszubilden, und durch die Eingabe-/Ausgabedrehwelle (S101), die Ausgabe-/Eingabedrehwelle (S102), den Kipphebel (A101), die muffenartige Drehwelle (AS101) und ein Lager strukturiert ist, sowie mit einer Hülle installiert ist, um in dem Gehäuse (H100) kombiniert zu sein;
-- Kipphebel (A101): weist ein Ende auf, das bereitgestellt ist, um dem Planetenrad (W103) zu ermöglichen, sich zu drehen und verknüpfen, und wobei das andere Ende mit dem inneren Drehteil der elektrischen Maschine (EM101) und der Ausgabe-/Eingabedrehwelle (S102) verbunden ist;
-- Steuerbare Bremsvorrichtung (BK102): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird und zwei steuerbare Aktionsseiten für die Vorgänge eines Bremsverriegelungszustands für den Eingriff oder eines Freigabezustands für die Trennung aufweist, wobei eine der Aktionsseiten mit der Ausgabe-/Eingabedrehwelle (S102) verbunden ist und die andere Aktionsseite in dem Gehäuse (H100) fixiert ist;
-- Steuerbare Bremsvorrichtung (BK103): dargestellt durch eine Bremsvorrichtung, die durch eine manuelle Kraft oder eine mechanische Kraft oder eine hydraulische Kraft oder eine pneumatische Kraft oder eine elektromagnetische Kraft gesteuert wird und zwei steuerbare Aktionsseiten für die Vorgänge eines Bremsverriegelungszustands für den Eingriff oder eines Freigabezustands für die Trennung aufweist, wobei eine der Aktionsseiten mit der Eingabe-/Ausgabedrehwelle (S101) verbunden ist und die andere Aktionsseite in dem Gehäuse (H100) fixiert ist;
-- Elektrische Maschine mit Doppelantrieb (EM 100): dargestellt durch eine Gleichstrom- oder Wechselstrom-, Bürsten- oder Bürstenlos-, synchrone oder nicht synchrone elektrische Maschine mit Doppelantrieb, die ein inneres Drehteil der elektrischen Maschine (EM101) und ein äußeres Drehteil der elektrischen Maschine (EM102) aufweist und mit Endabdeckungen, Lagern und zugehörigen elektrischen Leitungsvorrichtungen installiert ist, die verwendet werden, um elektrische Energie einzuspeisen, wobei das innere Drehteil der elektrischen Maschine (EM101) und das äußere Drehteil der elektrischen Maschine (EM102) koaxial gedreht werden, wobei das innere Drehteil der elektrischen Maschine (EM101) mit der Ausgabe-/Eingabedrehwelle (S102) kombiniert ist und das äußere Drehteil der elektrischen Maschine (EM102) mit dem äußeren ringförmigen Rad (W102) kombiniert ist;
-- Das innere Drehteil der elektrischen Maschine (EM101) der elektrischen Maschine mit Doppelantrieb (EM100) und das Planetenrad (W103) des Planetengetriebe (DG101) und der Kipphebel (A101) sind auf der Ausgabe-/Eingabedrehwelle (S102) zusammen kombiniert, um als ein Ausgabe-/Eingabeende zu dienen, wobei das Sonnenrad (W101) auf der Eingabe-/Ausgabedrehwelle (S101) kombiniert ist, um als ein Ausgabe-/Eingabeende zu dienen, wobei die Eingabe-/Ausgabedrehwelle (S101) mit einer Aktionsseite der steuerbaren Bremsvorrichtung (BK103) verbunden ist, während die andere Aktionsseite der steuerbaren Bremsvorrichtung (BK103) in dem Gehäuse (H100) fixiert ist; wobei der Kipphebel (A101), der durch das Planetenrad (W103) des Planetengetriebes (DG101) verknüpft ist, mit der Ausgabe-/Eingabedrehwelle (S102) kombiniert ist, um als ein Ausgabe-/Eingabeende zu dienen, wobei die Ausgabe-/Eingabedrehwelle (S102) mit einer Aktionsseite der steuerbaren Bremsvorrichtung (BK102) verbunden ist, während die andere Aktionsseite der steuerbaren Bremsvorrichtung (BK102) in dem Gehäuse (H100) fixiert ist, wobei das äußere ringförmige Rad (W102) mit dem äußeren Drehteil der elektrischen Maschine (EM102) kombiniert ist und mit der muffenartigen Drehwelle (AS101) kombiniert ist und die muffenartige Drehwelle (AS101), die auf der Eingabe-/Ausgabedrehwelle (S101) gedreht wird und diese ummantelt, als ein Ausgabe-/Eingabeende dient;
Die Vorgänge beinhalten eine oder mehrere der folgenden Funktionen:
-- Wenn die steuerbare Bremsvorrichtung (BK102) und die steuerbare Bremsvorrichtung (BK103) beide gesteuert werden, um sich in dem Freigabezustand zu befinden, und die elektrische Maschine mit Doppelantrieb (EM100) nicht als die Funktion der elektrischen Maschinerie betrieben wird, befinden sich die Übersetzungsbeziehungen zwischen der Eingabe-/Ausgabedrehwelle (S101), der Ausgabe-/Eingabedrehwelle (S102) und der muffenartigen Drehwelle (AS101) in dem Freigabezustand, der die Leerlaufdrehung ermöglicht;
-- Wenn die steuerbare Bremsvorrichtung (BK102) und die steuerbare Bremsvorrichtung (BK103) beide gesteuert werden, um sich in dem Freigabezustand zu befinden, und die elektrische Maschine mit Doppelantrieb (EM100) als die Funktion der elektrischen Maschinerie betrieben wird, wird der entsprechende interaktive Vorgang der Funktion des Stromgenerators oder der Funktion des Motors entsprechend zwischen dem inneren Drehteil der elektrischen Maschine (EM101) und dem äußeren Drehteil der elektrischen Maschine (EM102) gemäß der Dämpfung der externen Last oder des Drehmoments, der Drehzahl und der Drehrichtung der extern eingegebenen kinetischen Drehenergie durchgeführt, die durch die Eingabe-/Ausgabedrehwelle (S101), die Ausgabe-/Eingabedrehwelle (S102) und die muffenartige Drehwelle (AS101) aufrechterhalten wird;
-- Wenn die steuerbare Bremsvorrichtung (BK103) gesteuert wird, um sich in dem Bremsverriegelungszustand zu befinden, und die steuerbare Bremsvorrichtung (BK102) gesteuert wird, um sich in dem Freigabezustand zu befinden, und die elektrische Maschine mit Doppelantrieb (EM100) nicht als die Funktion der elektrischen Maschinerie betrieben wird, befindet sich die Übersetzungsbeziehung zwischen der muffenartigen Drehwelle (AS101) und der Ausgabe-/Eingabedrehwelle (S102) in einer Verbindungsbeziehung, die die Übersetzung ermöglicht;
-- Wenn die steuerbare Bremsvorrichtung (BK103) gesteuert wird, um sich in dem Bremsverriegelungszustand zu befinden, und die steuerbare Bremsvorrichtung (BK102) gesteuert wird, um sich in dem Freigabezustand zu befinden, und die elektrische Maschine mit Doppelantrieb (EM100) mit der Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen entsprechender interaktiver Vorgänge mit der Dämpfung der externen Last oder der extern eingegebenen kinetischen Drehenergie betrieben, die durch die muffenartige Drehwelle (AS101) und die Ausgabe-/Eingabedrehwelle (S102) aufrechterhalten wird;
-- Wenn die steuerbare Bremsvorrichtung (BK103) gesteuert wird, um sich in dem Freigabezustand zu befinden, und die steuerbare Bremsvorrichtung (BK102) gesteuert wird, um sich in dem Bremsverriegelungszustand zu befinden, und die elektrische Maschine mit Doppelantrieb (EM100) nicht als die Funktion der elektrischen Maschinerie betrieben wird, befindet sich die Übersetzungsbeziehung zwischen der Eingabe-/Ausgabedrehwelle (S101) und der muffenartigen Drehwelle (AS101) in einer Verbindungsbeziehung, die die Übersetzung ermöglicht;
-- Wenn die steuerbare Bremsvorrichtung (BK103) gesteuert wird, um sich in dem Freigabezustand zu befinden, und die steuerbare Bremsvorrichtung (BK102) gesteuert wird, um sich in dem Bremsverriegelungszustand zu befinden, und die elektrische Maschine mit Doppelantrieb (EM100) als die Funktion der elektrischen Maschinerie betrieben wird, wird zwischen dem inneren Drehteil der elektrischen Maschine (EM101) und dem äußeren Drehteil der elektrischen Maschine (EM102) als die Funktion des Stromgenerators oder die Funktion des Motors zum Durchführen entsprechender interaktiver Vorgänge mit der Dämpfung der externen Last oder der extern eingegebenem kinetische Drehenergie betrieben, die durch die Eingabe-/Ausgabedrehwelle (S101) und die muffenartige Drehwelle (AS101) aufrechterhalten wird;
-- Wenn die steuerbare Bremsvorrichtung (BK101) und die steuerbare Bremsvorrichtung (BK102) beide gesteuert werden, um sich in dem Bremsverriegelungszustand zu befinden, befinden sich die Beziehungen zwischen der Eingabe-/Ausgabedrehwelle (S101), der Ausgabe-/Eingabedrehwelle (S102) und der muffenartigen Drehwelle (AS101) alle in dem Bremsverriegelungszustand;
Die interaktiven Vorgänge der entsprechenden Funktion, die durch die erwähnte elektrische Maschine mit Doppelantrieb (EM100) durchgeführt werden, beinhalten das Empfangen der Antriebssteuerung von extern eingegebener elektrischer Energie, um als die Funktion des Motors zum individuellen Antreiben der Last oder Arbeiten mit der extern eingegebenen kinetischen Drehenergie zum gemeinsamen Antreiben der Last in Betrieb zu sein;
Die interaktiven Vorgänge der entsprechenden Funktion, die durch die erwähnte elektrische Maschine mit Doppelantrieb (EM100) durchgeführt werden, beinhalten das Empfangen des Antreibens der extern eingegebenen kinetischen Drehenergie oder des Antreibens der kinetischen Energie der Lastträgheit, um als die Funktion des Stromgenerators betrieben zu werden, um die elektrische Energie auszugeben, um die externe elektrische Last anzutreiben oder die Speichervorrichtung der externen elektrischen Energie aufzuladen.

## Revendications

1. Machine électrique à double entraînement ayant un train planétaire commandable, dans laquelle une partie de rotation interne d'une machine électrique (EM101) et une partie de rotation externe d'une machine électrique (EM102) de la machine électrique à double entraînement (EM100) sont respectivement combinées avec deux des trois extrémités de sortie/d'entrée d'un train planétaire (DG101) comprenant une roue solaire (W101), une roue annulaire externe (W102) et une roue planétaire (W103), un arbre de rotation de type manchon (AS101) manchonné sur un arbre de rotation d'entrée/de sortie (S101) servant d'extrémité de sortie/d'entrée est fourni, un arbre de rotation de sortie/d'entrée (S102) est également fourni, l'un parmi l'arbre de rotation d'entrée/de sortie (S101) ou l'arbre de sortie/d'entrée (S102) étant relié à un côté d'action d'un dispositif de frein commandable correspondant, et l'autre côté d'action du dispositif de frein commandable étant relié à un carter (H100) ; par la commande du dispositif de frein commandable pour effectuer le verrouillage ou la libération du frein, les manœuvres de fonction de transmission de liaison de transmission ou de libération entre l'arbre de rotation d'entrée/de sortie (S101), l'arbre de rotation de sortie/d'entrée (S102) et l'arbre de rotation de type manchon (AS101) étant activées pour être commandées, et les manœuvres interactives entre la machine électrique à double entraînement (EM100) et les extrémités de sortie/d'entrée étant également activées pour être commandées,
l'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée, un culbuteur (A101) lié par la roue planétaire (W103) étant combiné avec la partie de rotation externe de la machine électrique (EM102) et combiné avec l'arbre de rotation de type manchon (AS 101), l'arbre de rotation de type manchon (AS101) manchonné sur l'arbre de rotation (S101) servant d'extrémité de sortie/d'entrée, la roue annulaire externe (W102) du train planétaire (DG101) étant fournie pour entraîner l'arbre de rotation de sortie/d'entrée (S102), et l'arbre de rotation de sortie/d'entrée (S102) étant relié à un côté d'action du dispositif de frein commandable (BK102) tandis que l'autre côté d'action du dispositif de frein commandable (BK102) est fixé dans le carter (H100) :
- Ensemble de train planétaire (DG101) : constitué d'une roue solaire (W101) et d'une roue annulaire externe (W102) et d'au moins une roue planétaire (W103), et comportant par des engrenages venant en prise les uns avec les autres, ou par des roues de friction effectuant mutuellement des transmissions de friction pour former une fonction de train planétaire, et structuré par l'arbre de rotation (S101), l'arbre de rotation (S102), le culbuteur (A101), l'arbre de rotation de type manchon (AS101) et un palier, ainsi qu'équipé avec un coque à combiner dans le carter (H100) ;
- Culbuteur (A101) : ayant une extrémité fournie pour permettre à la roue planétaire (W103) d'être en rotation et de se lier, et l'autre extrémité s'étendant axialement vers l'arbre de rotation (S101) pour être combinée avec la partie de rotation externe de la machine électrique (EM102) et combinée avec l'arbre de rotation de type manchon (AS101) ;
- Dispositif de frein commandable (BK102) : constitué d'un dispositif de frein commandé par une force manuelle ou une force mécanique ou une force hydraulique ou une force pneumatique ou une force électromagnétique, et ayant deux côtés d'action commandables pour les manœuvres d'un état de verrouillage de frein pour la mise en prise ou d'un état de libération pour la séparation, l'un des côtés d'action étant relié à l'arbre de rotation de sortie/d'entrée (S102), et l'autre côté d'action étant fixé dans le carter (H100) ;
- Machine électrique à double entraînement (EM100) : constituée d'une machine électrique à double entraînement CC ou CA, à balai ou sans balai, synchrone ou non synchrone, ayant une partie de rotation interne de machine électrique (EM101) et une partie de rotation externe de machine électrique (EM102), et équipée de capots d'extrémité, de paliers et de dispositifs de conduction électrique associés utilisés pour introduire de l'énergie électrique, la partie de rotation interne de la machine électrique (EM101) et la partie de rotation externe de la machine électrique (EM102) étant en rotation coaxiale, la partie de rotation interne de la machine électrique (EM101) étant combinée avec l'arbre de rotation d'entrée/de sortie (S101), et la partie de rotation externe de la machine électrique (EM102) étant combinée avec le culbuteur (A101) ;
- L'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée, le culbuteur (A101) lié par la roue planétaire (W103) étant combiné avec la partie de rotation externe de la machine électrique (EM102) et combiné avec l'arbre de rotation de type manchon (AS101) et l'arbre de rotation de type manchon (AS101) mis en rotation et manchonné sur l'arbre de rotation d'entrée/de sortie (S101) servant d'extrémité de sortie/d'entrée ;
- La roue annulaire externe (W102) de l'ensemble de train planétaire (DG101) étant fournie pour entraîner l'arbre de rotation de sortie/d'entrée (S102), et l'arbre de rotation de sortie/d'entrée (S102) étant relié à un côté d'action du dispositif de frein commandable (BK102) tandis que l'autre côté d'action du dispositif de frein commandable (BK102) est fixé dans le carter (H100) ;
Les manœuvres comportant une ou plusieurs de l'une des fonctions suivantes :
- Lorsque le dispositif de frein commandable (BK102) est commandé pour être dans l'état de libération et que la machine électrique à double entraînement (EM100) ne fonctionne pas en tant que fonction de machine électrique, les relations de transmission entre l'arbre de rotation d'entrée/de sortie (S101) l'arbre de rotation de type manchon (AS101) et l'arbre de rotation de sortie/d'entrée (S102) sont dans l'état de libération permettant une rotation au ralenti ;
- Lorsque le dispositif de frein commandable (BK102) est commandé pour être dans l'état de libération et que la machine électrique à double entraînement (EM100) fonctionne en tant que fonction de machine électrique, les manœuvres interactives correspondantes de la fonction de générateur de puissance ou de la fonction de moteur étant par conséquent effectuées entre la partie de rotation interne de la machine électrique (EM101) et la partie de rotation externe de la machine électrique (EM102), selon l'amortissement de la charge extérieure ou du couple de rotation, la vitesse de rotation et le sens de rotation de l'énergie cinétique rotative entrée extérieurement soutenue par l'arbre de rotation d'entrée/de sortie (S101), l'arbre de rotation de sortie/d'entrée (S102) et l'arbre de rotation de type manchon (AS101) ;
- Lorsque le dispositif de frein commandable (BK102) est commandé pour être dans l'état de verrouillage de frein et que la machine électrique à double entraînement (EM100) ne fonctionne pas en tant que fonction de machine électrique, la relation de transmission entre l'arbre de rotation d'entrée/de sortie (S101) et l'arbre de rotation de type manchon (AS101) étant dans une relation de liaison permettant la transmission ;
- Lorsque le dispositif de frein commandable (BK102) est commandé pour être dans l'état de verrouillage de frein et que la machine électrique à double entraînement (EM100) fonctionne en tant que fonction de machine électrique, entre la partie de rotation interne de la machine électrique (EM101) et la partie de rotation externe de la machine électrique (EM102) fonctionne en tant que fonction de générateur de puissance ou fonction de moteur pour effectuer des manœuvres interactives selon l'amortissement de la charge extérieure ou l'énergie cinétique rotative entrée extérieurement soutenue par l'arbre de rotation d'entrée/de sortie (S101) et l'arbre de rotation de type manchon (AS101) ;
Les manœuvres interactives de la fonction correspondante effectuées par la machine électrique à double entraînement (EM100) mentionnée comportant la réception de la commande d'entraînement de l'énergie électrique entrée extérieurement afin de fonctionner en tant que fonction de moteur pour entraîner individuellement la charge, ou le travail avec l'énergie cinétique rotative entrée extérieurement pour entraîner généralement la charge ;
Les manœuvres interactives de la fonction correspondante effectuées par la machine électrique à double entraînement (EM100) mentionnée comportant la réception de l'entraînement de l'énergie cinétique rotative entrée extérieurement ou l'entraînement de l'énergie cinétique d'inertie de charge afin de fonctionner en tant que fonction de générateur de puissance, de manière à délivrer l'énergie électrique pour entraîner la charge électrique externe ou charger le dispositif de stockage d'énergie électrique externe.

2. Machine électrique à double entraînement ayant un train planétaire commandable, dans laquelle une partie de rotation interne d'une machine électrique (EM101) et une partie de rotation externe d'une machine électrique (EM102) de la machine électrique à double entraînement (EM100) sont respectivement combinées avec deux des trois extrémités de sortie/d'entrée d'un train planétaire (DG101) comprenant une roue solaire (W101), une roue annulaire externe (W102) et une roue planétaire (W103), un arbre de rotation de type manchon (AS101) manchonné sur un arbre de rotation d'entrée/de sortie (S101) servant d'extrémité de sortie/d'entrée est fourni, un arbre de rotation de sortie/d'entrée (S102) est également fourni, l'un parmi l'arbre de rotation d'entrée/de sortie (S101) ou l'arbre de sortie/d'entrée (S102) étant relié à un côté d'action d'un dispositif de frein commandable correspondant, et l'autre côté d'action du dispositif de frein commandable étant relié à un carter (H100) ; par la commande du dispositif de frein commandable pour effectuer le verrouillage ou la libération du frein, les manœuvres de fonction de transmission de liaison de transmission ou de libération entre l'arbre de rotation d'entrée/de sortie (S101), l'arbre de rotation de sortie/d'entrée (S102) et l'arbre de rotation de type manchon (AS101) étant activées pour être commandées, et les manœuvres interactives entre la machine électrique à double entraînement (EM100) et les extrémités de sortie/d'entrée étant également activées pour être commandées,
l'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée et étant fourni pour être relié à un côté d'action du dispositif de frein commandable (BK103) tandis que l'autre côté d'action du dispositif de frein commandable (BK103) est fixé dans le carter (H100), le train planétaire (DG101) étant également fixé dans le carter (H100), la roue planétaire (W103) du train planétaire (DG101) étant fournie pour relier un culbuteur (A101) et étant combinée avec la partie de rotation externe de la machine électrique (EM102) et l'arbre de rotation de type manchon (AS101), l'arbre de rotation de type manchon (AS101) servant d'extrémité de sortie/d'entrée et la roue annulaire externe (W102) du train planétaire (DG101) étant fournie pour entraîner l'arbre de rotation de sortie/d'entrée (S102) :
- Ensemble de train planétaire (DG101) : constitué d'une roue solaire (W101) et d'une roue annulaire externe (W102) et d'au moins une roue planétaire (W103), et comportant par des engrenages venant en prise les uns avec les autres, ou par des roues de friction, le fait d'effectuer mutuellement des transmissions de friction pour former une fonction de train planétaire, et structuré par l'arbre de rotation d'entrée/de sortie (S101), l'arbre de rotation de sortie/d'entrée (S102), le culbuteur (A101), l'arbre de rotation de type manchon (AS101) et un palier, ainsi qu'équipé avec une coque pour être combiné dans le carter (H100) ;
- Culbuteur (A101) : ayant une extrémité fournie pour permettre à la roue planétaire (W103) d'être en rotation et de se lier, et l'autre extrémité s'étendant axialement vers l'arbre de rotation d'entrée/de sortie (S101) pour être combinée avec la partie de rotation externe de la machine électrique (EM102) et combinée avec l'arbre de rotation de type manchon (AS101) ;
- Dispositif de frein commandable (BK103) : constitué d'un dispositif de frein commandé par une force manuelle ou une force mécanique ou une force hydraulique ou une force pneumatique ou une force électromagnétique, et ayant deux côtés d'action commandables pour les manœuvres d'un état de verrouillage de frein pour la mise en prise ou un état de libération pour la séparation, l'un des côtés d'action étant relié à l'arbre de rotation d'entrée/de sortie (S101), et l'autre côté d'action étant fixé dans le carter (H100) ;
- Machine électrique à double entraînement (EM100) : constituée d'une machine électrique à double entraînement CC ou CA, à balai ou sans balai, synchrone ou non synchrone, ayant une partie de rotation interne de machine électrique (EM101) et une partie de rotation externe de machine électrique (EM102), et équipée de capots d'extrémité, de paliers et de dispositifs de conduction électrique associés utilisés pour introduire de l'énergie électrique, la partie de rotation interne de la machine électrique (EM101) et la partie de rotation externe de la machine électrique (EM102) étant en rotation coaxiale, la partie de rotation interne de la machine électrique (EM101) étant combinée avec l'arbre de rotation d'entrée/de sortie (S101), et la partie de rotation externe de la machine électrique (EM102) étant combinée avec le culbuteur (A101) ;
- L'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée pour la liaison à un côté d'action du dispositif de frein commandable (BK103) tandis que l'autre côté d'action du dispositif de frein commandable (BK103) est fixé dans le carter (H100) ;
- La roue planétaire (W103) du train planétaire (DG101) étant fournie pour relier un culbuteur (A101) et combinée avec la partie de rotation externe de la machine électrique (EM102) et combinée avec l'arbre de rotation de type manchon (AS101), l'arbre de rotation de type manchon (AS101) mis en rotation et manchonné sur l'arbre de rotation d'entrée/de sortie (S101) servant d'extrémité de sortie/d'entrée, la roue annulaire externe (W102) du train planétaire (DG101) étant fournie pour entraîner l'arbre de rotation de sortie/d'entrée (S102), et l'arbre de rotation d'entrée/de sortie (S101) relié à la roue solaire (W101) servant également d'extrémité de sortie/d'entrée ;
Les manœuvres comportant une ou plusieurs de l'une des fonctions suivantes :
- Lorsque le dispositif de frein commandable (BK103) est commandé pour être dans l'état de libération et que la machine électrique à double entraînement (EM100) ne fonctionne pas en tant que fonction de machine électrique, les relations de transmission entre l'arbre de rotation d'entrée/de sortie (S101) et l'arbre de rotation de type manchon (AS101) et l'arbre de rotation de sortie/d'entrée (S102) sont dans l'état de libération permettant une rotation au ralenti ;
- Lorsque le dispositif de frein commandable (BK103) est commandé pour être dans l'état de libération et que la machine électrique à double entraînement (EM100) fonctionne en tant que fonction de machine électrique, les manœuvres interactives correspondantes de la fonction de générateur de puissance ou de la fonction de moteur étant par conséquent effectuées entre la partie de rotation interne de la machine électrique (EM101) et la partie de rotation externe de la machine électrique (EM102), selon l'amortissement de la charge extérieure ou du couple de rotation, la vitesse de rotation et le sens de rotation de l'énergie cinétique rotative entrée extérieurement soutenue par l'arbre de rotation d'entrée/de sortie (S101), l'arbre de rotation de sortie/d'entrée (S102) et l'arbre de rotation de type manchon (AS101) ;
- Lorsque le dispositif de frein commandable (BK103) est commandé pour être dans l'état de verrouillage de frein et que la machine électrique à double entraînement (EM100) ne fonctionne pas en tant que fonction de machine électrique, la relation de transmission entre l'arbre de rotation de type manchon (AS101) et l'arbre de rotation de sortie/d'entrée (S102) étant dans une relation de liaison permettant la transmission ;
- Lorsque le dispositif de frein commandable (BK103) est commandé pour être dans l'état de verrouillage de frein et que la machine électrique à double entraînement (EM100) fonctionne en tant que fonction de machine électrique, entre la partie de rotation interne de la machine électrique (EM101) et la partie de rotation externe de la machine électrique (EM102) fonctionne en tant que fonction de générateur de puissance ou fonction de moteur pour effectuer des manœuvres interactives selon l'amortissement de la charge extérieure ou l'énergie cinétique rotative entrée extérieurement soutenue par l'arbre de rotation de type manchon (AS101) et l'arbre de rotation de sortie/d'entrée (S102) ;
Les manœuvres interactives de la fonction correspondante effectuées par la machine électrique à double entraînement (EM100) mentionnée comportant la réception de la commande d'entraînement de l'énergie électrique entrée extérieurement afin de fonctionner en tant que fonction de moteur pour entraîner individuellement la charge, ou le travail avec l'énergie cinétique rotative entrée extérieurement pour entraîner généralement la charge ;
Les manœuvres interactives de la fonction correspondante effectuées par la machine électrique à double entraînement (EM100) mentionnée comportant la réception de l'entraînement de l'énergie cinétique rotative entrée extérieurement ou l'entraînement de l'énergie cinétique d'inertie de charge afin de fonctionner en tant que fonction de générateur de puissance, de manière à délivrer l'énergie électrique pour entraîner la charge électrique externe ou charger le dispositif de stockage d'énergie électrique externe.

3. Machine électrique à double entraînement ayant un train planétaire commandable, dans laquelle une partie de rotation interne d'une machine électrique (EM101) et une partie de rotation externe d'une machine électrique (EM102) de la machine électrique à double entraînement (EM100) sont respectivement combinées avec deux des trois extrémités de sortie/d'entrée d'un train planétaire (DG101) comprenant une roue solaire (W101), une roue annulaire externe (W102) et une roue planétaire (W103), un arbre de rotation de type manchon (AS101) manchonné sur un arbre de rotation d'entrée/de sortie (S101) servant d'extrémité de sortie/d'entrée est fourni, un arbre de rotation de sortie/d'entrée (S102) est également fourni, l'un parmi l'arbre de rotation d'entrée/de sortie (S101) ou l'arbre de sortie/d'entrée (S102) étant relié à un côté d'action d'un dispositif de frein commandable correspondant, et l'autre côté d'action du dispositif de frein commandable étant relié à un carter (H100) ; par la commande du dispositif de frein commandable pour effectuer le verrouillage ou la libération du frein, les manœuvres de fonction de transmission de liaison de transmission ou de libération entre l'arbre de rotation d'entrée/de sortie (S101), l'arbre de rotation de sortie/d'entrée (S102) et l'arbre de rotation de type manchon (AS101) étant activées pour être commandées, et les manœuvres interactives entre la machine électrique à double entraînement (EM100) et les extrémités de sortie/d'entrée étant également activées pour être commandées,
l'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée et étant fourni pour être relié à un côté d'action du dispositif de frein commandable (BK103) tandis que l'autre côté d'action du dispositif de frein commandable (BK103) est fixé dans le carter (H100), le train planétaire (DG101) étant également fixé dans le carter (H100), la roue planétaire (W103) du train planétaire (DG101) étant fournie pour relier un culbuteur (A101) et étant combinée avec la partie de rotation externe de la machine électrique (EM102) et combinée avec l'arbre de rotation de type manchon (AS101), l'arbre de rotation de type manchon (AS101) étant mis en rotation et manchonné sur l'arbre de rotation d'entrée/de sortie (S101) servant d'extrémité de sortie/d'entrée, la roue annulaire externe (W102) du train planétaire (DG101) étant fournie pour entraîner l'arbre de rotation de sortie/d'entrée (S102), et l'arbre de rotation de sortie/d'entrée (S102) étant relié à un côté d'action du dispositif de frein commandable (BK102) tandis que l'autre côté d'action du dispositif de frein commandable (BK102) est fixé dans le carter (H100) :
- Ensemble de train planétaire (DG101) : constitué d'une roue solaire (W101) et d'une roue annulaire externe (W102) et d'au moins une roue planétaire (W103), et comportant par des engrenages venant en prise les uns avec les autres, ou par des roues de friction, le fait d'effectuer mutuellement des transmissions de friction pour former une fonction de train planétaire, et structuré par l'arbre de rotation d'entrée/de sortie (S101), l'arbre de rotation de sortie/d'entrée (S102), le culbuteur (A101), l'arbre de rotation de type manchon (AS101) et un palier, ainsi qu'équipé avec une coque pour être combiné dans le carter (H100) ;
- Culbuteur (A101) : ayant une extrémité fournie pour permettre à la roue planétaire (W103) d'être en rotation et de se lier, et l'autre extrémité s'étendant axialement vers l'arbre de rotation d'entrée/de sortie (S101) pour être combinée avec l'arbre de rotation de type manchon (AS101) ;
- Dispositif de frein commandable (BK102) : constitué d'un dispositif de frein commandé par une force manuelle ou une force mécanique ou une force hydraulique ou une force pneumatique ou une force électromagnétique, et ayant deux côtés d'action commandables pour les manœuvres d'un état de verrouillage de frein pour la mise en prise ou d'un état de libération pour la séparation, l'un des côtés d'action étant relié à l'arbre de rotation de sortie/d'entrée (S102), et l'autre côté d'action étant fixé dans le carter (H100) ;
- Dispositif de frein commandable (BK103) : constitué d'un dispositif de frein commandé par une force manuelle ou une force mécanique ou une force hydraulique ou une force pneumatique ou une force électromagnétique, et ayant deux côtés d'action commandables pour les manœuvres d'un état de verrouillage de frein pour la mise en prise ou un état de libération pour la séparation, l'un des côtés d'action étant relié à l'arbre de rotation d'entrée/de sortie (S101), et l'autre côté d'action étant fixé dans le carter (H100) ;
- Machine électrique à double entraînement (EM100) : constituée d'une machine électrique à double entraînement CC ou CA, à balai ou sans balai, synchrone ou non synchrone, ayant une partie de rotation interne de machine électrique (EM101) et une partie de rotation externe de machine électrique (EM102), et équipée de capots d'extrémité, de paliers et de dispositifs de conduction électrique associés utilisés pour introduire de l'énergie électrique, la partie de rotation interne de la machine électrique (EM101) et la partie de rotation externe de la machine électrique (EM102) étant en rotation coaxiale, la partie de rotation interne de la machine électrique (EM101) étant combinée avec l'arbre de rotation d'entrée/de sortie (S101), et la partie de rotation externe de la machine électrique (EM102) étant combinée avec le culbuteur (A101) ;
- L'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée, et étant fourni pour être relié à un côté d'action du dispositif de frein commandable (BK103) tandis que l'autre côté d'action du dispositif de frein commandable (BK103) est fixé dans le carter (H100) ; la roue annulaire externe (W102) du train planétaire (DG101) étant combinée avec l'arbre de rotation de sortie/d'entrée (S102) pour servir d'extrémité de sortie/d'entrée, et étant fournie pour être reliée à un côté d'action du dispositif de frein commandable (BK102) tandis que l'autre côté d'action du dispositif de frein commandable (BK102) est fixé dans le carter (H100), le culbuteur (A101) lié par la roue planétaire (W103) étant combiné avec la partie de rotation externe de la machine électrique (EM102) et combiné avec l'arbre de rotation de type manchon (AS101), et l'arbre de rotation de type manchon (AS101) mis en rotation et manchonné sur l'arbre de rotation d'entrée/de sortie (S101) servant d'extrémité de sortie/d'entrée ;
Les manœuvres comportant une ou plusieurs de l'une des fonctions suivantes :
- Lorsque le dispositif de frein commandable (BK102) et le dispositif de frein commandable (BK103) sont tous deux commandés pour être dans l'état de libération et que la machine électrique à double entraînement (EM100) ne fonctionne pas en tant que fonction de machine électrique, les relations de transmission entre l'arbre de rotation d'entrée/de sortie (S101), l'arbre de rotation de sortie/d'entrée (S102) et l'arbre de rotation de type manchon (AS101) sont dans l'état de libération permettant une rotation au ralenti ;
- Lorsque le dispositif de frein commandable (BK102) et le dispositif de frein commandable (BK103) sont tous deux commandés pour être dans l'état de libération et que la machine électrique à double entraînement (EM100) fonctionne en tant que fonction de machine électrique, la manœuvre interactive correspondante de la fonction de générateur de puissance ou de la fonction de moteur étant par conséquent effectuée entre la partie de rotation interne de la machine électrique (EM101) et la partie de rotation externe de la machine électrique (EM102), selon l'amortissement de la charge extérieure ou du couple de rotation, la vitesse de rotation et le sens de rotation de l'énergie cinétique rotative entrée extérieurement soutenue par l'arbre de rotation d'entrée/de sortie (S101), l'arbre de rotation de sortie/d'entrée (S102) et l'arbre de rotation de type manchon (AS101) ;
- Lorsque le dispositif de frein commandable (BK103) est commandé pour être dans l'état de verrouillage de frein et que le dispositif de frein commandable (BK102) est commandé pour être dans l'état de libération et que la machine électrique à double entraînement (EM100) ne fonctionne pas en tant que fonction de machine électrique, la relation de transmission entre l'arbre de rotation de type manchon (AS101) et l'arbre de rotation de sortie/d'entrée (S102) étant dans une relation de liaison permettant la transmission ;
- Lorsque le dispositif de frein commandable (BK103) est commandé pour être dans l'état de verrouillage de frein et que le dispositif de frein commandable (BK102) est commandé pour être dans l'état de libération et que la machine électrique à double entraînement (EM100) fonctionne avec la fonction de machine électrique, entre la partie de rotation interne de la machine électrique (EM101) et la partie de rotation externe de la machine électrique (EM102) fonctionne en tant que fonction de générateur de puissance ou fonction de moteur, pour effectuer des manœuvres interactives correspondantes avec l'amortissement de la charge extérieure ou l'énergie cinétique rotative entrée extérieurement soutenue par l'arbre de rotation de type manchon (AS101) et l'arbre de rotation de sortie/d'entrée (S102) ;
- Lorsque le dispositif de frein commandable (BK103) est commandé pour être dans l'état de libération et que le dispositif de frein commandable (BK102) est commandé pour être dans l'état de verrouillage de frein et que la machine électrique à double entraînement (EM100) ne fonctionne pas en tant que fonction de machine électrique, la relation de transmission entre l'arbre de rotation d'entrée/de sortie (S101) et l'arbre de rotation de type manchon (AS101) étant dans une relation de liaison permettant la transmission ;
- Lorsque le dispositif de frein commandable (BK103) est commandé pour être dans l'état de libération et que le dispositif de frein commandable (BK102) est commandé pour être dans l'état de verrouillage de frein et que la machine électrique à double entraînement (EM100) fonctionne en tant que fonction de machine électrique, entre la partie de rotation interne de la machine électrique (EM101) et la partie de rotation externe de la machine électrique (EM102) fonctionne en tant que fonction de générateur de puissance ou fonction de moteur, pour effectuer des manœuvres interactives correspondantes avec l'amortissement de la charge extérieure ou l'énergie cinétique rotative entrée extérieurement soutenue par l'arbre de rotation d'entrée/de sortie (S101) et l'arbre de rotation de type manchon (AS101) ;
- Lorsque le dispositif de frein commandable (BK101) et le dispositif de frein commandable (BK102) sont tous deux commandés pour être dans l'état de verrouillage de frein, les relations entre l'arbre de rotation d'entrée/de sortie (S101), l'arbre de rotation de sortie/d'entrée (S102) et l'arbre de rotation de type manchon (AS101) sont toutes dans l'état de verrouillage de frein ;
Les manœuvres interactives de la fonction correspondante effectuées par la machine électrique à double entraînement (EM100) mentionnée comportant la réception de la commande d'entraînement de l'énergie électrique entrée extérieurement afin de fonctionner en tant que fonction de moteur pour entraîner individuellement la charge, ou le travail avec l'énergie cinétique rotative entrée extérieurement pour entraîner généralement la charge ;
Les manœuvres interactives de la fonction correspondante effectuées par la machine électrique à double entraînement (EM100) mentionnée comportant la réception de l'entraînement de l'énergie cinétique rotative entrée extérieurement ou l'entraînement de l'énergie cinétique d'inertie de charge afin de fonctionner en tant que fonction de générateur de puissance, de manière à délivrer l'énergie électrique pour entraîner la charge électrique externe ou charger le dispositif de stockage d'énergie électrique externe.

4. Machine électrique à double entraînement ayant un train planétaire commandable, dans laquelle une partie de rotation interne d'une machine électrique (EM101) et une partie de rotation externe d'une machine électrique (EM102) de la machine électrique à double entraînement (EM100) sont respectivement combinées avec deux des trois extrémités de sortie/d'entrée d'un train planétaire (DG101) comprenant une roue solaire (W101), une roue annulaire externe (W102) et une roue planétaire (W103), un arbre de rotation de type manchon (AS101) manchonné sur un arbre de rotation d'entrée/de sortie (S101) servant d'extrémité de sortie/d'entrée est fourni, un arbre de rotation de sortie/d'entrée (S102) est également fourni, l'un parmi l'arbre de rotation d'entrée/de sortie (S101) ou l'arbre de sortie/d'entrée (S102) étant relié à un côté d'action d'un dispositif de frein commandable correspondant, et l'autre côté d'action du dispositif de frein commandable étant relié à un carter (H100) ; par la commande du dispositif de frein commandable pour effectuer le verrouillage ou la libération du frein, les manoeuvres de fonction de transmission de liaison de transmission ou de libération entre l'arbre de rotation d'entrée/de sortie (S101), l'arbre de rotation de sortie/d'entrée (S102) et l'arbre de rotation de type manchon (AS101) étant activées pour être commandées, et les manoeuvres interactives entre la machine électrique à double entraînement (EM100) et les extrémités de sortie/d'entrée étant également activées pour être commandées,
l'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée, la roue annulaire externe (W102) étant combinée avec la partie de rotation externe de la machine électrique (EM102) et combinée avec l'arbre de rotation de type manchon (AS101), l'arbre de rotation de type manchon (AS101) manchonné sur l'arbre de rotation d'entrée/de sortie (S101) servant d'extrémité de sortie/d'entrée, le culbuteur (A101) lié par la roue planétaire (W103) du train planétaire (DG101) étant fourni pour entraîner l'arbre de rotation de sortie/d'entrée (S102), et l'arbre de rotation de sortie/d'entrée (S102) ou le culbuteur (A101) étant relié à un côté d'action du dispositif de frein commandable (BK102) tandis que l'autre côté d'action du dispositif de frein commandable (BK102) est fixé dans le carter (H100) :
- Ensemble de train planétaire (DG101) : constitué d'une roue solaire (W101) et d'une roue annulaire externe (W102) et d'au moins une roue planétaire (W103), et comportant par des engrenages venant en prise les uns avec les autres, ou par des roues de friction, le fait d'effectuer mutuellement des transmissions de friction pour former une fonction de train planétaire, et structuré par l'arbre de rotation d'entrée/de sortie (S101), l'arbre de rotation de sortie/d'entrée (S102), le culbuteur (A101), l'arbre de rotation de type manchon (AS101) et un palier, ainsi qu'équipé avec une coque pour être combiné dans le carter (H100) ;
- Culbuteur (A101) : ayant une extrémité fournie pour permettre à la roue planétaire (W103) d'être en rotation et de se lier, et l'autre extrémité étant reliée à l'arbre de rotation de sortie/d'entrée (S102) ;
- Dispositif de frein commandable (BK102) : constitué d'un dispositif de frein commandé par une force manuelle ou une force mécanique ou une force hydraulique ou une force pneumatique ou une force électromagnétique, et ayant deux côtés d'action commandables pour les manoeuvres d'un état de verrouillage de frein pour la mise en prise ou un état de libération pour la séparation, l'un des côtés d'action étant relié à l'arbre de rotation de sortie/d'entrée (S102) ou au culbuteur (A101), et l'autre côté d'action étant fixé dans le carter (H100) ;
- Machine électrique à double entraînement (EM100) : constituée d'une machine électrique à double entraînement CC ou CA, à balai ou sans balai, synchrone ou non synchrone, ayant une partie de rotation interne de machine électrique (EM101) et une partie de rotation externe de machine électrique (EM102), et équipée de capots d'extrémité, de paliers et de dispositifs de conduction électrique associés utilisés pour introduire de l'énergie électrique, la partie de rotation interne de la machine électrique (EM101) et la partie de rotation externe de la machine électrique (EM102) étant en rotation coaxiale, la partie de rotation interne de la machine électrique (EM101) étant combinée avec l'arbre de rotation d'entrée/de sortie (S101), et la partie de rotation externe de la machine électrique (EM102) étant combinée avec la roue annulaire externe (W102) ;
- L'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée, la roue annulaire externe (W102) étant combinée avec la partie de rotation externe de la machine électrique (EM102) et combinée avec l'arbre de rotation de type manchon (AS101), et l'arbre de rotation de type manchon (AS101) mis en rotation et manchonné sur l'arbre de rotation d'entrée/de sortie (S101) servant d'extrémité de sortie/d'entrée ;
- Le culbuteur (A101) lié par la roue planétaire (W103) du train planétaire (DG101) étant fourni pour entraîner l'arbre de rotation de sortie/d'entrée (S102), et l'arbre de rotation de sortie/d'entrée (S102) ou le culbuteur (A101) étant relié à un côté d'action du dispositif de frein commandable (BK102) tandis que l'autre côté d'action du dispositif de frein commandable (BK102) est fixé dans le carter (H100) ;
Les manoeuvres comportant une ou plusieurs de l'une des fonctions suivantes :
- Lorsque le dispositif de frein commandable (BK102) est commandé pour être dans l'état de libération et que la machine électrique à double entraînement (EM100) ne fonctionne pas en tant que fonction de machine électrique, les relations de transmission entre l'arbre de rotation d'entrée/de sortie (S101), l'arbre de rotation de type manchon (AS101) et l'arbre de rotation de sortie/d'entrée (S102) sont dans l'état de libération permettant une rotation au ralenti ;
- Lorsque le dispositif de frein commandable (BK102) est commandé pour être dans l'état de libération et que la machine électrique à double entraînement (EM100) fonctionne en tant que fonction de machine électrique, les manoeuvres interactives correspondantes de la fonction de générateur de puissance ou de la fonction de moteur étant par conséquent effectuées entre la partie de rotation interne de la machine électrique (EM101) et la partie de rotation externe de la machine électrique (EM102), selon l'amortissement de la charge extérieure ou du couple de rotation, la vitesse de rotation et le sens de rotation de l'énergie cinétique rotative entrée extérieurement soutenue par l'arbre de rotation d'entrée/de sortie (S101), l'arbre de rotation de sortie/d'entrée (S102) et l'arbre de rotation de type manchon (AS101) ;
- Lorsque le dispositif de frein commandable (BK102) est commandé pour être dans l'état de verrouillage de frein et que la machine électrique à double entraînement (EM100) ne fonctionne pas en tant que fonction de machine électrique, la relation de transmission entre l'arbre de rotation d'entrée/de sortie (S101) et l'arbre de rotation de type manchon (AS101) étant dans une relation de liaison permettant la transmission ;
- Lorsque le dispositif de frein commandable (BK102) est commandé pour être dans l'état de verrouillage de frein et que la machine électrique à double entraînement (EM100) fonctionne en tant que fonction de machine électrique, entre la partie de rotation interne de la machine électrique (EM101) et la partie de rotation externe de la machine électrique (EM102) fonctionne en tant que fonction de générateur de puissance ou fonction de moteur pour effectuer des manoeuvres interactives selon l'amortissement de la charge extérieure ou l'énergie cinétique rotative entrée extérieurement soutenue par l'arbre de rotation d'entrée/de sortie (S101) et l'arbre de rotation de type manchon (AS101) ;
Les manoeuvres interactives de la fonction correspondante effectuées par la machine électrique à double entraînement (EM100) mentionnée comportant la réception de la commande d'entraînement de l'énergie électrique entrée extérieurement afin de fonctionner en tant que fonction de moteur pour entraîner individuellement la charge, ou le travail avec l'énergie cinétique rotative entrée extérieurement pour entraîner généralement la charge ;
Les manoeuvres interactives de la fonction correspondante effectuées par la machine électrique à double entraînement (EM100) mentionnée comportant la réception de l'entraînement de l'énergie cinétique rotative entrée extérieurement ou l'entraînement de l'énergie cinétique d'inertie de charge afin de fonctionner en tant que fonction de générateur de puissance, de manière à délivrer l'énergie électrique pour entraîner la charge électrique externe ou charger le dispositif de stockage d'énergie électrique externe.

5. Machine électrique à double entraînement ayant un train planétaire commandable, dans laquelle une partie de rotation interne d'une machine électrique (EM101) et une partie de rotation externe d'une machine électrique (EM102) de la machine électrique à double entraînement (EM100) sont respectivement combinées avec deux des trois extrémités de sortie/d'entrée d'un train planétaire (DG101) comprenant une roue solaire (W101), une roue annulaire externe (W102) et une roue planétaire (W103), un arbre de rotation de type manchon (AS101) manchonné sur un arbre de rotation d'entrée/de sortie (S101) servant d'extrémité de sortie/d'entrée est fourni, un arbre de rotation de sortie/d'entrée (S102) est également fourni, l'un parmi l'arbre de rotation d'entrée/de sortie (S101) ou l'arbre de sortie/d'entrée (S102) étant relié à un côté d'action d'un dispositif de frein commandable correspondant, et l'autre côté d'action du dispositif de frein commandable étant relié à un carter (H100) ; par la commande du dispositif de frein commandable pour effectuer le verrouillage ou la libération du frein, les manoeuvres de fonction de transmission de liaison de transmission ou de libération entre l'arbre de rotation d'entrée/de sortie (S101), l'arbre de rotation de sortie/d'entrée (S102) et l'arbre de rotation de type manchon (AS101) étant activées pour être commandées, et les manoeuvres interactives entre la machine électrique à double entraînement (EM100) et les extrémités de sortie/d'entrée étant également activées pour être commandées,
l'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée et étant fourni pour être relié à un côté d'action du dispositif de frein commandable (BK103) tandis que l'autre côté d'action du dispositif de frein commandable (BK103) est fixé dans le carter (H100), le train planétaire (DG101) étant également fixé dans le carter (H100), la roue annulaire externe (W102) du train planétaire (DG101) étant combinée avec la partie de rotation externe de la machine électrique (EM102) et l'arbre de rotation de type manchon (AS101), l'arbre de rotation de type manchon (AS101) servant d'extrémité de sortie/d'entrée, et la roue planétaire (W103) du train planétaire (DG101) étant fournie pour relier le culbuteur (A101) et entraîner l'arbre de rotation de sortie/d'entrée (S102) :
- Ensemble de train planétaire (DG101) : constitué d'une roue solaire (W101) et d'une roue annulaire externe (W102) et d'au moins une roue planétaire (W103), et comportant par des engrenages venant en prise les uns avec les autres, ou par des roues de friction, le fait d'effectuer mutuellement des transmissions de friction pour former une fonction de train planétaire, et structuré par l'arbre de rotation d'entrée/de sortie (S101), l'arbre de rotation de sortie/d'entrée (S102), le culbuteur (A101), l'arbre de rotation de type manchon (AS101) et un palier, ainsi qu'équipé avec une coque pour être combiné dans le carter (H100) ;
- Culbuteur (A101) : ayant une extrémité fournie pour permettre à la roue planétaire (W103) d'être en rotation et de se lier, et l'autre extrémité étant reliée à l'arbre de rotation de sortie/d'entrée (S102) ;
- Dispositif de frein commandable (BK103) : constitué d'un dispositif de frein commandé par une force manuelle ou une force mécanique ou une force hydraulique ou une force pneumatique ou une force électromagnétique, et ayant deux côtés d'action commandables pour les manoeuvres d'un état de verrouillage de frein pour la mise en prise ou un état de libération pour la séparation, l'un des côtés d'action étant relié à l'arbre de rotation d'entrée/de sortie (S101), et l'autre côté d'action étant fixé dans le carter (H100) ;
- Machine électrique à double entraînement (EM100) : constituée d'une machine électrique à double entraînement CC ou CA, à balai ou sans balai, synchrone ou non synchrone, ayant une partie de rotation interne de machine électrique (EM101) et une partie de rotation externe de machine électrique (EM102), et équipée de capots d'extrémité, de paliers et de dispositifs de conduction électrique associés utilisés pour introduire de l'énergie électrique, la partie de rotation interne de la machine électrique (EM101) et la partie de rotation externe de la machine électrique (EM102) étant en rotation coaxiale, la partie de rotation interne de la machine électrique (EM101) étant combinée avec l'arbre de rotation d'entrée/de sortie (S101), et la partie de rotation externe de la machine électrique (EM102) étant combinée avec la roue annulaire externe (W102) ;
- L'arbre de rotation d'entrée/de sortie (S101) étant partagé par la roue solaire (W101) du train planétaire (DG101) et la partie de rotation interne de la machine électrique (EM101) de la machine électrique à double entraînement (EM100) servant d'extrémité de sortie/d'entrée, et étant fourni pour être relié à un côté d'action du dispositif de frein commandable (BK103) tandis que l'autre côté d'action du dispositif de frein commandable (BK103) est fixé dans le carter (H100) ;
- La roue annulaire externe (W102) du train planétaire (DG101) étant combinée avec la partie de rotation externe de la machine électrique (EM102) et combinée avec l'arbre de rotation de type manchon (AS101), l'arbre de rotation de type manchon (AS101) mis en rotation et manchonné sur l'arbre de rotation d'entrée/de sortie (S101) servant d'extrémité de sortie/d'entrée, la roue planétaire (W103) du train planétaire (DG101) étant fournie pour lier le culbuteur (A101) et entraîner l'arbre de rotation de sortie/d'entrée (S102), et l'arbre de rotation d'entrée/de sortie (S101) combiné avec la roue solaire (W101) servant également d'extrémité de sortie/d'entrée ;
Les manoeuvres comportant une ou plusieurs de l'une des fonctions suivantes :
- Lorsque le dispositif de frein commandable (BK103) est commandé pour être dans l'état de libération et que la machine électrique à double entraînement (EM100) ne fonctionne pas en tant que fonction de machine électrique, les relations de transmission entre l'arbre de rotation d'entrée/de sortie (S101), l'arbre de rotation de type manchon (AS101) et l'arbre de rotation de sortie/d'entrée (S102) sont dans l'état de libération permettant une rotation au ralenti ;
- Lorsque le dispositif de frein commandable (BK103) est commandé pour être dans l'état de libération et que la machine électrique à double entraînement (EM100) fonctionne en tant que fonction de machine électrique, les manoeuvres interactives correspondantes de la fonction de générateur de puissance ou de la fonction de moteur étant par conséquent effectuées entre la partie de rotation interne de la machine électrique (EM101) et la partie de rotation externe de la machine électrique (EM102), selon l'amortissement de la charge extérieure ou du couple de rotation, la vitesse de rotation et le sens de rotation de l'énergie cinétique rotative entrée extérieurement soutenue par l'arbre de rotation d'entrée/de sortie (S101), l'arbre de rotation de sortie/d'entrée (S102) et l'arbre de rotation de type manchon (AS101) ;
- Lorsque le dispositif de frein commandable (BK103) est commandé pour être dans l'état de verrouillage de frein et que la machine électrique à double entraînement (EM100) ne fonctionne pas en tant que fonction de machine électrique, la relation de transmission entre l'arbre de rotation de type manchon (AS101) et l'arbre de rotation de sortie/d'entrée (S102) étant dans une relation de liaison permettant la transmission ;
- Lorsque le dispositif de frein commandable (BK103) est commandé pour être dans l'état de verrouillage de frein et que la machine électrique à double entraînement (EM100) fonctionne en tant que fonction de machine électrique, entre la partie de rotation interne de la machine électrique (EM101) et la partie de rotation externe de la machine électrique (EM102) fonctionne en tant que fonction de générateur de puissance ou fonction de moteur pour effectuer des manoeuvres interactives selon l'amortissement de la charge extérieure ou l'énergie cinétique rotative entrée extérieurement soutenue par l'arbre de rotation de type manchon (AS101) et l'arbre de rotation de sortie/d'entrée (S102) ;
Les manoeuvres interactives de la fonction correspondante effectuées par la machine électrique à double entraînement (EM100) mentionnée comportant la réception de la commande d'entraînement de l'énergie électrique entrée extérieurement afin de fonctionner en tant que fonction de moteur pour entraîner individuellement la charge, ou le travail avec l'énergie cinétique rotative entrée extérieurement pour entraîner généralement la charge ;
Les manoeuvres interactives de la fonction correspondante effectuées par la machine électrique à double entraînement (EM100) mentionnée comportant la réception de l'entraînement de l'énergie cinétique rotative entrée extérieurement ou l'entraînement de l'énergie cinétique d'inertie de charge afin de fonctionner en tant que fonction de générateur de puissance, de manière à délivrer l'énergie électrique pour entraîner la charge électrique externe ou charger le dispositif de stockage d'énergie électrique externe.

6. Machine électrique à double entraînement ayant un train planétaire commandable, dans laquelle une partie de rotation interne d'une machine électrique (EM101) et une partie de rotation externe d'une machine électrique (EM102) de la machine électrique à double entraînement (EM100) sont respectivement combinées avec deux des trois extrémités de sortie/d'entrée d'un train planétaire (DG101) comprenant une roue solaire (W101), une roue annulaire externe (W102) et une roue planétaire (W103), un arbre de rotation de type manchon (AS101) manchonné sur un arbre de rotation d'entrée/de sortie (S101) servant d'extrémité de sortie/d'entrée est fourni, un arbre de rotation de sortie/d'entrée (S102) est également fourni, l'un parmi l'arbre de rotation d'entrée/de sortie (S101) ou l'arbre de sortie/d'entrée (S102) étant relié à un côté d'action d'un dispositif de frein commandable correspondant, et l'autre côté d'action du dispositif de frein commandable étant relié à un carter (H100) ; par la commande du dispositif de frein commandable pour effectuer le verrouillage ou la libération du frein, les manoeuvres de fonction de transmission de liaison de transmission ou de libération entre l'arbre de rotation d'entrée/de sortie (S101), l'arbre de rotation de sortie/d'entrée (S102) et l'arbre de rotation de type manchon (AS101) étant activées pour être commandées, et les manoeuvres interactives entre la machine électrique à double entraînement (EM100) et les extrémités de sortie/d'entrée étant également activées pour être commandées,
l'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée et étant fourni pour être relié à un côté d'action du dispositif de frein commandable (BK103) tandis que l'autre côté d'action du dispositif de frein commandable (BK103) est fixé dans le carter (H100), le train planétaire (DG101) étant également fixé dans le carter (H100), la roue annulaire externe (W102) du train planétaire (DG101) étant combinée avec la partie de rotation externe de la machine électrique (EM102) et combinée avec l'arbre de rotation de type manchon (AS101), l'arbre de rotation de type manchon (AS101) étant mis en rotation et manchonné sur l'arbre de rotation d'entrée/de sortie (S101) servant d'extrémité de sortie/d'entrée, la roue planétaire (W103) du train planétaire (DG101) étant fournie pour lier le culbuteur (A101) et entraînant l'arbre de rotation de sortie/d'entrée (S102), et l'arbre de rotation de sortie/d'entrée (S102) ou le culbuteur (A101) étant relié à un côté d'action du dispositif de frein commandable (BK102) tandis que l'autre côté d'action du dispositif de frein commandable (BK102) est fixé dans le carter (H100) :
- Ensemble de train planétaire (DG101) : constitué d'une roue solaire (W101) et d'une roue annulaire externe (W102) et d'au moins une roue planétaire (W103), et comportant par des engrenages venant en prise les uns avec les autres, ou par des roues de friction, le fait d'effectuer mutuellement des transmissions de friction pour former une fonction de train planétaire, et structuré par l'arbre de rotation d'entrée/de sortie (S101), l'arbre de rotation de sortie/d'entrée (S102), le culbuteur (A101), l'arbre de rotation de type manchon (AS101) et un palier, ainsi qu'équipé avec une coque pour être combiné dans le carter (H100) ;
- Culbuteur (A101) : ayant une extrémité fournie pour permettre à la roue planétaire (W103) d'être en rotation et de se lier, et l'autre extrémité étant reliée à l'arbre de rotation de sortie/d'entrée (S102) ;
- Dispositif de frein commandable (BK102) : constitué d'un dispositif de frein commandé par une force manuelle ou une force mécanique ou une force hydraulique ou une force pneumatique ou une force électromagnétique, et ayant deux côtés d'action commandables pour les manoeuvres d'un état de verrouillage de frein pour la mise en prise ou un état de libération pour la séparation, l'un des côtés d'action étant relié à l'arbre de rotation de sortie/d'entrée (S102) ou au culbuteur (A101), et l'autre côté d'action étant fixé dans le carter (H100) ;
- Dispositif de frein commandable (BK103) : constitué d'un dispositif de frein commandé par une force manuelle ou une force mécanique ou une force hydraulique ou une force pneumatique ou une force électromagnétique, et ayant deux côtés d'action commandables pour les manoeuvres d'un état de verrouillage de frein pour la mise en prise ou un état de libération pour la séparation, l'un des côtés d'action étant relié à l'arbre de rotation d'entrée/de sortie (S101), et l'autre côté d'action étant fixé dans le carter (H100) ;
- Machine électrique à double entraînement (EM100) : constituée d'une machine électrique à double entraînement CC ou CA, à balai ou sans balai, synchrone ou non synchrone, ayant une partie de rotation interne de machine électrique (EM101) et une partie de rotation externe de machine électrique (EM102), et équipée de capots d'extrémité, de paliers et de dispositifs de conduction électrique associés utilisés pour introduire de l'énergie électrique, la partie de rotation interne de la machine électrique (EM101) et la partie de rotation externe de la machine électrique (EM102) étant en rotation coaxiale, la partie de rotation interne de la machine électrique (EM101) étant combinée avec l'arbre de rotation d'entrée/de sortie (S101), et la partie de rotation externe de la machine électrique (EM102) étant combinée avec la roue annulaire externe (W102) ;
- L'arbre de rotation d'entrée/de sortie (S101) partagé par la roue solaire (W101) du train planétaire (DG101) et la partie de rotation interne de la machine électrique (EM101) de la machine électrique à double entraînement (EM100) servant d'extrémité de sortie/d'entrée, et étant fourni pour être relié à un côté d'action du dispositif de frein commandable (BK103) tandis que l'autre côté d'action du dispositif de frein commandable (BK103) est fixé dans le carter (H100) ; le culbuteur (A101) lié par la roue planétaire (W103) du train planétaire (DG101) étant combiné avec l'arbre de rotation de sortie/d'entrée (S102) pour servir d'extrémité de sortie/d'entrée, l'arbre de rotation de sortie/d'entrée (S102) ou le culbuteur (A101) étant relié à un côté d'action du dispositif de frein commandable (BK102) tandis que l'autre côté d'action du dispositif de frein commandable (BK102) étant fixé dans le carter (H100), la roue annulaire externe (W102) étant combinée avec la partie de rotation externe de la machine électrique (EM102) et combinée avec l'arbre de rotation de type manchon (AS101), et l'arbre de rotation de type manchon (AS101) mis en rotation et manchonné sur l'arbre de rotation d'entrée/de sortie (S101) servant d'extrémité de sortie/d'entrée ;
Les manoeuvres comportant une ou plusieurs de l'une des fonctions suivantes :
- Lorsque le dispositif de frein commandable (BK102) et le dispositif de frein commandable (BK103) sont tous deux commandés pour être dans l'état de libération et que la machine électrique à double entraînement (EM100) ne fonctionne pas en tant que fonction de machine électrique, les relations de transmission entre l'arbre de rotation d'entrée/de sortie (S101), l'arbre de rotation de sortie/d'entrée (S102) et l'arbre de rotation de type manchon (AS101) sont dans l'état de libération permettant une rotation au ralenti ;
- Lorsque le dispositif de frein commandable (BK102) et le dispositif de frein commandable (BK103) sont tous deux commandés pour être dans l'état de libération et que la machine électrique à double entraînement (EM100) fonctionne en tant que fonction de machine électrique, la manoeuvre interactive correspondante de la fonction de générateur de puissance ou de la fonction de moteur étant par conséquent effectuée entre la partie de rotation interne de la machine électrique (EM101) et la partie de rotation externe de la machine électrique (EM102), selon l'amortissement de la charge extérieure ou du couple de rotation, la vitesse de rotation et le sens de rotation de l'énergie cinétique rotative entrée extérieurement soutenue par l'arbre de rotation d'entrée/de sortie (S101), l'arbre de rotation de sortie/d'entrée (S102) et l'arbre de rotation de type manchon (AS101) ;
- Lorsque le dispositif de frein commandable (BK103) est commandé pour être dans l'état de verrouillage de frein et que le dispositif de frein commandable (BK102) est commandé pour être dans l'état de libération et que la machine électrique à double entraînement (EM100) ne fonctionne pas en tant que fonction de machine électrique, la relation de transmission entre l'arbre de rotation de type manchon (AS101) et l'arbre de rotation de sortie/d'entrée (S102) étant dans une relation de liaison permettant la transmission ;
- Lorsque le dispositif de frein commandable (BK103) est commandé pour être dans l'état de verrouillage de frein et que le dispositif de frein commandable (BK102) est commandé pour être dans l'état de libération et que la machine électrique à double entraînement (EM100) fonctionne avec la fonction de machine électrique, entre la partie de rotation interne de la machine électrique (EM101) et la partie de rotation externe de la machine électrique (EM102) fonctionne en tant que fonction de générateur de puissance ou fonction de moteur, pour effectuer des manoeuvres interactives correspondantes avec l'amortissement de la charge extérieure ou l'énergie cinétique rotative entrée extérieurement soutenue par l'arbre de rotation de type manchon (AS101) et l'arbre de rotation de sortie/d'entrée (S102) ;
- Lorsque le dispositif de frein commandable (BK103) est commandé pour être dans l'état de libération et que le dispositif de frein commandable (BK102) est commandé pour être dans l'état de verrouillage de frein et que la machine électrique à double entraînement (EM100) ne fonctionne pas en tant que fonction de machine électrique, la relation de transmission entre l'arbre de rotation d'entrée/de sortie (S101) et l'arbre de rotation de type manchon (AS101) étant dans une relation de liaison permettant la transmission ;
- Lorsque le dispositif de frein commandable (BK103) est commandé pour être dans l'état de libération et que le dispositif de frein commandable (BK102) est commandé pour être dans l'état de verrouillage de frein et que la machine électrique à double entraînement (EM100) fonctionne en tant que fonction de machine électrique, entre la partie de rotation interne de la machine électrique (EM101) et la partie de rotation externe de la machine électrique (EM102) fonctionne en tant que fonction de générateur de puissance ou fonction de moteur, pour effectuer des manoeuvres interactives correspondantes avec l'amortissement de la charge extérieure ou l'énergie cinétique rotative entrée extérieurement soutenue par l'arbre de rotation d'entrée/de sortie (S101) et l'arbre de rotation de type manchon (AS101) ;
- Lorsque le dispositif de frein commandable (BK101) et le dispositif de frein commandable (BK102) sont tous deux commandés pour être dans l'état de verrouillage de frein, les relations entre l'arbre de rotation d'entrée/de sortie (S101), l'arbre de rotation de sortie/d'entrée (S102) et l'arbre de rotation de type manchon (AS101) sont toutes dans l'état de verrouillage de frein ;
Les manoeuvres interactives de la fonction correspondante effectuées par la machine électrique à double entraînement (EM100) mentionnée comportant la réception de la commande d'entraînement de l'énergie électrique entrée extérieurement afin de fonctionner en tant que fonction de moteur pour entraîner individuellement la charge, ou le travail avec l'énergie cinétique rotative entrée extérieurement pour entraîner généralement la charge ;
Les manoeuvres interactives de la fonction correspondante effectuées par la machine électrique à double entraînement (EM100) mentionnée comportant la réception de l'entraînement de l'énergie cinétique rotative entrée extérieurement ou l'entraînement de l'énergie cinétique d'inertie de charge afin de fonctionner en tant que fonction de générateur de puissance, de manière à délivrer l'énergie électrique pour entraîner la charge électrique externe ou charger le dispositif de stockage d'énergie électrique externe.

7. Machine électrique à double entraînement ayant un train planétaire commandable, dans laquelle une partie de rotation interne d'une machine électrique (EM101) et une partie de rotation externe d'une machine électrique (EM102) de la machine électrique à double entraînement (EM100) sont respectivement combinées avec deux des trois extrémités de sortie/d'entrée d'un train planétaire (DG101) comprenant une roue solaire (W101), une roue annulaire externe (W102) et une roue planétaire (W103), un arbre de rotation de type manchon (AS101) manchonné sur un arbre de rotation d'entrée/de sortie (S101) servant d'extrémité de sortie/d'entrée est fourni, un arbre de rotation de sortie/d'entrée (S102) est également fourni, l'un parmi l'arbre de rotation d'entrée/de sortie (S101) ou l'arbre de sortie/d'entrée (S102) étant relié à un côté d'action d'un dispositif de frein commandable correspondant, et l'autre côté d'action du dispositif de frein commandable étant relié à un carter (H100) ; par la commande du dispositif de frein commandable pour effectuer le verrouillage ou la libération du frein, les manoeuvres de fonction de transmission de liaison de transmission ou de libération entre l'arbre de rotation d'entrée/de sortie (S101), l'arbre de rotation de sortie/d'entrée (S102) et l'arbre de rotation de type manchon (AS101) étant activées pour être commandées, et les manoeuvres interactives entre la machine électrique à double entraînement (EM100) et les extrémités de sortie/d'entrée étant également activées pour être commandées,
la partie de rotation interne de la machine électrique (EM101) de la machine électrique à double entraînement (EM100) et la roue planétaire (W103) du train planétaire (DG101) et le culbuteur (A101) étant combinés conjointement sur l'arbre de rotation de sortie/d'entrée (S102) pour servir d'extrémité de sortie/d'entrée, la roue solaire (W101) étant combinée sur l'arbre de rotation d'entrée/de sortie (S101) pour servir d'extrémité de sortie/d'entrée, la roue annulaire externe (W102) étant combinée avec la partie de rotation externe de la machine électrique (EM102) et combinée avec l'arbre de rotation de type manchon (AS101), l'arbre de rotation de type manchon (AS101) manchonné sur l'arbre de rotation d'entrée/de sortie (S101) servant d'arbre de sortie/d'entrée, et l'arbre de rotation de sortie/d'entrée (S102) étant relié à un côté d'action du dispositif de frein commandable (BK102) tandis que l'autre côté d'action du dispositif de frein commandable (BK102) est fixé dans le carter (H100) :
- Ensemble de train planétaire (DG101) : constitué d'une roue solaire (W101) et d'une roue annulaire externe (W102) et d'au moins une roue planétaire (W103), et comportant par des engrenages venant en prise les uns avec les autres, ou par des roues de friction, le fait d'effectuer mutuellement des transmissions de friction pour former une fonction de train planétaire, et structuré par l'arbre de rotation d'entrée/de sortie (S101), l'arbre de rotation de sortie/d'entrée (S102), le culbuteur (A101), l'arbre de rotation de type manchon (AS101) et un palier, ainsi qu'équipé avec une coque pour être combiné dans le carter (H100) ;
- Culbuteur (A101) : ayant une extrémité fournie pour permettre à la roue planétaire (W103) d'être en rotation et de se lier, et l'autre extrémité étant reliée à la partie de rotation interne de la machine électrique (EM101) et à l'arbre de rotation de sortie/d'entrée (S102) ;
- Dispositif de frein commandable (BK102) : constitué d'un dispositif de frein commandé par une force manuelle ou une force mécanique ou une force hydraulique ou une force pneumatique ou une force électromagnétique, et ayant deux côtés d'action commandables pour les manoeuvres d'un état de verrouillage de frein pour la mise en prise ou d'un état de libération pour la séparation, l'un des côtés d'action étant relié à l'arbre de rotation de sortie/d'entrée (S102), et l'autre côté d'action étant fixé dans le carter (H100) ;
- Machine électrique à double entraînement (EM100) : constituée d'une machine électrique à double entraînement CC ou CA, à balai ou sans balai, synchrone ou non synchrone, ayant une partie de rotation interne de machine électrique (EM101) et une partie de rotation externe de machine électrique (EM102), et équipée de capots d'extrémité, de paliers et de dispositifs de conduction électrique associés utilisés pour introduire de l'énergie électrique, la partie de rotation interne de la machine électrique (EM101) et la partie de rotation externe de la machine électrique (EM102) étant en rotation coaxiale, la partie de rotation interne de la machine électrique (EM101) étant combinée avec l'arbre de rotation d'entrée/de sortie (S101), et la partie de rotation externe de la machine électrique (EM102) étant combinée avec la roue annulaire externe (W102) ;
- La partie de rotation interne de la machine électrique (EM101) de la machine électrique à double entraînement (EM100) et la roue planétaire (W103) du train planétaire (DG101) et le culbuteur (A101) étant combinés conjointement sur l'arbre de rotation de sortie/d'entrée (S102) pour servir d'extrémité de sortie/d'entrée, la roue solaire (W101) combinée sur l'arbre de rotation d'entrée/de sortie (S101) servant d'extrémité de sortie/d'entrée, la roue annulaire externe (W102) étant combinée avec la partie de rotation externe de la machine électrique (EM102) et combinée avec l'arbre de rotation de type manchon (AS101), et l'arbre de rotation de type manchon (AS101) mis en rotation et manchonné sur l'arbre de rotation d'entrée/de sortie (S101) servant d'extrémité de sortie/d'entrée ;
- La roue planétaire (W103) du train planétaire (DG101), le culbuteur (A101) et la partie de rotation interne de la machine électrique (EM101) étant combinés conjointement sur l'arbre de rotation de sortie/d'entrée (S102), et l'arbre de rotation de sortie/d'entrée (S102) étant relié à un côté d'action du dispositif de frein commandable (BK102) tandis que l'autre côté d'action du dispositif de frein commandable (BK102) est fixé dans le carter (H100) ;
Les manoeuvres comportant une ou plusieurs de l'une des fonctions suivantes :
- Lorsque le dispositif de frein commandable (BK102) est commandé pour être dans l'état de libération et que la machine électrique à double entraînement (EM100) ne fonctionne pas en tant que fonction de machine électrique, les relations de transmission entre l'arbre de rotation d'entrée/de sortie (S101), l'arbre de rotation de type manchon (AS101) et l'arbre de rotation de sortie/d'entrée (S102) sont dans l'état de libération permettant une rotation au ralenti ;
- Lorsque le dispositif de frein commandable (BK102) est commandé pour être dans l'état de libération et que la machine électrique à double entraînement (EM100) fonctionne en tant que fonction de machine électrique, les manoeuvres interactives correspondantes de la fonction de générateur de puissance ou de la fonction de moteur étant par conséquent effectuées entre la partie de rotation interne de la machine électrique (EM101) et la partie de rotation externe de la machine électrique (EM102), selon l'amortissement de la charge extérieure ou du couple de rotation, la vitesse de rotation et le sens de rotation de l'énergie cinétique rotative entrée extérieurement soutenue par l'arbre de rotation d'entrée/de sortie (S101), l'arbre de rotation de sortie/d'entrée (S102) et l'arbre de rotation de type manchon (AS101) ;
- Lorsque le dispositif de frein commandable (BK102) est commandé pour être dans l'état de verrouillage de frein et que la machine électrique à double entraînement (EM100) ne fonctionne pas en tant que fonction de machine électrique, la relation de transmission entre l'arbre de rotation d'entrée/de sortie (S101) et l'arbre de rotation de type manchon (AS101) étant dans une relation de liaison permettant la transmission ;
- Lorsque le dispositif de frein commandable (BK102) est commandé pour être dans l'état de verrouillage de frein et que la machine électrique à double entraînement (EM100) fonctionne en tant que fonction de machine électrique, entre la partie de rotation interne de la machine électrique (EM101) et la partie de rotation externe de la machine électrique (EM102) fonctionne en tant que fonction de générateur de puissance ou fonction de moteur pour effectuer des manoeuvres interactives selon l'amortissement de la charge extérieure ou l'énergie cinétique rotative entrée extérieurement soutenue par l'arbre de rotation d'entrée/de sortie (S101) et l'arbre de rotation de type manchon (AS101) ;
Les manoeuvres interactives de la fonction correspondante effectuées par la machine électrique à double entraînement (EM100) mentionnée comportant la réception de la commande d'entraînement de l'énergie électrique entrée extérieurement afin de fonctionner en tant que fonction de moteur pour entraîner individuellement la charge, ou le travail avec l'énergie cinétique rotative entrée extérieurement pour entraîner généralement la charge ;
Les manoeuvres interactives de la fonction correspondante effectuées par la machine électrique à double entraînement (EM100) mentionnée comportant la réception de l'entraînement de l'énergie cinétique rotative entrée extérieurement ou l'entraînement de l'énergie cinétique d'inertie de charge afin de fonctionner en tant que fonction de générateur de puissance, de manière à délivrer l'énergie électrique pour entraîner la charge électrique externe ou charger le dispositif de stockage d'énergie électrique externe.

8. Machine électrique à double entraînement ayant un train planétaire commandable, dans laquelle une partie de rotation interne d'une machine électrique (EM101) et une partie de rotation externe d'une machine électrique (EM102) de la machine électrique à double entraînement (EM100) sont respectivement combinées avec deux des trois extrémités de sortie/d'entrée d'un train planétaire (DG101) comprenant une roue solaire (W101), une roue annulaire externe (W102) et une roue planétaire (W103), un arbre de rotation de type manchon (AS101) manchonné sur un arbre de rotation d'entrée/de sortie (S101) servant d'extrémité de sortie/d'entrée est fourni, un arbre de rotation de sortie/d'entrée (S102) est également fourni, l'un parmi l'arbre de rotation d'entrée/de sortie (S101) ou l'arbre de sortie/d'entrée (S102) étant relié à un côté d'action d'un dispositif de frein commandable correspondant, et l'autre côté d'action du dispositif de frein commandable étant relié à un carter (H100) ; par la commande du dispositif de frein commandable pour effectuer le verrouillage ou la libération du frein, les manoeuvres de fonction de transmission de liaison de transmission ou de libération entre l'arbre de rotation d'entrée/de sortie (S101), l'arbre de rotation de sortie/d'entrée (S102) et l'arbre de rotation de type manchon (AS101) étant activées pour être commandées, et les manoeuvres interactives entre la machine électrique à double entraînement (EM100) et les extrémités de sortie/d'entrée étant également activées pour être commandées,
la partie de rotation interne de la machine électrique (EM101) de la machine électrique à double entraînement (EM100) et la roue planétaire (W103) du train planétaire (DG101) et le culbuteur (A101) étant combinés conjointement sur l'arbre de rotation de sortie/d'entrée (S102) pour servir d'extrémité de sortie/d'entrée, la roue solaire (W101) étant combinée sur l'arbre de rotation d'entrée/de sortie (S101) pour servir d'extrémité de sortie/d'entrée, l'arbre de rotation d'entrée/de sortie (S101) étant relié à un côté d'action du dispositif de frein commandable (BK103) tandis que l'autre côté d'action du dispositif de frein commandable (BK103) est fixé dans le carter (H100), le train planétaire (DG101) étant également fixé dans le carter (H100), la roue annulaire externe (W102) du train planétaire (DG101) étant combinée avec la partie de rotation externe de la machine électrique (EM102) et combinée avec l'arbre de rotation de type manchon (AS101) et l'arbre de rotation de type manchon (AS101) servant d'extrémité de sortie/d'entrée :
- Ensemble de train planétaire (DG101) : constitué d'une roue solaire (W101) et d'une roue annulaire externe (W102) et d'au moins une roue planétaire (W103), et comportant par des engrenages venant en prise les uns avec les autres, ou par des roues de friction, le fait d'effectuer mutuellement des transmissions de friction pour former une fonction de train planétaire, et structuré par l'arbre de rotation d'entrée/de sortie (S101), l'arbre de rotation de sortie/d'entrée (S102), le culbuteur (A101), l'arbre de rotation de type manchon (AS101) et un palier, ainsi qu'équipé avec une coque pour être combiné dans le carter (H100) ;
- Culbuteur (A101) : ayant une extrémité fournie pour permettre à la roue planétaire (W103) d'être en rotation et de se lier, et l'autre extrémité étant reliée à la partie de rotation interne de la machine électrique (EM101) et à l'arbre de rotation de sortie/d'entrée (S102) ;
- Dispositif de frein commandable (BK103) : constitué d'un dispositif de frein commandé par une force manuelle ou une force mécanique ou une force hydraulique ou une force pneumatique ou une force électromagnétique, et ayant deux côtés d'action commandables pour les manoeuvres d'un état de verrouillage de frein pour la mise en prise ou un état de libération pour la séparation, l'un des côtés d'action étant relié à l'arbre de rotation d'entrée/de sortie (S101), et l'autre côté d'action étant fixé dans le carter (H100) ;
- Machine électrique à double entraînement (EM100) : constituée d'une machine électrique à double entraînement CC ou CA, à balai ou sans balai, synchrone ou non synchrone, ayant une partie de rotation interne de machine électrique (EM101) et une partie de rotation externe de machine électrique (EM102), et équipée de capots d'extrémité, de paliers et de dispositifs de conduction électrique associés utilisés pour introduire de l'énergie électrique, la partie de rotation interne de la machine électrique (EM101) et la partie de rotation externe de la machine électrique (EM102) étant en rotation coaxiale, la partie de rotation interne de la machine électrique (EM101) étant combinée avec l'arbre de rotation d'entrée/de sortie (S101), et la partie de rotation externe de la machine électrique (EM102) étant combinée avec la roue annulaire externe (W102) ;
- La roue solaire (W101) du train planétaire (DG101) étant combinée sur l'arbre de rotation d'entrée/de sortie (S101), et l'arbre de rotation d'entrée/de sortie (S101) étant relié à un côté d'action du dispositif de frein commandable (BK103) tandis que l'autre côté d'action du dispositif de frein commandable (BK103) est fixé dans le carter (H100) ;
- La roue annulaire externe (W102) du train planétaire (DG101) étant combinée avec la partie de rotation externe de la machine électrique (EM102) et combinée avec l'arbre de rotation de type manchon (AS101), l'arbre de rotation de type manchon (AS101) mis en rotation et manchonné sur l'arbre de rotation d'entrée/de sortie (S101) servant d'extrémité de sortie/d'entrée, et l'arbre de rotation d'entrée/de sortie (S101) combiné avec la roue solaire (W101) servant également d'extrémité de sortie/d'entrée ;
Les manoeuvres comportant une ou plusieurs de l'une des fonctions suivantes :
- Lorsque le dispositif de frein commandable (BK103) est commandé pour être dans l'état de libération et que la machine électrique à double entraînement (EM100) ne fonctionne pas en tant que fonction de machine électrique, les relations de transmission entre l'arbre de rotation d'entrée/de sortie (S101), l'arbre de rotation de type manchon (AS101) et l'arbre de rotation de sortie/d'entrée (S102) sont dans l'état de libération permettant une rotation au ralenti ;
- Lorsque le dispositif de frein commandable (BK103) est commandé pour être dans l'état de libération et que la machine électrique à double entraînement (EM100) fonctionne en tant que fonction de machine électrique, les manoeuvres interactives correspondantes de la fonction de générateur de puissance ou de la fonction de moteur étant par conséquent effectuées entre la partie de rotation interne de la machine électrique (EM101) et la partie de rotation externe de la machine électrique (EM102), selon l'amortissement de la charge extérieure ou du couple de rotation, la vitesse de rotation et le sens de rotation de l'énergie cinétique rotative entrée extérieurement soutenue par l'arbre de rotation d'entrée/de sortie (S101), l'arbre de rotation de sortie/d'entrée (S102) et l'arbre de rotation de type manchon (AS101) ;
- Lorsque le dispositif de frein commandable (BK103) est commandé pour être dans l'état de verrouillage de frein et que la machine électrique à double entraînement (EM100) ne fonctionne pas en tant que fonction de machine électrique, la relation de transmission entre l'arbre de rotation de type manchon (AS101) et l'arbre de rotation de sortie/d'entrée (S102) étant dans une relation de liaison permettant la transmission ;
- Lorsque le dispositif de frein commandable (BK103) est commandé pour être dans l'état de verrouillage de frein et que la machine électrique à double entraînement (EM100) fonctionne en tant que fonction de machine électrique, entre la partie de rotation interne de la machine électrique (EM101) et la partie de rotation externe de la machine électrique (EM102) fonctionne en tant que fonction de générateur de puissance ou fonction de moteur pour effectuer des manoeuvres interactives selon l'amortissement de la charge extérieure ou l'énergie cinétique rotative entrée extérieurement soutenue par l'arbre de rotation de type manchon (AS101) et l'arbre de rotation de sortie/d'entrée (S102) ;
Les manoeuvres interactives de la fonction correspondante effectuées par la machine électrique à double entraînement (EM100) mentionnée comportant la réception de la commande d'entraînement de l'énergie électrique entrée extérieurement afin de fonctionner en tant que fonction de moteur pour entraîner individuellement la charge, ou le travail avec l'énergie cinétique rotative entrée extérieurement pour entraîner généralement la charge ;
Les manoeuvres interactives de la fonction correspondante effectuées par la machine électrique à double entraînement (EM100) mentionnée comportant la réception de l'entraînement de l'énergie cinétique rotative entrée extérieurement ou l'entraînement de l'énergie cinétique d'inertie de charge afin de fonctionner en tant que fonction de générateur de puissance, de manière à délivrer l'énergie électrique pour entraîner la charge électrique externe ou charger le dispositif de stockage d'énergie électrique externe.

9. Machine électrique à double entraînement ayant un train planétaire commandable, dans laquelle une partie de rotation interne d'une machine électrique (EM101) et une partie de rotation externe d'une machine électrique (EM102) de la machine électrique à double entraînement (EM100) sont respectivement combinées avec deux des trois extrémités de sortie/d'entrée d'un train planétaire (DG101) comprenant une roue solaire (W101), une roue annulaire externe (W102) et une roue planétaire (W103), un arbre de rotation de type manchon (AS101) manchonné sur un arbre de rotation d'entrée/de sortie (S101) servant d'extrémité de sortie/d'entrée est fourni, un arbre de rotation de sortie/d'entrée (S102) est également fourni, l'un parmi l'arbre de rotation d'entrée/de sortie (S101) ou l'arbre de sortie/d'entrée (S102) étant relié à un côté d'action d'un dispositif de frein commandable correspondant, et l'autre côté d'action du dispositif de frein commandable étant relié à un carter (H100) ; par la commande du dispositif de frein commandable pour effectuer le verrouillage ou la libération du frein, les manoeuvres de fonction de transmission de liaison de transmission ou de libération entre l'arbre de rotation d'entrée/de sortie (S101), l'arbre de rotation de sortie/d'entrée (S102) et l'arbre de rotation de type manchon (AS101) étant activées pour être commandées, et les manoeuvres interactives entre la machine électrique à double entraînement (EM100) et les extrémités de sortie/d'entrée étant également activées pour être commandées,
la partie de rotation interne de la machine électrique (EM101) de la machine électrique à double entraînement (EM100) et la roue planétaire (W103) du train planétaire (DG101) et le culbuteur (A101) étant combinés conjointement sur l'arbre de rotation de sortie/d'entrée (S102) pour servir d'extrémité de sortie/d'entrée, la roue solaire (W101) étant combinée sur l'arbre de rotation d'entrée/de sortie (S101) pour servir d'extrémité de sortie/d'entrée, l'arbre de rotation d'entrée/de sortie (S101) étant relié à un côté d'action du dispositif de frein commandable (BK103) tandis que l'autre côté d'action du dispositif de frein commandable (BK103) est fixé dans le carter (H100), le train planétaire (DG101) étant également fixé dans le carter (H100), la roue annulaire externe (W102) du train planétaire (DG101) étant combinée avec la partie de rotation externe de la machine électrique (EM102) et combinée avec l'arbre de rotation de type manchon (AS101), l'arbre de rotation de type manchon (AS101) mis en rotation et manchonné sur l'arbre de rotation d'entrée/de sortie (S101) servant d'extrémité de sortie/d'entrée, et l'arbre de rotation de sortie/d'entrée (S102) étant relié à un côté d'action du dispositif de frein commandable (BK102) tandis que l'autre côté d'action du dispositif de frein commandable (BK102) est fixé dans le carter (H100) :
- Ensemble de train planétaire (DG101) : constitué d'une roue solaire (W101) et d'une roue annulaire externe (W102) et d'au moins une roue planétaire (W103), et comportant par des engrenages venant en prise les uns avec les autres, ou par des roues de friction, le fait d'effectuer mutuellement des transmissions de friction pour former une fonction de train planétaire, et structuré par l'arbre de rotation d'entrée/de sortie (S101), l'arbre de rotation de sortie/d'entrée (S102), le culbuteur (A101), l'arbre de rotation de type manchon (AS101) et un palier, ainsi qu'équipé avec une coque pour être combiné dans le carter (H100) ;
- Culbuteur (A101) : ayant une extrémité fournie pour permettre à la roue planétaire (W103) d'être en rotation et de se lier, et l'autre extrémité étant reliée à la partie de rotation interne de la machine électrique (EM101) et à l'arbre de rotation de sortie/d'entrée (S102) ;
- Dispositif de frein commandable (BK102) : constitué d'un dispositif de frein commandé par une force manuelle ou une force mécanique ou une force hydraulique ou une force pneumatique ou une force électromagnétique, et ayant deux côtés d'action commandables pour les manoeuvres d'un état de verrouillage de frein pour la mise en prise ou d'un état de libération pour la séparation, l'un des côtés d'action étant relié à l'arbre de rotation de sortie/d'entrée (S102), et l'autre côté d'action étant fixé dans le carter (H100) ;
- Dispositif de frein commandable (BK103) : constitué d'un dispositif de frein commandé par une force manuelle ou une force mécanique ou une force hydraulique ou une force pneumatique ou une force électromagnétique, et ayant deux côtés d'action commandables pour les manoeuvres d'un état de verrouillage de frein pour la mise en prise ou un état de libération pour la séparation, l'un des côtés d'action étant relié à l'arbre de rotation d'entrée/de sortie (S101), et l'autre côté d'action étant fixé dans le carter (H100) ;
- Machine électrique à double entraînement (EM100) : constituée d'une machine électrique à double entraînement CC ou CA, à balai ou sans balai, synchrone ou non synchrone, ayant une partie de rotation interne de machine électrique (EM101) et une partie de rotation externe de machine électrique (EM102), et équipée de capots d'extrémité, de paliers et de dispositifs de conduction électrique associés utilisés pour introduire de l'énergie électrique, la partie de rotation interne de la machine électrique (EM101) et la partie de rotation externe de la machine électrique (EM102) étant en rotation coaxiale, la partie de rotation interne de la machine électrique (EM101) étant combinée avec l'arbre de rotation de sortie/d'entrée (S102), et la partie de rotation externe de la machine électrique (EM102) étant combinée avec la roue annulaire externe (W102) ;
- La partie de rotation interne de la machine électrique (EM101) de la machine électrique à double entraînement (EM100) et la roue planétaire (W103) du train planétaire (DG101) et le culbuteur (A101) étant combinés conjointement sur l'arbre de rotation de sortie/d'entrée (S102) pour servir d'extrémité de sortie/d'entrée, la roue solaire (W101) étant combinée sur l'arbre de rotation d'entrée/de sortie (S101) pour servir d'extrémité de sortie/d'entrée, l'arbre de rotation d'entrée/de sortie (S101) étant relié à un côté d'action du dispositif de frein commandable (BK103) tandis que l'autre côté d'action du dispositif de frein commandable (BK103) est fixé dans le carter (H100) ; le culbuteur (A101) lié par la roue planétaire (W103) du train planétaire (DG101) étant combiné avec l'arbre de rotation de sortie/d'entrée (S102) pour servir d'extrémité de sortie/d'entrée, l'arbre de rotation de sortie/d'entrée (S102) étant relié à un côté d'action du dispositif de frein commandable (BK102) tandis que l'autre côté d'action du dispositif de frein commandable (BK102) est fixé dans le carter (H100), la roue annulaire externe (W102) étant combinée avec la partie de rotation externe de la machine électrique (EM102) et combinée avec l'arbre de rotation de type manchon (AS101), et l'arbre de rotation de type manchon (AS101) mis en rotation et manchonné sur l'arbre de rotation d'entrée/de sortie (S101) servant d'extrémité de sortie/d'entrée ;
Les manoeuvres comportant une ou plusieurs de l'une des fonctions suivantes :
- Lorsque le dispositif de frein commandable (BK102) et le dispositif de frein commandable (BK103) sont tous deux commandés pour être dans l'état de libération et que la machine électrique à double entraînement (EM100) ne fonctionne pas en tant que fonction de machine électrique, les relations de transmission entre l'arbre de rotation d'entrée/de sortie (S101), l'arbre de rotation de sortie/d'entrée (S102) et l'arbre de rotation de type manchon (AS101) sont dans l'état de libération permettant une rotation au ralenti ;
- Lorsque le dispositif de frein commandable (BK102) et le dispositif de frein commandable (BK103) sont tous deux commandés pour être dans l'état de libération et que la machine électrique à double entraînement (EM100) fonctionne en tant que fonction de machine électrique, la manoeuvre interactive correspondante de la fonction de générateur de puissance ou de la fonction de moteur étant par conséquent effectuée entre la partie de rotation interne de la machine électrique (EM101) et la partie de rotation externe de la machine électrique (EM102), selon l'amortissement de la charge extérieure ou du couple de rotation, la vitesse de rotation et le sens de rotation de l'énergie cinétique rotative entrée extérieurement soutenue par l'arbre de rotation d'entrée/de sortie (S101), l'arbre de rotation de sortie/d'entrée (S102) et l'arbre de rotation de type manchon (AS101) ;
- Lorsque le dispositif de frein commandable (BK103) est commandé pour être dans l'état de verrouillage de frein et que le dispositif de frein commandable (BK102) est commandé pour être dans l'état de libération et que la machine électrique à double entraînement (EM100) ne fonctionne pas en tant que fonction de machine électrique, la relation de transmission entre l'arbre de rotation de type manchon (AS101) et l'arbre de rotation de sortie/d'entrée (S102) étant dans une relation de liaison permettant la transmission ;
- Lorsque le dispositif de frein commandable (BK103) est commandé pour être dans l'état de verrouillage de frein et que le dispositif de frein commandable (BK102) est commandé pour être dans l'état de libération et que la machine électrique à double entraînement (EM100) fonctionne avec la fonction de machine électrique, entre la partie de rotation interne de la machine électrique (EM101) et la partie de rotation externe de la machine électrique (EM102) fonctionne en tant que fonction de générateur de puissance ou fonction de moteur, pour effectuer des manoeuvres interactives correspondantes avec l'amortissement de la charge extérieure ou l'énergie cinétique rotative entrée extérieurement soutenue par l'arbre de rotation de type manchon (AS101) et l'arbre de rotation de sortie/d'entrée (S102) ;
- Lorsque le dispositif de frein commandable (BK103) est commandé pour être dans l'état de libération et que le dispositif de frein commandable (BK102) est commandé pour être dans l'état de verrouillage de frein et que la machine électrique à double entraînement (EM100) ne fonctionne pas en tant que fonction de machine électrique, la relation de transmission entre l'arbre de rotation d'entrée/de sortie (S101) et l'arbre de rotation de type manchon (AS101) étant dans une relation de liaison permettant la transmission ;
- Lorsque le dispositif de frein commandable (BK103) est commandé pour être dans l'état de libération et que le dispositif de frein commandable (BK102) est commandé pour être dans l'état de verrouillage de frein et que la machine électrique à double entraînement (EM100) fonctionne en tant que fonction de machine électrique, entre la partie de rotation interne de la machine électrique (EM101) et la partie de rotation externe de la machine électrique (EM102) fonctionne en tant que fonction de générateur de puissance ou fonction de moteur, pour effectuer des manoeuvres interactives correspondantes avec l'amortissement de la charge extérieure ou l'énergie cinétique rotative entrée extérieurement soutenue par l'arbre de rotation d'entrée/de sortie (S101) et l'arbre de rotation de type manchon (AS101) ;
- Lorsque le dispositif de frein commandable (BK101) et le dispositif de frein commandable (BK102) sont tous deux commandés pour être dans l'état de verrouillage de frein, les relations entre l'arbre de rotation d'entrée/de sortie (S101), l'arbre de rotation de sortie/d'entrée (S102) et l'arbre de rotation de type manchon (AS101) sont toutes dans l'état de verrouillage de frein ;
Les manoeuvres interactives de la fonction correspondante effectuées par la machine électrique à double entraînement (EM100) mentionnée comportant la réception de la commande d'entraînement de l'énergie électrique entrée extérieurement afin de fonctionner en tant que fonction de moteur pour entraîner individuellement la charge, ou le travail avec l'énergie cinétique rotative entrée extérieurement pour entraîner généralement la charge ;
Les manoeuvres interactives de la fonction correspondante effectuées par la machine électrique à double entraînement (EM100) mentionnée comportant la réception de l'entraînement de l'énergie cinétique rotative entrée extérieurement ou l'entraînement de l'énergie cinétique d'inertie de charge afin de fonctionner en tant que fonction de générateur de puissance, de manière à délivrer l'énergie électrique pour entraîner la charge électrique externe ou charger le dispositif de stockage d'énergie électrique externe.
